(19) Europäisches Patentamt / European Patent Office / Office européen des brevets

(11) **EP 4 654 416 A2**

(12) **EUROPEAN PATENT APPLICATION**

(43) Date of publication:
26.11.2025 Bulletin 2025/48

(21) Application number: 25177742.1

(22) Date of filing: 20.05.2025

(51) International Patent Classification (IPC):
*H02J 3/00* (2006.01)   *G06Q 50/06* (2024.01)
*H01M 10/48* (2006.01)   *H02J 3/14* (2006.01)
*H02J 3/32* (2006.01)   *H02J 3/38* (2006.01)
*H02J 7/00* (2006.01)   *H02J 13/00* (2006.01)
*H01M 10/42* (2006.01)

(52) Cooperative Patent Classification (CPC):
**H02J 3/32; G06Q 50/06; H01M 10/482;**
**H02J 3/004; H02J 3/14; H02J 3/381; H02J 7/0029;**
**H02J 13/00;** H01M 2010/4271; H01M 2200/00;
H02J 2300/10; H02J 2300/24; H02J 2300/28;
H02J 2310/12; H02J 2310/60

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: 20.05.2024   US 202463649740 P
20.05.2024   US 202463649817 P
15.07.2024   US 202463671321 P

(71) Applicant: Solaredge Technologies Ltd.
Herzeliya 4673335 (IL)

(72) Inventors:
• SHATON, Avishai
4673335 Herzeliya (IL)
• MASSURY, Yair
4673335 Herzeliya (IL)
• BAKKER, Frank
4673335 Herzeliya (IL)

• VAN DER BIJL, Jacques
4673335 Herzeliya (IL)
• BOBRUK, Jason
4673335 Herzeliya (IL)
• THOMPSON, Christopher
4673335 Herzeliya (IL)
• BONEH, Rafael
4673335 Herzeliya (IL)
• AZOULAY, Rafael
4673335 Herzeliya (IL)
• CHELOUCHE, Eilon
4673335 Herzeliya (IL)
• SONIS, Yosef
4673335 Herzeliya (IL)
• RESHEF, Nimrod
4673335 Herzeliya (IL)
• MERON, Mordechay
4673335 Herzeliya (IL)

(74) Representative: V.O.
P.O. Box 87930
2508 DH Den Haag (NL)

(54) **SYSTEMS, METHODS, AND APPARATUSES FOR POWER SYSTEMS AND ENERGY STORAGE SYSTEMS**

(57) Systems, methods and apparatuses for power systems and energy storage systems are disclosed herein. The system, or part thereof, may be configured to determine an operational plan for controlling device(s) (e.g., an energy storage device and/or a load device) such that the device(s) may increase their power consumption in response to an increasing voltage at a grid connection point thus reducing the probability that the voltage level at the grid connection point rises to or above an upper limit. The system, or part thereof, may identify external conditions that may cause harm to one or more energy storage devices (e.g., a battery pack). A controller (e.g., battery management system, or part thereof) may be used to determine critical external conditions or high-risk conditions based on sensor data, and/or to determine mitigation actions or send alerts. The system may comprise one or more energy storage devices that may be stacked together.

EP 4 654 416 A2

Fig. 1A

**Description**

**CROSS REFERENCE TO RELATED APPLICATIONS**

This patent application claims priority to, and the benefit of, U.S. Provisional Patent Application No. 63/649,740, filed May 20, 2024, entitled "System and Methods for Controlling Voltage Characteristics at a Grid Connection Point of a Power System," U.S. Provisional Patent Application No. 63/671,321, filed July 15, 2024, entitled "Perimeter Protection for Energy Storage Devices," and U.S. Provisional Patent Application No. 63/649,817, filed May 20, 2024, entitled "Modular Energy Storage System".

**BACKGROUND**

The disclosure relates generally to power systems and energy storage systems.

A power system may comprise a power source or sources (e.g., a photovoltaic power source, a generator, wind turbines to name a few), an energy storage device or devices (e.g., a battery, flywheel, fuel cells, supercapacitors, a capacitors array), and loads (e.g., machines, air conditioner, heater, appliances, to name a few), as well as various devices such as power converters. The power system may be connected to a power grid. In cases in which the amount of power produced by the power source(s) is smaller than the amount of power consumed by the loads, the power system may draw (import) power from the grid. In cases where the amount of power produced by the power source(s) is larger than the amount of power consumed by the loads, the power system may provide (export) power to the grid.

At least some energy storage devices (e.g., a battery pack) have a plurality of cells (e.g., secondary lithium battery cells), peripheral components (electrical connectors, battery management system, etc.), and a casing with physical structures to hold the cells and peripheral components. Sensors inside the casing may detect conditions (e.g., high temperature) that indicate the possibility of thermal runaway of the energy storage devices.

At least some energy storage devices may be part of modular energy storage systems, which may be part of the power system. The modular energy storage systems may include at least one energy storage device having a plurality of cells (e.g., secondary lithium battery cells) with electrical connections between cells and components external to the cells, to provide effective functioning (e.g., power supply, monitoring, and protection) of the energy storage system.

**SUMMARY**

The following presents a simplified summary of the disclosure in order to provide a basic understanding of some aspects of the disclosure. This summary is not an extensive overview of the disclosure. It is not intended to identify key or critical elements of the disclosure or to delineate the scope of the disclosure. The following summary merely presents some concepts of the disclosure in a simplified form as a prelude to the more detailed description provided below.

The disclosure relates to a system and method for controlling voltage characteristics at grid connection point(s) of a power system, such as reducing the probability of overvoltage or undervoltage at the grid connection point(s) of the power system.

A power system may comprise a power system controller, as well as various power sources, various devices such as energy storage devices, and various load devices. In cases in which a power system exports power to the grid, the voltage level at the grid connection point may increase. Such a voltage increase may be hazardous and may exceed an upper limit (for example, a determined limit by the grid provider, regulation standard, or rating of the power system). In cases in which the voltage level at the grid connection point increase above such an upper limit, the power system controller may reset. Where several power systems are in close proximity (e.g., in the same neighborhood), and some of these power systems export power to the grid, the voltage level at the grid connection points of the power systems that are in close proximity may increase (e.g., even if a power system does not export power). In some other cases, where several power systems are in close proximity, the voltage level at the grid connection points of the power systems that are in close proximity may decrease. According to an aspect of the disclosure herein, the power system controller may be configured to control the device(s) of the power system to alter their power consumption (and/or other operational characteristic(s)) as discussed in more detail below.

According to an aspect of the disclosure herein, a server may determine an operational plan for controlling a device or devices (e.g., a storage device and/or a load device) of the power system, such that, in response to the voltage at the grid connection point exceeding an upper threshold, or reducing below a lower threshold, the device(s) may alter their power consumption (and/or other operational characteristic(s) of the device(s)), thus reducing the probability that the voltage level at the grid connection point will increase to or above an upper limit, or decrease to or below a lower limit.

According to an aspect of the disclosure herein, the server, using a space-time prediction model relating to a plurality of power systems, generates, for a first time-period (e.g., having a first time-duration of 12 hour, 24 hours 48 hours, and the like), a voltage level prediction corresponding to a level of the voltage at a grid connection point corresponding to a site. The server may generate the voltage level prediction based on predictive data, over the prediction time-period, relating to power production by the power source or sources of the plurality of sites (e.g., power production predictions, predicted irradiance data, weather forecasts), past data relating to power production by the power source or sources of the plurality of sites, and past electrical parameters (e.g., voltage, current, frequency) data at the grid connection points of the plurality of sites. The past power production and electrical parameters data may be over a second time-period. Which may be referred to as the "observation time-period." To train the prediction model, the server may use: (a) past electrical parameters training data of the sites over the second time-duration, (b) past training data relating to power production of the sites over the first time-duration and over the second time duration, and/or (c) target electrical parameters of one or more sites over the first time-duration.

According to an aspect of the disclosure herein, using the generated voltage level prediction of the site and a threshold, the server may determine, for the prediction time-period, an operational plan for a device or devices in the power system. The operational plan may comprise constraints and/or instructions for controlling the device or devices in the power system, prior to a predicted connection overvoltage time-period, such that these devices will be able to increase their power consumption during a connection overvoltage time-period. Thus, the operational plan may reduce the probability that a power system according to the disclosure herein will export power during time-periods of grid connection overvoltage. For example, the operational plan may comprise discharging a battery prior to a grid connection overvoltage time-period such that the battery may be charged if the voltage level at the grid connection point exceeds a threshold. For example, as elaborated below, the operational plan may comprise turning-off a machine and/or a heater prior to a grid connection overvoltage time-period such that the machine may be used if the voltage level at the grid connection point exceeds a threshold. The server may provide (e.g., transmits) the operational plan to the power system controller. The power system controller may control the device or devices based on the operational plan. In cases in which the voltage at the grid connection point exceeds a threshold (e.g., which may smaller or equal to the grid upper limit), the power system controller may control a load device to increase the power drawn by the load, cause an energy storage device to charge, and/or limit the output power of a power converter.

According to an aspect of the disclosure herein, one or more energy storage devices may monitor external conditions using sensors (e.g., dedicated sensors, shared sensors, etc.) and may take actions to protect the one or more energy storage devices and/or send alerts when the external conditions are critically near causing damage to the storage devices or indicate a high probability of future damage to the storage devices. For example, an energy storage device (e.g., a battery pack) may detect a moving object (e.g., a car) approaching the energy storage device. The energy storage device may instruct the moving object to stop (e.g., activate the brakes of the moving object), when the moving object is detected to be approaching at a speed or to have a momentum that might cause damage to the energy storage device. For example, an energy storage device may detect or receive notifications of a nearby fire and may reduce state of charge to mitigate damage to the energy storage device and surroundings. The energy storage device may also or alternatively insulate itself from the fire, for example, by producing fire-blocking materials (such as an intumescent foam). The energy storage devices may comprise or be associated with sensors that detect and/or monitor the external conditions. A group of energy storage devices (e.g., in a residence) may use the same sensors, redundant sensors, etc. The sensors may comprise one or more of temperature sensors, radiation sensors, vibration sensors, optical sensors, fire sensors, smoke sensors, gas sensors, proximity sensors, acoustic sensors, etc. A controller may be used to determine critical external conditions or high-risk conditions, and/or to determine mitigation actions or send alerts. A battery management system may be used to perform at least part of the functions of the controller.

According to an aspect of the disclosure herein, a modular energy storage system may comprise one or more energy storage devices, one or more power management devices, and associated structures. An energy storage device may use a welding method (e.g., laser welding) to connect electrode terminals of adjacent cells, and may use a different welding method (e.g., resistance welding) to connect a functional circuit (e.g., flex circuit) to the electrode terminals. An energy storage device may use heat shielding structures and/or rigid frames to minimize the melting and/or distortion of plastic external casings, for example, due to hot gases from cells. An energy storage device may use a protective cover with a liquid holding structure (e.g., formed by surrounding ridges) to prevent liquid from reaching and damaging a battery management system (BMS) circuit board. A plurality of energy storage devices may be stacked together with a power management device and a base to form a convection chimney, where air may enter from the base, rise to cool the energy storage devices, and exit from the power management device at the top. A plurality of energy storage devices may preemptively adjust their state of charge (SOC) levels to an anticipated level, for example, before one of the energy storage devices is replaced.

These and other features and advantages are described in greater detail below.

## BRIEF DESCRIPTION OF THE DRAWINGS

A more complete understanding of the present disclosure and the advantages thereof may be acquired by referring to the following description in consideration of the accompanying drawings. Some features are shown by way of example, and not by limitation, in the accompanying drawings. In the drawings, like numerals reference similar elements.

FIG. 1A shows a power system.

FIG. 1B shows in example of a system.

FIG. 1C shows an example of a user interface.

FIG. 2A shows a system, which may comprise a plurality of power systems.

FIGS. 2B and 2C show models of the system of FIG. 2A.

FIG. 3 shows a method for a system.

FIG. 4A shows an example of a connectivity graph of power systems of FIG. 2A.

FIG. 4B shows an example of a connectivity matrix of the graph in FIG. 4A.

FIG. 4C shows an example using a neural network for voltage level predictions.

FIG. 4D shows an example of a voltage levels prediction at a grid connection point of a power system.

FIG. 5A shows an example of an operational plan for devices in a power system.

FIGS. 5B-5E show graphs representing operational plans for devices in a power system.

FIG. 6A shows examples of system configurations, and the devices that power system may control in cases in which a high voltage trigger is detected.

FIG. 6B shows an example of a method for controlling a device or devices in cases in which a trigger is detected.

FIG. 7 shows an example training a neural network for voltage level predictions.

FIG. 8A shows a graph of voltage level predictions for a power system.

FIG. 8B shows examples of system configurations, and the devices that power system may control in cases in which a low voltage trigger is detected.

FIG. 9 shows an example of perimeter protection for energy storage devices.

FIG. 10 shows an example of perimeter protection for energy storage devices.

FIG. 11 shows an example of perimeter protection for energy storage devices.

FIG. 12A shows an example energy storage device, and FIG. 12B shows example locations of sensors on the energy storage device.

FIG. 13 shows an example structure of an energy storage device.

FIG. 14A shows example control paths associated with perimeter protection for energy storage devices.

FIG. 14B shows external communications associated with energy storage devices.

FIG. 14C and FIG. 14D show two example interfaces for human-machine communications.

FIG. 15 shows an example method of perimeter protection for energy storage devices.

FIG. 16 shows an example method of perimeter protection for energy storage devices.

FIG. 17 shows an example method of perimeter protection for energy storage devices.

FIG. 18A shows an example energy storage device with a flex circuit.

FIG. 18B shows an example energy storage device with electrode terminals connected between adjacent cells.

FIG. 18C shows an example energy storage device with a flex circuit connected to electrode terminals.

FIG. 18D shows an example energy storage device with a flex circuit.

FIG. 18E shows an example energy storage device with electrode terminals connected between adjacent cells.

FIG. 18F shows an example energy storage device with a flex circuit connected to electrode terminals.

FIG. 19A shows an example energy storage device with an example shielding structure.

FIG. 19B shows an energy storage device with example casings.

FIG. 19C shows an example energy storage device with an example shielding structure and example casings.

FIG. 19D shows an example energy storage device.

FIG. 20A shows an example structure of a battery management system (BMS).

FIG. 20B shows an example structure of the BMS.

FIG. 20C shows an example structure of the BMS.

FIG. 20D shows an example BMS cover.

FIG. 20E shows the example BMS cover in a cross-sectional view.

FIG. 20F shows an example detail of the BMS cover.

FIG. 21A and FIG. 21B show an example assembly of a modular energy storage system.

FIG. 21C shows an example structure of a power management device.

FIG. 21D, FIG. 21E, FIG. 21F, and FIG. 21G show example structures of a base.

FIG. 21H shows an example assembly of a modular energy storage system.

FIG. 21I shows an example assembly of the modular energy storage system in a cross-sectional view.

FIG. 21J shows example air flow directions in the assembly of the modular energy storage system in a cross-sectional view.

FIG. 21K shows an example assembly of a modular energy storage system in an exposed view.

FIG. 21L shows an example detail of the assembly of the modular energy storage system in FIG. 21K.

FIG. 22 shows an example method for device balancing before replacement.

## DETAILED DESCRIPTION

In the following description of the various embodiments, reference is made to the accompanying drawings, which form a part hereof, and in which is shown by way of illustration various embodiments in which the disclosure may be practiced. It is to be understood that other embodiments may be utilized and structural and functional modifications may be made without departing from the scope of the present disclosure.

The accompanying drawings, which form a part hereof, show examples of the disclosure. It is to be understood that the examples shown in the drawings and/or discussed herein are non-exclusive and that there are other examples of how the disclosure may be practiced.

According to the disclosure herein, a power system may comprise a power system controller, as well as various power sources (e.g., a photovoltaic power source, a generator, wind turbines, etc.), various devices such as energy storage devices (e.g., a battery, flywheel, fuel cells, supercapacitors, a capacitors array, thermal storage etc.), and/or various load devices (e.g., machines, air conditioner, heater, etc.). A power source, an energy storage device, and/or a load device may generally be considered a power device. A power device may additionally include other devices, such as power converters or the like. In cases in which a power system exports power, the voltage level at the grid connection point may increase. In some cases, such a voltage increase may be dangerous and affect the operation of various devices (e.g., power system controller) of the power system. Also, some jurisdictions may impose an upper limit on grid voltage (e.g., 10% above a nominal value). In cases in which the voltage level at the grid connection point increases above such an upper limit, the power system controller may reset. In cases in which power systems are in close proximity (e.g., in the same neighborhood), and some of these systems export power, the voltage level at the grid connection points of the power systems that are in close proximity may increase (e.g., even if a power system does not export power). According to the disclosure herein, an event in which the voltage level at the grid connection point increases above an upper limit may be referred to "connection point overvoltage." An event in which the voltage level at the grid connection point decreases below a lower limit may be referred to "connection point undervoltage." According to the disclosure herein, and as further elaborated below, a server may determine an operational plan for controlling a device or devices (e.g., a storage device and/or a load device) such that a device or devices may alter their power consumption. For example, the operational plan may for controlling the load devices to increase their power consumption in cases in which the voltage at the grid connection point exceeds a threshold (which may be at or below the upper limit), thus reducing the probability that the voltage level at the grid connection point will increase to or above an upper limit. According to the disclosure herein, and as further elaborated below, a server may determine an operational plan for controlling a device or devices such that a device or devices may decrease their power consumption in cases in which the voltage at the grid connection point reduces below a threshold (which may be at or below the lower limit), thus reducing the probability that the voltage level at the grid connection point will reduce to or below a lower limit. According to the disclosure herein, the term consumption may relate positive or negative consumption. For example, positive consumption may relate to a load device or load devices consuming power. Negative consumption may relate to a load device or load devices (e.g., storage devices such as a battery or an electrical vehicle) providing power (e.g., a battery or an EV discharging energy).

According to the disclosure herein, a server, using a space-time prediction model relating to a plurality of power systems (also referred to as sites), generates, for a first time-period (e.g., having a first time-duration of 12 hour, 24 hours 48 hours, and the like), a voltage level prediction corresponding to a level of the voltage at a grid connection point of a corresponding site. The first time-period may also be referred to as the "prediction time-period." The server may generate or otherwise determine the voltage level prediction based on predictive data, over the prediction time-period, relating to power production by the power source(s) of the plurality of sites (e.g., power production predictions, predicted irradiance data, and/or weather forecasts), past data relating to power production by the power source(s) of the plurality of sites, and/or past electrical parameters (e.g., voltage, current, and/or frequency) at the grid connection points of the plurality of sites. The past power production and/or the past electrical parameters data may be over a second time-period (e.g., having a second time duration of 12 hour, 24 hours, 48 hours, and the like), which may be referred to as the "observation time-period." To train the prediction model, the server may use: (a) past electrical parameters training data of the sites over the second time-duration, (b) past training data relating to power production of the sites over the first time-duration and over the second time duration, and/or (c) target electrical parameters of one or more sites (e.g., each site) over the first time-duration.

Using the generated voltage level prediction of the site and a threshold, the server may determine, for the prediction time-period, an operational plan for one or more devices in the power system. The operational plan may comprise constraints and/or instructions for controlling the device(s) in the power system, prior to a predicted connection overvoltage time-period, such that the device(s) will be able to increase their power consumption during a connection overvoltage time-period. Thus, the operational plan may reduce the probability that a power system according to the disclosure herein will export power during time-periods of grid connection overvoltage. The operational plan may include one or more actions to be performed to reduce the likelihood that the power system exports power during grid connection overvoltage periods. For example, as elaborated below, the operational plan may comprise discharging a battery prior to a grid connection overvoltage time-period such that the battery may be charged if the voltage level at the grid connection point exceeds a threshold. For example, as elaborated below, the operational plan may comprise turning-off a machine, a heater, and/or one or more other loads prior to a grid connection overvoltage time-period such that the machine may be used if the voltage level at the grid connection point exceeds a threshold. The server may provide (e.g., transmits) the operational plan to the power system controller. The power system controller may control one or more devices based on the operational plan. In cases in which the voltage at the grid connection point exceeds a voltage threshold (e.g., which may smaller or equal to the grid upper limit), the power system controller may cause one or more load devices to increase the power drawn by the load(s), cause one or more energy storage devices to charge, and/or limit the output power of one or more power converters.

According to the disclosure here, the server may generate an operational plan for each power system of a plurality of power systems (e.g., in a neighborhood, in a city, in a country) and provide the corresponding operational plan to each power system. The power system controller may control a device, or devices of the power system based on the corresponding operational plan provided by the server. In cases in which the voltage at the grid connection point reduces below voltage threshold (e.g., which may higher or equal to the grid lower limit), the power system controller may cause one or more load devices to decrease the power drawn by the load(s), cause one or more energy storage devices to discharge, and/or increase the output power of one or more power converters.

According to the disclosure herein, the server may generate operational plans for various scenarios. For example, scenarios of blackouts or brownouts, or scenarios of export limitations (e.g., power limitations and/or tariffs related limitations). For example, the power system may receive or generate predictions of blackouts or brownouts. The server may receive or generate predicted tariffs data relating to the expected tariff and fees of importing power from the grid or exporting power to the grid. The server may receive or generate a schedule of predicted limitations on exporting power to the grid. The server may determine an operational plan for devices in the power system based on such predictions. For example, in cases in which blackouts or brownouts are predicted, the operational plan may comprise constraints and/or instructions for charging and/or discharging an energy storage device such that the energy storage device may provide power during a predicted blackout or brownout. For example, in cases in which limitations on exporting power to the grid are predicted, operational plan may comprise constraints and/or instructions for operating devices in the power system, such that these devices may draw power during the export limitation period. The instructions may comprise power consumption instructions for the at least one device (e.g., draw 100Watts of power, reduce power consumption by 50Watts, increase power consumption by 75Watts, and the like). The instructions may comprise power production instructions for the power system control and/or the storage device (e.g., generate 5 KiloWatts of power, increase power production by 500W, and the like).

Energy storage devices (e.g., battery packs) may be used to store energy generated from renewable (e.g., solar, wind) or non-renewable (e.g., coal, gas) sources and to power various machines, devices, or systems such as household appliances, electric vehicles, etc. These energy storage devices may be placed or stored inside or near buildings. For example, energy storage devices may be connected with a solar panel system on a premises to store electricity generated by the solar panel system. For example, the energy storage devices (e.g., one or more battery packs) may be located on the same premises (e.g., in a basement). For example, a replacement battery pack for an electric vehicle may be stored in a garage. These energy storage devices may be susceptible to external conditions or the environment in/near the premises or building, such as high environmental temperature, fire, physical collision, etc. These external conditions may lead to damage, failure, or destruction of the energy storage devices, for example, physical damage, thermal runaway, and/or fire. Examples are provided herein to monitor the external conditions and provide perimeter protection for the energy storage devices.

Energy storage systems (e.g., battery systems) may be used to power various machines, devices, or systems such as electric vehicles (EVs), hybrid gasoline-electric EVs (or HEVs), power tools, data centers, trailers, etc. Energy storage systems may also be used to store energy generated from renewable (e.g., solar, wind) or non-renewable (e.g., coal, gas) sources. A modular energy storage system may comprise one or more energy storage devices (or energy storage units, e.g., battery units). These energy storage devices may be each self-contained and may be combined to create a larger energy storage system. Energy storage capacity may be easily scalable by adding or removing energy storage devices. Customization, maintenance, and/or reliability may also be improved. For example, a faulty (or failed) energy storage device may not affect the functioning of the remaining devices. A faulty energy storage device may be simply replaced, without replacing the whole system. The modular energy storage system may also comprise one or more power management devices. The power management devices may comprise power electronics such as inverters and converters for power conversion (e.g., DC/AC conversion). The power management devices may comprise control and monitoring systems (e.g., controller, circuits) to realize functions such as voltage regulation, frequency regulation, energy flow optimization, overcurrent protection, temperature monitoring, fault detection, etc.

An energy storage device (or energy storage unit, e.g., battery unit, battery pack) may comprise a plurality of cells (e.g., secondary lithium battery cells). The cells may be prismatic cells, cylindrical cells, pouch cells, etc. For example, the cells may be: lithium iron phosphate (LFP), lithium Nickel Manganese Cobalt (NMC), lithium Nickel Cobalt Aluminum Oxide (NCA), lithium-Ion Manganese Oxide (LMO), lithium-Ion Cobalt Oxide (LCO), lithium Titanate Oxide (LTO), etc. These cells may be arranged in a stack, for example, in a vertical or horizontal direction. The cells may be connected with (or coupled to) each other mechanically and/or electrically. The cells may be strapped together in groups. For example, each cell may comprise positive and negative electrode terminals (e.g., tabs). For example, a terminal (e.g., a positive terminal) of one cell may be connected with (or coupled to) a terminal (e.g., a negative terminal) of an adjacent cell. In this way, more than one cell may be electrically connected in series. The resulting voltage may be increased (e.g., combined) compared to the voltage of each individual cell. An energy storage device may comprise and/or be connected with a battery management system (BMS). For example, each energy storage device may be controlled by switches in the BMS, which may allow connecting, disconnecting, or installing each device independently. For example, a modular energy storage system may comprise a plurality of energy storage devices connected using the switches. An energy storage device may also include other components such as casing, shielding/cooling structures, circuits, sensors, etc.

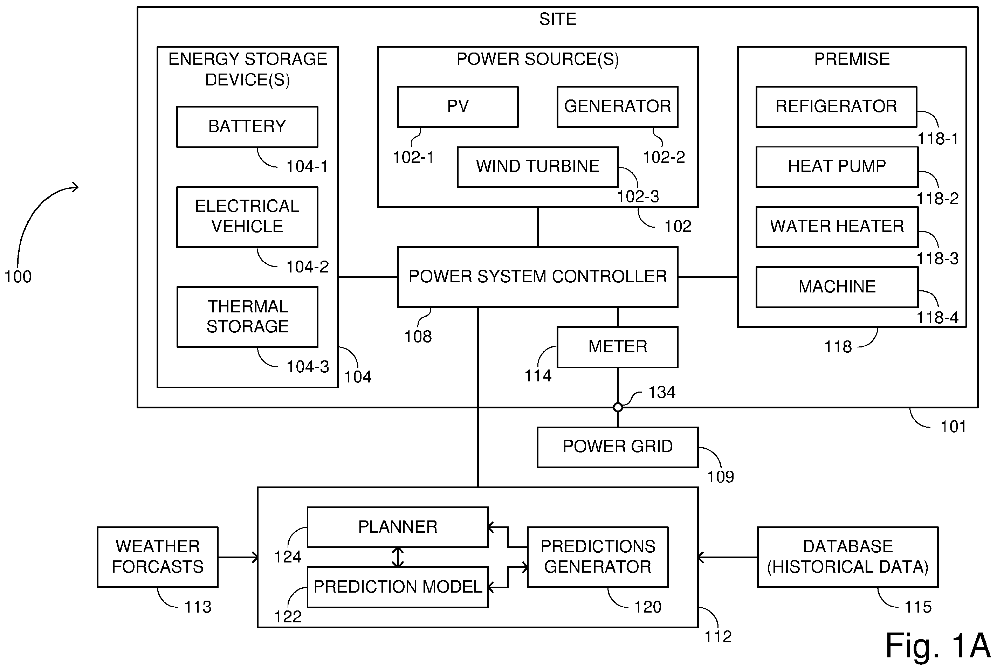

In the description that follows, the example predicting connection point overvoltage(s) and/or connection point undervoltage(s) are described. Nevertheless, it is understood that the disclosure herein may relate to other scenarios such as scenarios of blackouts or brownouts, or scenarios of export limitations. Reference is made to Figures 1A-1C, which may show a system, generally referenced 100, and examples relating to system 100. System 100 may comprise a power system 101 and a server 112. Power system 101 may comprise power source(s) 102, an energy storage device(s) 104, a premises 118 (e.g., a house, an office building, a factory, a warehouse), and a power system controller 108. Premises 118 may also be referred to herein as load device(s) 118. Power source(s) 102, and energy storage device(s) 104 (e.g., battery, an electrical vehicle (EV), battery, supercapacitors, flywheel, a capacitor array, etc.), and premises 118 may be coupled to power system controller 108. Power system controller 108 may further be coupled to a power grid 109 at a grid connection point 134, and to server 112. For example, power source(s) 102 may comprise one or more of a photovoltaic power source 102-1, a generator 102-2 (e.g., a fuel-based generator), or a wind turbine 102-3. Premises 118 may comprise one or more load devices, such as a refrigerator 118-1, a heat pump 118-2, a water heater 118-3 (e.g., a water heater), or a machine 118-4 (e.g., a mixer, a cutter, a fan, etc.) to name a few examples, which may be controlled by power system controller (e.g., to turn on or off, and/or to alter the power consumption thereof). It is noted that photovoltaic power source 102-1, generator 102-2, or wind turbine 102-3 are brought herein as examples only. Also, refrigerator 118-1, heat pump 118-2, water heater 118-3, or machine 118-4 are discussed herein as examples only. Other load devices, such as lights, computers, chargers, etc. may be considered as well.

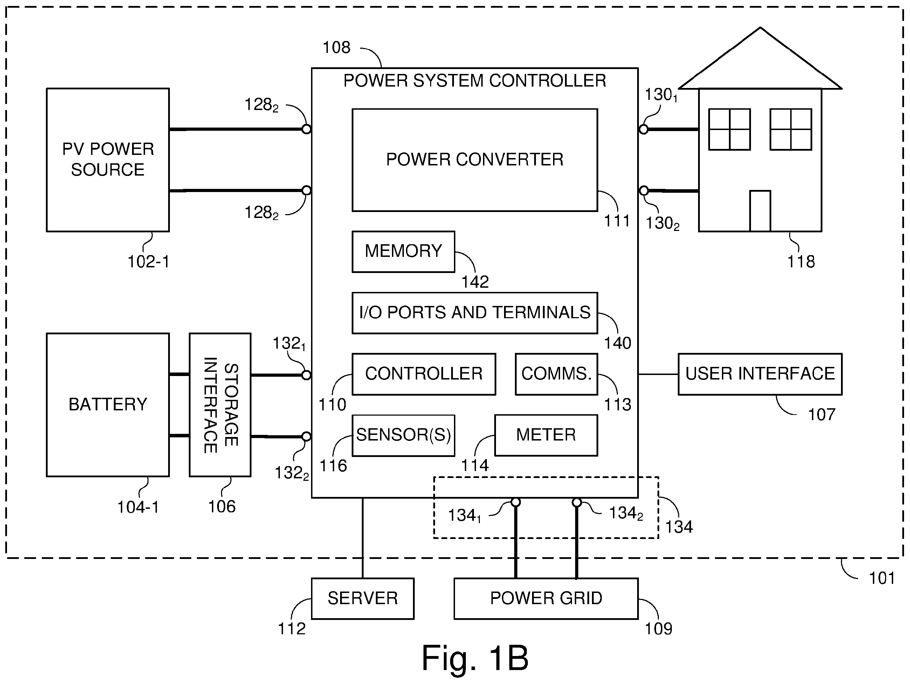

Figure 1B may show an example of power system 101. In the example shown in Figure 1B, the power system controller 108 may comprise a controller 110, a power converter 111, a communications interface 113 (abbreviated as "comms." in Figure 1B), a meter 114, and sensor(s) 116. Meter 114 may be coupled to power converter 111 and/or power grid 109. Power system controller 108 may be a distributed device; for example, the various modules of power system controller 108 (e.g., controller 110, power converter 111, communications interface 113, meter 114, or sensor(s) 116) may not be within the same casing.

Source side terminals $128_1$ and $128_2$ of power system controller 108 may be coupled to power source(s) 102. Storage interface 106 may be coupled to battery 104-1 and with storage terminals $132_1$ and $132_2$ of power system controller 108. Load side terminals $130_1$ and $130_2$ of power system controller 108 may be coupled to the premises (load) 118. Grid terminals $134_1$ and $134_2$ of power system controller 108 may be coupled to power grid 109. Grid terminals $134_1$ and $134_2$ may form a grid connection point, such as grid connection point 134 (Figure 1A) User interface 107 may be coupled to power system controller 108.

PV power source 102-1 may comprise a renewable power source such as a photovoltaic (PV) power source (e.g., a PV cell, a PV module), or a plurality of photovoltaic power sources generating DC power. A plurality of photovoltaic power sources may be coupled in series to form a string. A plurality of strings may be connected in parallel to form an array of photovoltaic power sources. The photovoltaic power source, or each of the photovoltaic power sources of a plurality of photovoltaic power sources, may be coupled to a corresponding DC-to-DC (DC/DC) converter. The DC/DC converter may be configured to harvest power from the corresponding PV power source, for example, according to a maximum power point tracking algorithm. A plurality of DC/DC power converters may be coupled in series to form a series string. Additionally, or alternatively, the photovoltaic power source, or each of the photovoltaic power sources of the plurality of photovoltaic power sources may be coupled to a corresponding DC-to-AC (DC/AC) inverter (e.g., a micro-inverter). The DC/AC inverter may be configured to extract power from the corresponding PV power source, for example, according to a maximum power point tracking algorithm. The DC/AC inverter may be coupled in series and/or in parallel. Additionally, or alternatively, power source(s) 102 may be an AC power source such as, for example, a wind turbine, or a plurality of wind turbines generating AC power.

Power converter 111 may be a power inverter. Power converter 111 may comprise, for example, a half-bridge, full-bridge (H-Bridge), flying capacitor circuit, cascaded-H-bridge, Neutral Point Clamped (NPC), A-NPC, or a T-type NPC inverting circuit employing two or more conversion levels. Controller 110 may control and/or monitor power converter 111. Controller 110 may control and/or monitor power converter 111 by, for example, employing a pulse width modulation (PWM) signal. Power converter 111 may operate at a switching frequency, such as a switching frequency between 1KHz - 10MHz. For example, power converter 111 may operate at a switching frequency between 16 KHz - 1 MHz, (e.g., at frequencies which losses may be reduced).

Controller 110 may be partially or fully implemented as one or more computing devices or may comprise one or more processors, such as, for example, an Application Specific Integrated Circuit (ASIC) controller, Field Programmable Gate Array (FPGA) controller, a microcontroller, or a multipurpose computer. Controller 110 may be a distributed controller, comprising multiple microcontrollers, microcomputers, or cloud servers. The multiple microcontrollers, microcomputers, or cloud servers may be located at the same location (e.g., at the user premises). The multiple microcontrollers, microcomputers, or cloud servers may be located at different locations. For example, some microcontrollers or microcomputers may be located at the user premises while other microcontrollers or microcomputers, and the cloud servers may be located at another location or locations. The multiple microcontrollers, microcomputers, or cloud servers may communicate there between using one or more communication protocols, for example, Ethernet, RS-485, Wi-Fi, Digital subscriber line (DSL), various cellular protocols, and data transfer protocols (e.g., Internet protocol suite (TCP-IP), Internetwork Packet Exchange/Sequenced Packet Exchange (IPX/SPX), DECnet, Internet Protocol Security (Ipsec/IP), or User Datagram Protocol (UDP/IP)). Controller 110 may be configured to control (e.g., provide control signals to) storage interface 106 to charge or discharge energy storage device(s) 104 (e.g., battery 104-1 in Figure 1B) based on a storage operational mode. Controller 110 may be configured to control a load device (e.g., water heater 118-3) based on a device operational mode.

Communications interface 113 may be a receiver, a transmitter, or a transceiver, and may be configured to communicate signals with one or more other transmitters, receivers and/or transceivers, over a medium. Communications interface 113 may use one or more communications protocols (e.g., Ethernet, RS-485, Wi-Fi, DSL, Bluetooth, Zigbee, or various cellular protocols, etc.), and may further use one or more data transfer protocols (e.g., TCP-IP, IPX/SPX, DECnet, Ipsec/IP, or UDP/IP, etc.). The communication protocol may define one or more characteristics of the signals and/or of communications using signals, such as a transmission frequency or frequencies, a modulation scheme (e.g., Amplitude shift keying - ASK, Frequency shift keying - FSK, Quadrature Phase Shift Keying - QPSK, Quadrature Amplitude Modulation - QAM, ON OFF keying - OOK, etc.), multiple access scheme (e.g., Time Division Multiple Access - TDMA, Frequency Division Multiple Access - FDMA, Code Division Multiple Access - CDMA, Carrier Sense Multiple Access - CSMA, Aloha, etc.), encoding or decoding schemes (e.g., Non Return to Zero - NRZ, Manchester coding, Block coding, etc.), or any other characteristic. The medium may be a wired or a wireless medium. For example, a wired medium may be a dedicated communications cable (e.g., twisted pair, coaxial cable, fiber optic) or power lines (e.g., the power lines of the power grid connecting power system controller 108 to the power company, or the power lines connecting power source(s) 102 and energy storage device(s) 104 to power system controller 108). For example, communications interface 113 may be configured to transmit signals to user interface 107, or to receive signals from user interface 107 (e.g., if user interface 107 is a tablet computer or a cellphone). Communications interface 113 may be configured to transmit signals to computers and/or servers over a network connection (e.g., connected to the internet), or to receive signals from computers and/or servers over a network connection (e.g., connected to the internet). For example, communications interface 113 may communicate (e.g., transmit or receive signals) with a power services company to which power system 101 is connected (e.g., power grid 109).

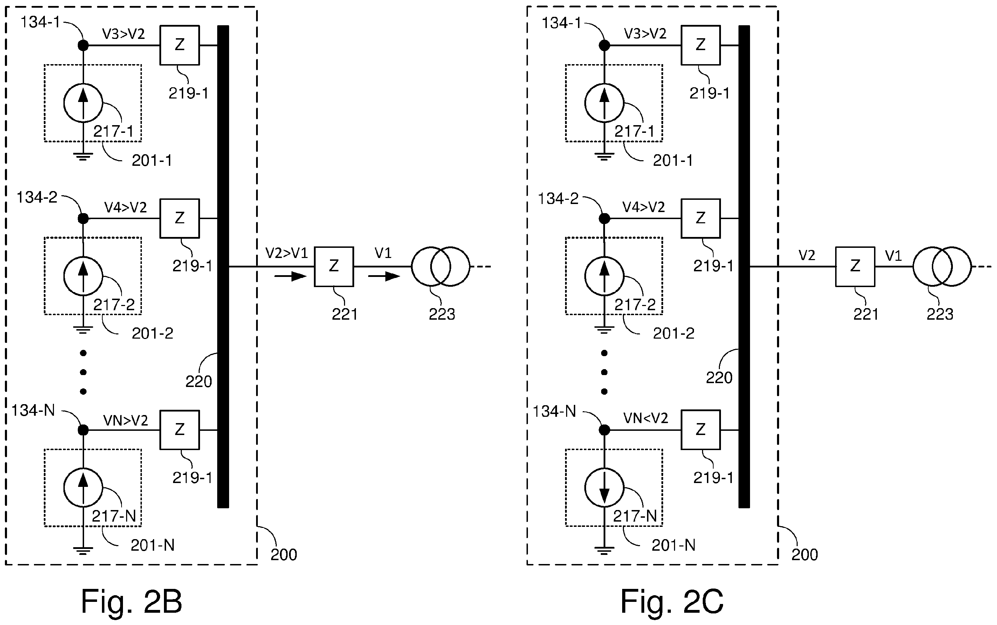

Sensor(s) 116 may be, for example, one or more voltage sensors, one or more current sensors, one or more temperature sensors, one or more humidity sensors, or one or more specific gravity sensors. The one or more voltage sensor may be configured to measure a voltage at corresponding one or more terminals $128_1$, $128_2$, $130_1$, $130_2$, $132_1$, $132_2$, $134_1$, or $134_2$ of power system controller 108. For example, the one or more voltage sensors may measure a corresponding voltage of power source(s) 102, storage interface 106, power grid 109, and/or premises 118. The one or more voltage sensors may comprise a resistive divider or a capacitive divider, a resistive or capacitive bridge, comparators (e.g., employing operational amplifiers), or the like. The one or more current sensors may be configured to measure a current through corresponding one or more terminals $128_1$, $128_2$, $130_1$, $130_2$, $132_1$, $132_2$, $134_1$, or $134_2$ of power system controller 108 (e.g., as shown in Figure 2B). For example, the one or more current sensors may measure a corresponding current flowing through power source(s) 102, storage interface 106, power grid 109, or premises 118. The one or more current sensors may comprise, for example, a Current Transformer ("CT") sensor, Hall effect sensor, zero flux sensor, current sense resistors or the like. The one or more temperature sensors may be configured to measure the temperature of at least one of energy storage device 204, power system controller 208, various components thereof, and/or an ambient temperature.

According to the disclosure, storage interface 106 may comprise one or more switches, configured to connect or disconnect one or more energy storage devices such as battery 104-1 from power system controller 108. For example, controller 110 may control the switch(es). Storage interface 106 may comprise a bidirectional converter (e.g., a DC-to-DC converter), which may be configured to convert power from battery 104-1 to power having characteristics (e.g., voltage, current, frequency, or harmonic distortion, etc.) drawn by power converter 111. Storage interface 106 may be configured to convert power from power converter 111, or power source(s) 102, to power having characteristics used to store energy in energy storage device 104.

Storage interface 106 may be configured to receive control signals from controller 110 to charge or discharge battery 104-1. In some instances, storage interface 106 may be configured to convert power from battery 104-1 to power having characteristics (e.g., voltage, current, frequency, or harmonic distortion, etc.) used by power converter 111, based on various conditions or parameters of power system 101, using various charging and discharging schemes. For example, controller 110 may be configured to control storage interface 106 to charge or discharge battery 104-1 based on a storage level of battery 104-1. For example, the storage level may be the state of energy (SOE) of battery 104-1, or the state of charge (SOC) of battery 104-1. Controller 110 may be configured to control storage interface 106 to charge or discharge battery 104-1 based on power produced by power source(s) 102. Controller 110 may be configured to control storage interface 106 to charge or discharge battery 104-1 based on the power drawn by the premises 118 (e.g., by one or more load devices at the premises 118). In Figure 1B, storage interface 106 is depicted as separate from power system controller 108 and from battery 104-1. Additionally, or alternatively, storage interface 106 may be integrated with power system controller 108 or with battery 104-1.

Figure 1B shows an example in which battery 104-1 is coupled to storage interface 106. In cases in which power system 101 comprises more than one storage device 104 (e.g., battery 104-1, EV 104-2, thermal storage 104-3), each storage device of energy storage devices(s) 104 may be coupled to a corresponding storage interface. Alternatively, storage interface 106 may be coupled all of energy storage devices(s) 104.

PV Power source(s) 102 may be configured to generate power (e.g., DC power from PV panels, or generate AC power from wind turbines or a fuel-based generator). Power system controller 108, for example, using power converter 111, may be configured to convert the power generated by power source(s) 102, or power from energy storage device(s) 104, to power having characteristics (e.g., voltage, current, frequency, or harmonic distortion, etc.) compatible for consumption by the premises 118. For example, power converter 111 may be a power inverter configured to generate AC power (e.g., 230Volts at 50 Hz, 120Volts at 60 Hz) for the premises 118. Power system controller 108 may provide power to the premises 118. If the premises 118 draws power from power grid 109, power system 101 may be said to "import" power from power grid 109. If power system controller 108 provides power to power grid 109, power system controller 108 may be said to "export" power to power grid 109. Power system 101 may have a limit on the power that power system controller 108 may be able to provide to power grid 109. Such a limit may be referred to herein as an "export limit." For example, an export limit may be imposed by the power services company which may own or operate power grid 109. The export limit may be constant or dynamic (e.g., time dependent). For example, the export limit may be set via user interface 107, or communications interface 113 may receive a signal relating to the export limit, for example, from the power services company. Meter 114 may be a sensor (e.g., a current sensor) configured to measure and monitor the power drawn from or provided to power grid 109 (e.g., meter 114 may be a bidirectional meter). Power system controller 108 may stop providing power to power grid 109 if the export limit is reached. Power converter 111 may be a bidirectional converter, and may be configured to convert power from power grid 109 to power used for charging energy storage device(s) 104 (e.g., by storage interface 106). Power system 101 may have a limit on the power that power converter 111 is able to draw from power grid 109, referred to herein as "import limit."

Server 112 may be a remote server (e.g., a cloud-based server). In some cases, functions performed by the server 112 may be partially or fully implemented using one or more computing devices and/or may use one or more processors, such as, for example, an Application Specific Integrated Circuit (ASIC) processor, Field Programmable Gate Array (FPGA) processor, or a multipurpose server. Although server 112 is shown outside of power system 101, an equivalent server may be located at each of the power systems without departing from the scope of the disclosure. The server 112 may include multiple distributed servers (e.g., remote and/or local servers) that cooperatively perform the functions of the server 112 according to the disclosure. Server 112 may comprise a predictions generator 120, a prediction model 122, and a planner 124. To generate the voltage level prediction at grid connection point 134, and as may further be elaborated below, server 112 may receive information from various sources for use by predictions generator 120, prediction model 122 and/or planner 124. For example, server 112 may receive predictive data relating to power production by power source(s) 102 (e.g., weather forecasts and/or PV power production prediction). Server 112 may receive historical data from a database 115. For example, server 112 may receive from database 115 past data relating to electrical parameters (e.g., voltage levels, current levels, frequency) at grid connection point 134. Server 112 may receive from database 115 past data relating to power production by power source 102 (e.g., past weather data). Prediction model 122 may use the predictive and past data to generate a prediction of the voltage level at grid connection point 134. Planner 124 may determine an operational plan for energy storage device(s) 104 and/or load device(s) 118. Server 112 may provide (e.g., transmit) the operational plan to power system controller 108. Power system controller may control energy storage device(s) 104 and/or load device(s) 118 according to the operational plan to increase the probability that power system 101 may import power in cases in which the level of the voltage at grid connection point 134 increasing above a threshold, or export power in cases in which the level of the voltage at the grid connection point 134 decreasing below a threshold.

User interface 107 may be configured to receive information from a user, and to present information to a user (e.g., visually or by audio). For example, user interface 107 may be a computer with a screen, a speaker, a keyboard, or mouse, and may execute software which may be configured to receive information from a user, present information to a user, and communicate with power system controller 108. User interface 107 may be a touchscreen attached to power system controller 108. User interface may be a screen and buttons connected to power system controller 108. User interface may be a tablet computer or a cellphone executing an application, and which may communicate with power system controller 108 (e.g., via communications interface 113).

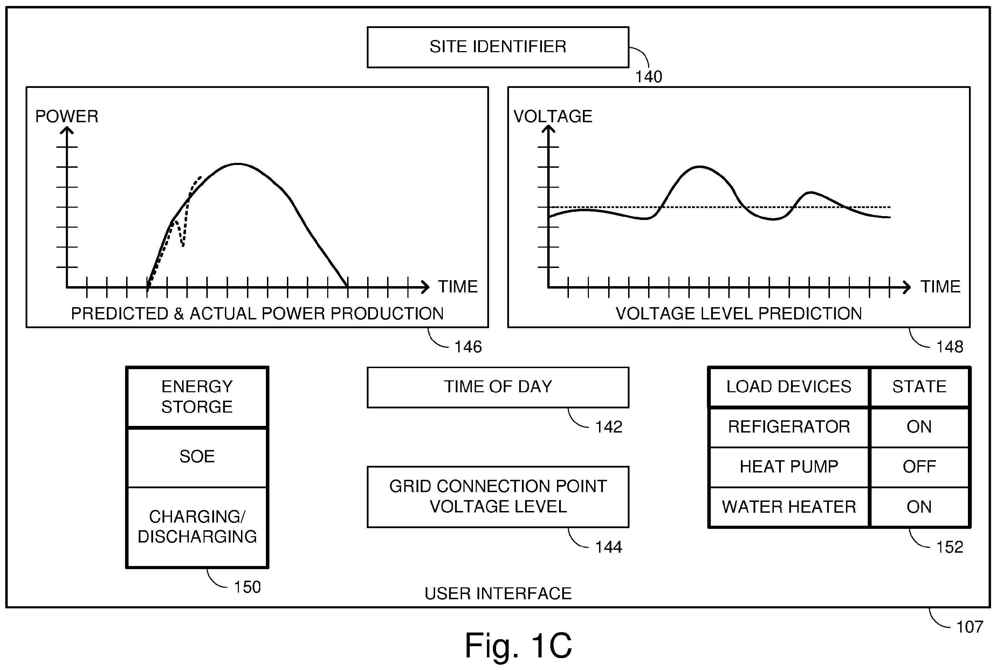

Figure 1C may show an example of user interface 107. User interface may present information to a user, such as a site identifier 140 (e.g., site name and/or site number), a time of day 142 and a voltage level at the grid connection point 144. User interface 107 may present actual and predicted power production 146 by power source 102, voltage level prediction 148 of the voltage level at grid connection point 134. User interface 107 may present, at 150, a state of energy storage device(s) 104 (e.g., the SOE and if energy storage device(s) 104 is charging or discharging). User interface 107 may present, at 152) a state of various load devices 118 in power system 101 (e.g., if the load is "on" of "off").

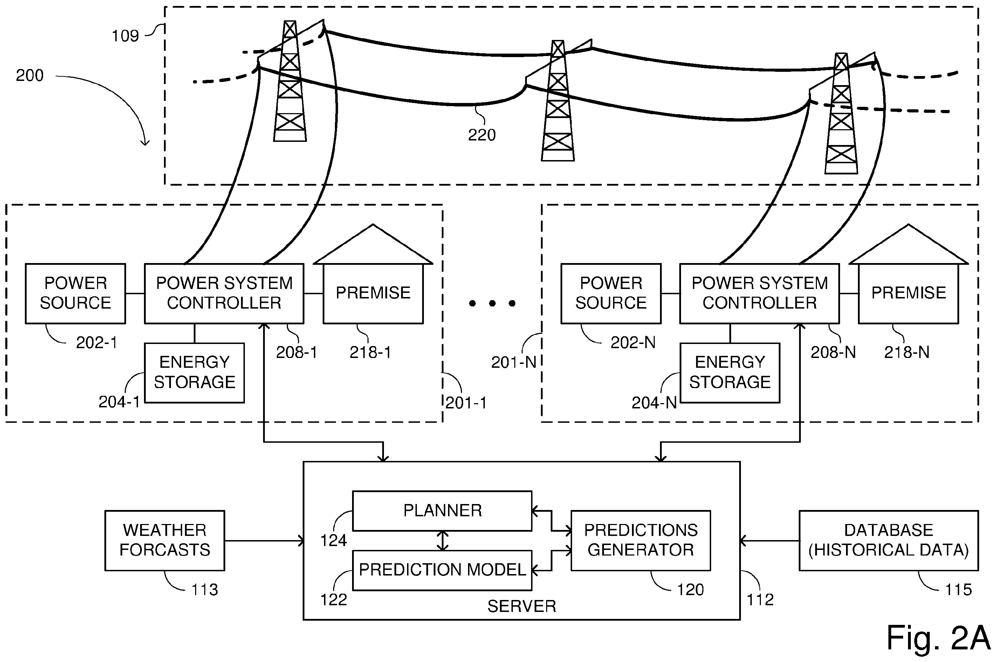

Reference is now made to Figures 2A-2C, which may show a system, generally referenced 200, which may comprise a plurality of power systems (sites) 201-1 - 201-N. Each of power systems 201-1 - 201-N may be similar to power system 101 described herein above in conjunction with Figures 1A-1C. For the sake of clarity of Figure 2A, a power system 201-n of power systems 201-1 - 201-N is shown only with a power source 202-n, a power system controller 208-n, an energy storage device 204-n, and a premises 218-n. Each of power systems 201-1 - 201-N may further be coupled to power grid 109 and to server 112. Figures 2B and 2C may show a model of system 200. According to the model shown in Figures 2B and 2C, each of power system 201-1 - 202-N may comprise a corresponding current source 217-1 - 217-N (e.g., representing power converter 111). Each of power systems 201-1 - 202-N may be coupled to power grid 109 at a corresponding grid connection point 134-1 - 134-N. Power grid 109 may comprise transmission lines 220 (e.g., transmission lines at a street). Grid connection point 134-n of grid connection points 134-1 - 134-N may be coupled to transmission lines 220. The coupling of a grid connection point 134-n to transmission lines 220 may comprise a corresponding impedance 219-1 - 219-N (e.g., which may be a parasitic impedance). Transmission lines 220 may be coupled to a transformer 223. The coupling of transmission lines 220 to transformer 223 may also comprise an impedance 221 (e.g., which may be a parasitic impedance).

A power company may generate power on power grid 109 such that a voltage on power grid 109 is maintained within a tolerance from a nominal value (e.g., 230Volts $\pm$ 10%, 220Volts +7% -5%, and the like). Such a tolerance may determine an upper limit and a lower limit on voltage level at grid connection point 134 (e.g., any of grid connection points 134-1 to 134-N). In cases in which a power system 201 exports power to power grid 109, the current provided by power system 201 to power grid 109 may cause the voltage at grid connection point 134 to increase due to impedances such as impedance 219-n and impedance 221. Conversely, in cases in which power system 201 exports power, power converter 111 may increase the voltage at grid connection point 134 to cause current to flow through impedance 219-n and impedance 221. Similarly, in cases in which a power system 201 imports power from power grid 109, the voltage at grid connection point 134 may decrease below the lower limit. In cases in which the voltage at grid connection point 134 increases above the upper limit or decreases below the lower limit, power system controller 108 may reset (e.g., turn-off and turn-on again). In some cases, power system 201 may reset multiple times in attempts to export or import power. Such multiple resets may be harmful to various components of power system 201. Also, the rise or fall of the voltage at grid connection point 134 may be harmful to the various load device(s) 118 and may even be dangerous.

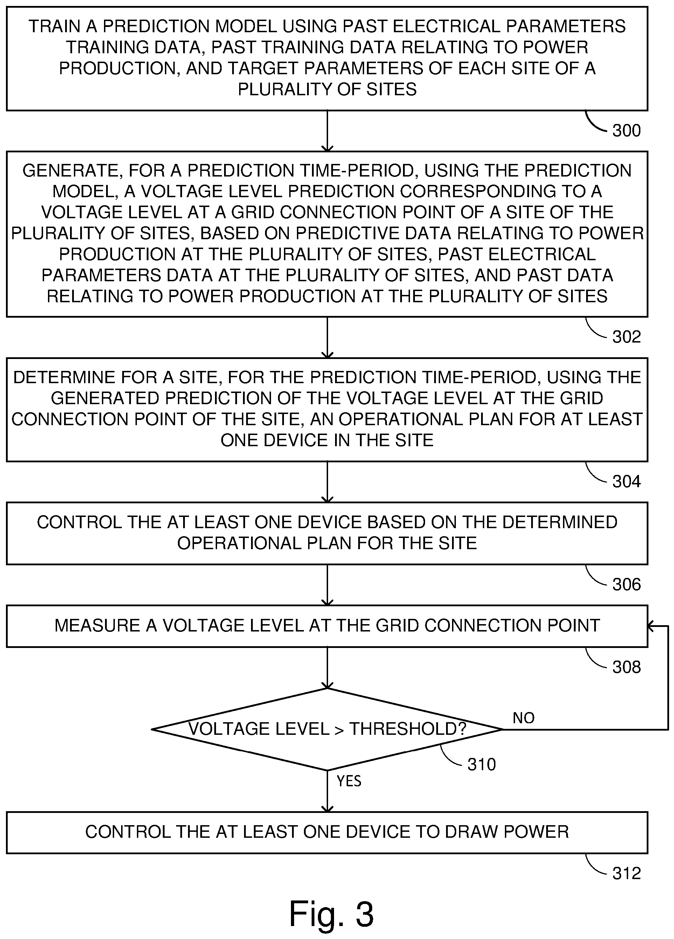

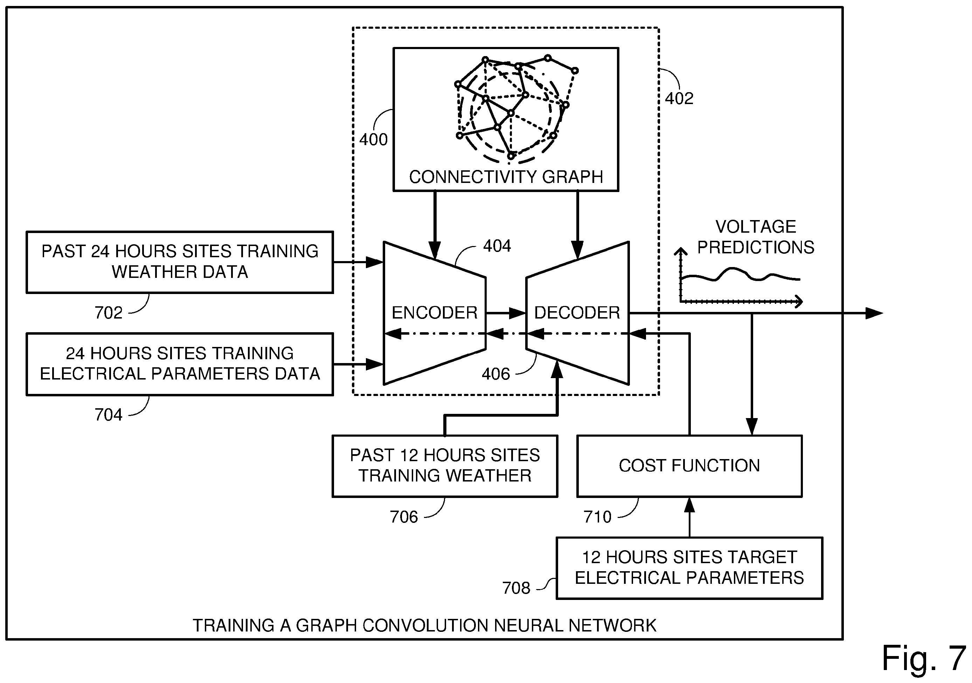

Reference is made to Figure 3, which may show a method for a system, such system 200. In step 300, train, by server 112, a prediction model (e.g., prediction model 122) using past electrical parameters training data, past training data relating to power production, and target parameters of a plurality of sites. The prediction model may be a space-time prediction model (e.g., a graph neural network with Long-Short Term Memory modules) as may further be elaborated below. The past (historical) electrical parameters training data may be measurements of the voltage level at grid connection point 134 of sites 201-1-201-N, the current at grid connection point 134 of sites 201-1-201-N, and the like. The past training data relating to power production may be measurements of power produced by power sources 202-1-202-N. The past training data relating to power production may be historical weather data at sites 201-1-201-N. The target parameters may be, for example, past measurements of electrical parameters (e.g., voltage or current) at grid connection point 134 which prediction model 122 is trained to predict. The data described above, used to train prediction model 122 may be stored in database 115. The past electrical parameters training data may be over the time-duration of the past observation time-period. The past training data relating to power production of each site may be over the duration of the first time-duration of the prediction time-period, and over the second time duration of the past observation time-period (e.g., the sum of the first time-duration and the second time duration). The target electric parameters may be over the time-duration of the prediction time-period. Training prediction model 122 may further be elaborated in conjunction with Figure 7.

In step 302, generate, by server 112, for a prediction time-period, using prediction model 122, a voltage level prediction corresponding to a voltage level at a grid connection point 134 of site 201-n of the plurality of sites. Prediction model 122 generates the voltage level prediction based on predictive data relating to power production at the plurality of sites 201-1-201-N, past electrical parameters data at the plurality of sites, and past data relating to power production at the plurality of sites. The predictive data relating to power production may be a prediction of the power that may be produced by power sources 202-1-202-N, which may be generated by predictions generator 120 using historical data from database 115. For example, prediction generator 120 may generate a prediction of power production by power source(s) 102 based on yesterday's actual power production of power source(s) 102. Prediction generator 120 may generate a prediction of power production by power source(s) 102 based on a determined number of previous days (e.g., the last 10 days) of actual power production of power source(s) 102. Prediction generator 120 may generate a prediction of power production by power source(s) 102 based on power production at a pertinent date over past years (e.g., on February 20 over the past 10 years). Prediction generator 120 may use prediction model 122 (e.g., a neural network) to determine the predicted power production by power source(s) 102. The predictive data relating to power production may be a weather prediction at sites 201-1-201-N generated from weather forecasts 117. A weather forecast may comprise predicted irradiance data (e.g., irradiance parameters such as diffuse irradiance, beam irradiance, global horizon irradiance and/or direct normal irradiance), predicted temperature data at sites 201-1-201-N, predicted, and/or predicted cloud coverage at sites 201-1-201-N.

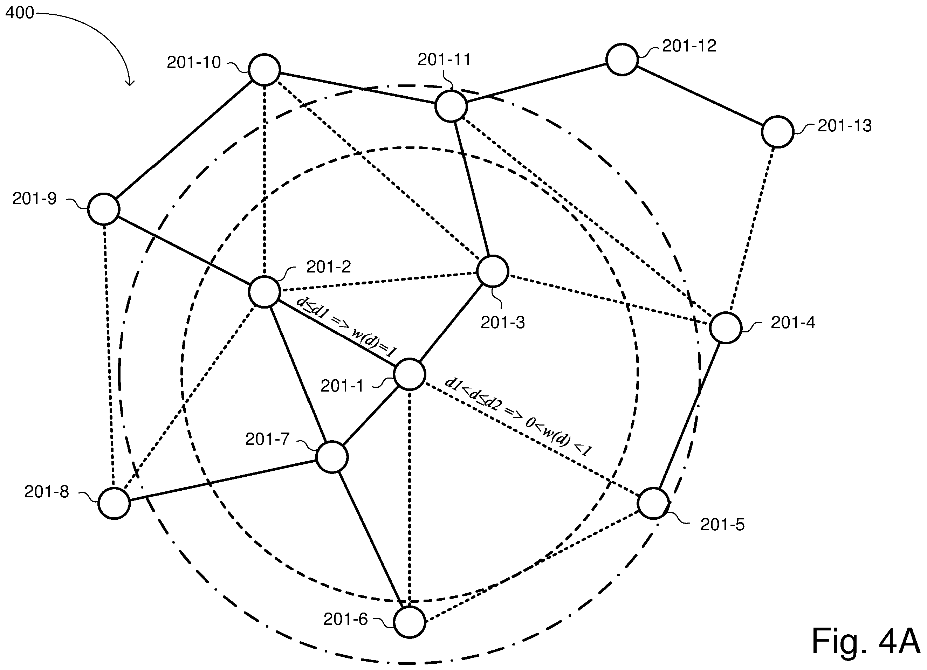

Still in step 302, sites past electrical parameters data may be at least the voltage level at the corresponding grid connection point 134, which may be stored in database 115. Sites past electrical parameters data may be a maximum voltage during a time-interval (e.g., 5 minutes, 10 minutes, 15 minutes, 30 minutes, and the like), a minimum voltage during the time-interval, a standard deviation of the voltage during the time-interval, and/or an average voltage during the time-interval. Sites past data relating to power production may be measurements of power produced by power sources 202-1-202-N. Sites past data relating to power production may be historical weather information at sites 201-1-201-N. Generating a voltage level prediction corresponding to a voltage level at a grid connection point 134 of site 201-n is further elaborated in conjunction with Figures 4A-4C.

In step 304, determine for site 201-n, by server 112 using planner 124, for the prediction time-period, using the generated prediction of the voltage level at the grid connection point 134 of site 201-n, an operational plan for at least one device (e.g., an energy storage device such as battery 104-1 or load device such as water heater 118-3) in site 201-n. The operational plan may be based on a time-period or time-periods in which the voltage level at grid connection point 134 may exceed above a high voltage threshold or reduce below a low voltage threshold. The operational plan may further be based on a device parameter or parameters of the at least one device. For example, in cases in which the at least one device comprises an energy storage device the device parameters may be one or more of a maximum charge power, a maximum discharge power, and an SOE. In cases in which the at least one device comprises a load device, the device parameters may the power rating of the load device. The operational plan may provide power system controller 208-n with constraints and/or instructions for controlling a device or devices in power system 201-n, prior to a predicted connection overvoltage time-period, such that in cases in which the voltage at grid connection point 134 exceeds a threshold, power system controller 208-n may control the device or devices to draw power. For example, the operational plan may provide power system controller 208-n with a schedule to control the device or devices in the premises 118. For example, the operational plan may provide system controller 208-n with power and/or energy constraints to control the device or devices in the premises 118. For example, the determined operational plan for site 201-n may provide power system controller 208-n with periods in which battery 104-1 may be charged or discharged. The determined operational plan for site 201-n may provide power system controller 208-n with an amount of energy that should be stored in battery 104-1 at certain times and/or the amount of power with which to charge or discharge battery 104-1. Thus, in cases in cases in which the voltage at grid connection point 134 exceeds a threshold, power system controller 208-n may control battery 104-1 to draw power from power grid 109. The operational plan may comprise instructions for turning load devices on or off (e.g., transition from an off-state to an on-state, or transitioning from an on-state to an off-state).

In step 306, control, by power system controller 208-n, at least one device based on the determined operational plan for site 201-n. For example, power system controller 208-n may control storage interface 106 to discharge battery 104-1 based on the determined operational plan for site 201-n. For example, power system controller 208-n may control heat pump 118-2 to turn off based on the determined operational plan for site 201-n.

In step 308, measure by power system controller 201-n, using sensor(s) 116, a voltage level at grid connection point 134. The threshold may be determined to be at or below the upper limit of the grid voltage. The threshold may be determined to be below the upper limit to allow power system controller 201-n time to control the device or devices, and thus reduce the probability that the voltage level at grid connection point 134 exceeds the upper limit of the grid voltage.

In step 310, determine by power system controller 201-n, using a controller (e.g., controller 110), if the level at grid connection point 134 exceeds the threshold. In cases in which the voltage level at grid connection point 134 does not exceed the threshold, the method may return to step 308. In cases in which the voltage level at grid connection point 134 exceed the threshold, the method may proceed to step 312.

In step 312, power system controller 201-n, may control the at least one device to draw power. For example, power system controller 201-n may control storage interface 106 to charge battery 104-1 and/or to control water heater 118-3 to increase the power drawn by water heater 118-3.

As described above in step 302 of Figure 3, according to the disclosure herein server 112 may use prediction model 122 to generate, for a prediction time-period, a voltage level prediction corresponding to a voltage level at grid connection point 134 of a site 201-n of the plurality of sites 201-1-201-N. Since, in many cases, the voltage level at a grid connection point 134 of a site 201-n may depend on the voltage level at grid connections points of other ones of sites 201-1-201-N that are in proximity to site 201-n (e.g., in a neighborhood), a spatial inference model may be used. Since the voltage level at grid connection point 134 may also depend on time, a space-time prediction model may be used. One example of such a space-time prediction model may be a Graph Recurrent Neural Network (GRNN) which may use a Long Short Term Memory (LSTM) model (e.g., an LSTM architecture). A GRNN may use a connectivity graph to model the spatial relationship between the sites 201-1-201-N (the nodes) in the graph. The LSTM architecture accounts for the time dependency of the data. A space-time prediction model is further elaborated below. In the disclosure herein, the terms nodes and sites may be used interchangeable.

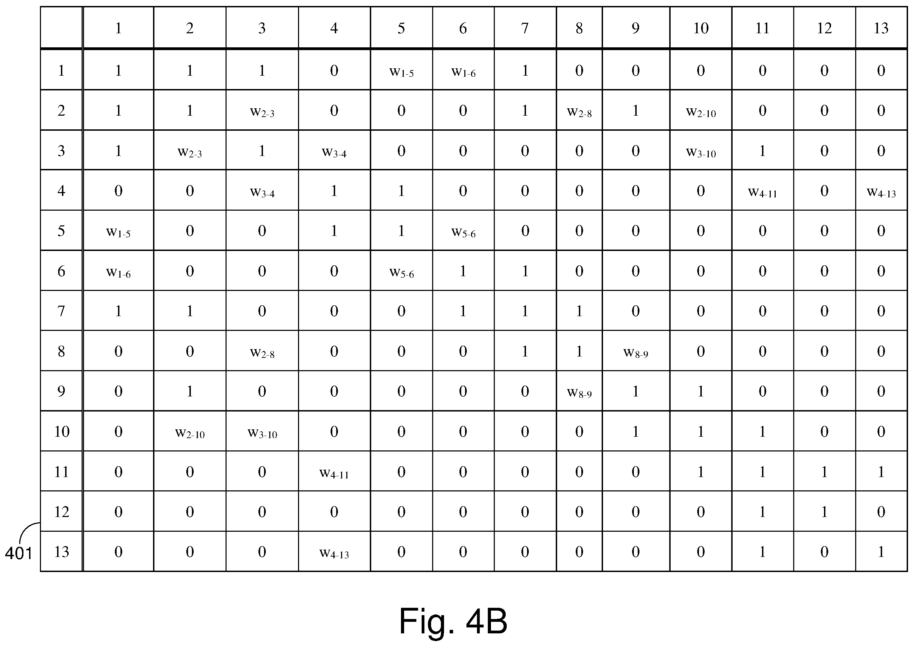

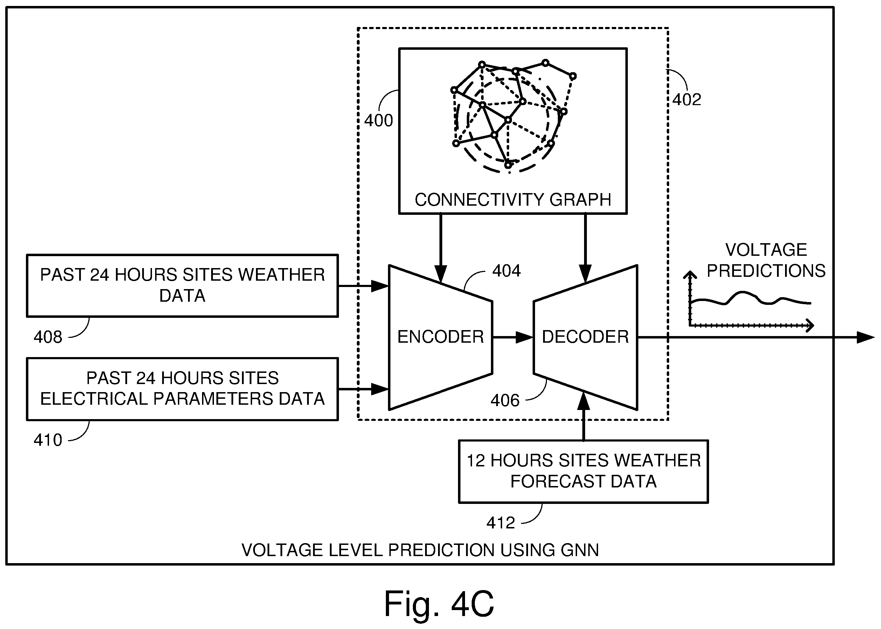

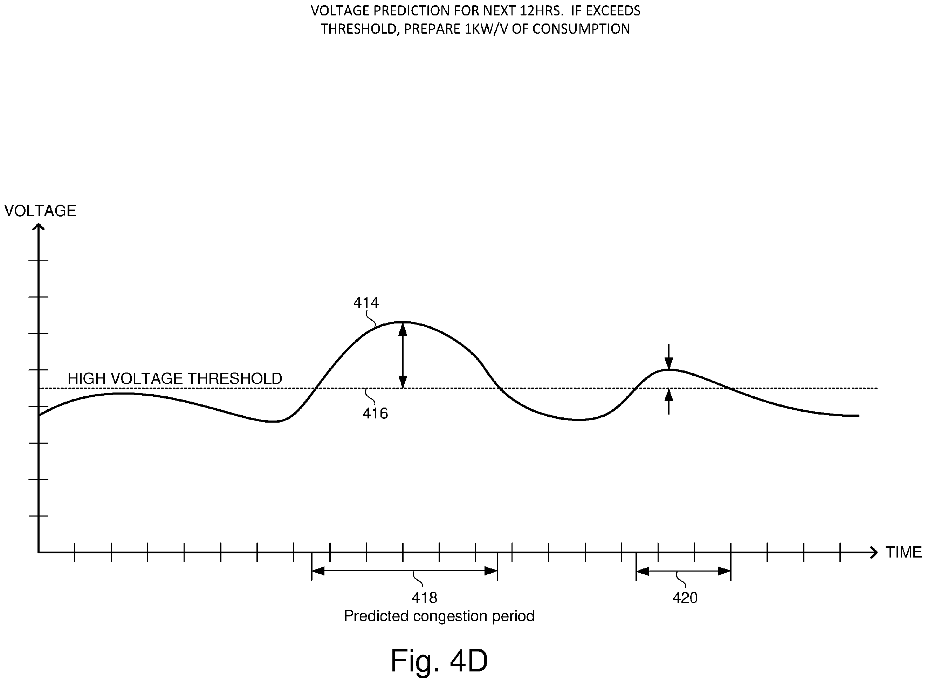

Reference is now made to Figures 4A-4D. Figures 4A and 4B may show an example of a connectivity graph 400 of a graph neural network 402. Figures 4C and 4D may show an example of generating, for prediction time-period, using graph neural network 402, a voltage level prediction corresponding to a voltage level at a grid connection point 134 of site 201-n of the plurality of sites 201-1-201-N (e.g., as mentioned above in conjunction with step 302 - Figure 3).

According to the example shown in Figures 4A connectivity graph 400 represents the spatial relationship between sites 201-1-201-N in system 200. In connectivity graph 400, sites 201-1-201-N relate to each other based on a distance between pairs of sites. A connection between two sites (nodes) is weighted based on the distance between the two sites. If a distance between two sites is smaller or equal to a first distance, $d1$ (e.g., 50 meters, 100 meters, 200, meters and the like), than the weight, $w(d)$, of the connection between these two sites is at a maximum (e.g., if $d \leq d1$ than $w(d)=1$, where 1 is a maximum normalized weight). If a distance between two sites is between $d1$ and a second distance, $d2$ (e.g., 500 meters, 600 meters, 750 meters, and the like), then the weight, $w(d)$, of the connection between these two sites is between zero and the maximum (e.g., if $d1<d \leq d2$ than $0<w(d)<1$). If a distance between two sites is larger than d2, than the two sites are considered as not connected to each other (e.g., $w(d)=0$). In Figure 4A, two sites where the distance therebetween is smaller or equal to d1 ($w(d)=1$) are shown as connected by a solid line. Two sites where the distance therebetween is between $d1$ and $d2$ ($0<w(d)<d1$) are shown as connected by a dashed line. Figure 4A shows an example of a connectivity graph which includes thirteen (13) sites. For example, the connection between site 201-1 and 201-3 is weighted with a normalized weight of one. The connection between site 201-2 and 201-10 is weighted with a normalized weight between zero and one. A connectivity graph may be represented by a connectivity matrix 401 as shown in Figure 4B. An entry in connectivity matrix 401 represents the weight between the two sites associated with the entry. For example, the normalized weight between sites 201-5 and 201-6 is $w_{5-6}$. The normalized weight between sites 201-2 and 201-9 is 1. The normalized weight of a site with itself is also 1.

As mentioned above in conjunction with step 302 (Figure 3A), and with reference to Figures 4C, server 112 may use prediction model 122, where prediction model 122 may be graph neural network 402, to generate a voltage level prediction corresponding to a voltage level at a grid connection point 134 of a site 201-n of the plurality of sites 201-1-201-N. Server 112 may base the voltage level prediction on predictive data relating to power production at sites 201-1-201-N for the prediction time-period, past electrical parameters data at sites 201-1-201-N during an observation time-period, and past data relating to power production at sites 201-1-201-N the observation time-period. In the example shown in Figure 4C, server 112 may use past 24-hours sites weather data 408, which may be stored in database 115, for the past data relating to power production at sites 201-1-201-N, where the past 24 hours is the observation time-period. Past 24-hours sites weather data 408 may comprise past irradiance data (e.g., diffuse irradiance, beam irradiance, global horizontal irradiance and/or direct normal irradiance) and/or past temperature data of sites 201-1-201-N. Server 112 may use past 24-hours sites electrical parameters data 410, which may be stored in database 115, for the past electrical parameters data of sites 201-1-201-N. Past 24-hours sites electrical parameters data 410 of sites 201-1-201-N may comprise a maximum voltage (e.g., maximum AC voltage) during a time-interval (e.g., 5 minutes, 10 minutes, 15 minutes, 30 minutes, and the like) in the observation time-period, at grid connection point 134 of sites 201-1-201-N and/or a minimum voltage (e.g., minimum AC voltage) at grid connection point 134 of sites 201-1-201-N during the time-interval. Past 24-hours sites electrical parameters data 410 of sites 201-1-201-N may comprise an average and/or a standard deviation of the voltage at grid connection point 134 during the time-interval. Past 24-hours sites electrical parameters data 410 of sites 201-1-201-N may comprise one or more of a maximum power, a minimum power, an average power, and a power ratio (e.g., between maximum power and minimum power) during a time-interval. Server 112 may use 12-hours sites weather forecast data 412 at sites 201-1-201-N, which may be received from weather forecasts 117, for the predictive data relating to power production at sites 201-1-201-N, where 12-hours are the prediction time-period. 12-hours sites weather forecast data 412 may comprise a prediction of irradiance and/temperatures at sites 201-1-201-N. The duration of the predictive data relating to power production at sites 201-1-201-N may correspond to the duration of prediction time-period.

Graph neural network 402 may comprise an encoder 404 and a decoder 406. Encoder 404 may encode past 24-hours sites weather data 408 and/or past 24-hours sites electrical parameters data 410 into a vector or vectors referred to as "context vectors." The context vectors may comprise a concise representation of essential features of interest in the input data. Decoder 406 may use 12-hours sites weather forecast data 412 to decode the context vector or vectors to generate a voltage level prediction (e.g., voltage level prediction 414 - Figure 4D), over the prediction time-period (e.g., 12-hours in the example of Figures 4C and 4D), for each of sites 201-1-201-N. Encoder 404 and decoder 406 may use connectivity graph 400 of system 200 to account for the spatial dependency of the voltage level at grid connection point 134 of a site 201-n, on the voltage level at grid connection point 134 of other sites which are in proximity to site 201-n. Encoder 404 and decoder 406 may use LSTMs models to account for the temporal relationship of the input data. Using a GRNN may allow for sites to be removed or added to the connectivity graph, (e.g., by updating connectivity matrix 401), without a need to re-train graph neural network 402.

As mentioned above in step 304 (Figure 3), server 112 using planner 124 and voltage level prediction 414 may determine an operational plan for a device or devices in power systems 201-1-201-N. Server 112 may determine, for a site 201-n, predicted high-voltage periods, during which the voltage at grid connection point 134 of site 201-n is predicted to exceed a threshold. Figure 4D may show an example of voltage level prediction 414 for a site 201-n. In the example shown in Figure 4D, voltage level prediction 414 may exceed a threshold 416 during time-periods 418 and 420. Threshold 416 may be a high voltage threshold (e.g., 253Volts, which is 10% above 230Volts). Threshold 416 may be determined to be below an upper limit of the nominal value of power grid 109 (e.g., 250V). The operational plan aims to reduce the probability that the power system 201-n will export power to power grid 109 during time-periods 418 and 420, and consequently reduce the probability that the voltage level at grid connection point 134 will rise above the voltage upper limit of power grid 109.

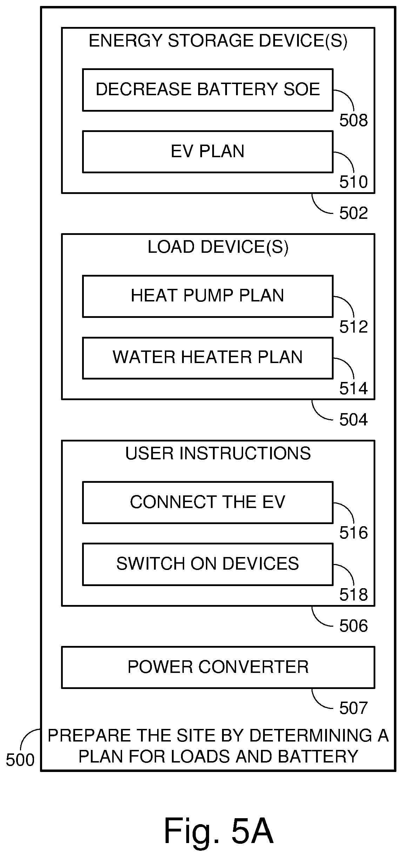

As mentioned in step 306 (Figure 3B), power system controller 208-n may control one or more devices in power system 201-n based on an operational plan determined by server 112. Reference is now made to Figures 5A-5E which may show an example of an operational plan 500 for devices in power system 208-n, and examples of controlling devices in power system 208-n based on the determined operational plan. Operational plan 500 may comprise an operational plan 502 for energy storage device(s) 104. Operational plan 502 may comprise an operational plan 508 for the SOE of battery 104-1, and/or an operational plan 510 for the SOE of EV 104-2 at 510. Operational plan 504 may comprise a plan for load device(s) 118 such as operational plan 512 for heat pump 118-2 and/or operational plan 514 for water heater 118-3. Operational plan 500 may comprise user instructions 506. Such user instructions may comprise instructions to connect the EV 516 at determined times, or instructions switch on load device(s) at the premises 118 at determined times. Operational plan 500 may be determined by server 112, using planner 124, for a site 201-n and transmitted to the corresponding power system controller 208-n. Power system controller 208-n may controller the devices in site 208-n based on the operational plan.

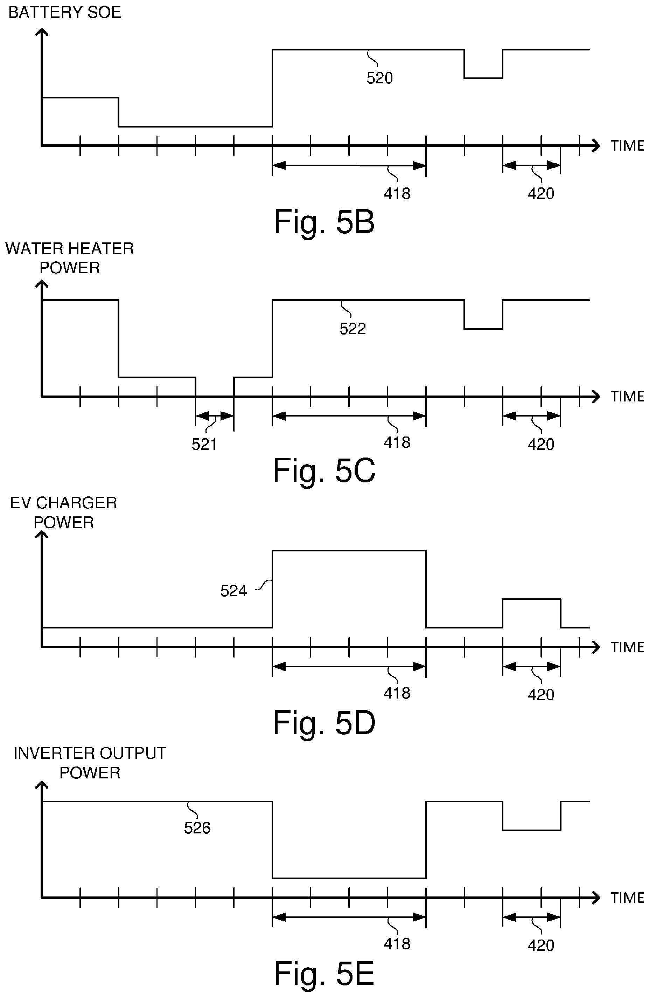

Figure 5B shows a graph 520 representing operational plan 502 for battery 104-1. Graph 520 may represent the SOE of battery 104-1 during the prediction time-period. As shown in Figure 5B, prior to time-periods 418 and 420, during which the voltage at grid connection point 134 is predicted to exceed threshold 416 (Figure 4D), power system controller 208-n controls the corresponding storage interface 106 to discharge energy from battery 104-1. Thus, during time-periods 418 and 420, power system controller 208-n may control the corresponding storage interface 106 to charge battery 104-1 with energy, thus reducing the probability that the power system 201-n will export power to power grid 109, and consequently reducing the probability that the voltage level at grid connection point 134 of power system 201-n will rise above the upper limit of the voltage level of power grid 109.

Figure 5C shows a graph 522 representing operational plan 514 for water heater 118-3. Graph 522 may represent the power used to operate water heater 118-3 during the prediction time-period. As shown in Figure 5C, prior to time-periods 418 and 420, during which the voltage at grid connection point 134 is predicted to exceed threshold 416 (Figure 4D), power system controller 208-n may control the corresponding water heater 118-3 to reduce the power heating the water (e.g., during time-period 521 water heater 118-3 is turned off). During time-periods 418 and 420, power system controller 208-n may control the corresponding water heater 118-3 to increase the power heating the water. Consequently, the probability that the power system 201-n will export power to power grid 109 may be reduced, and consequently the probability that the voltage level at grid connection point 134 is above the upper limit of the voltage level of power grid 109 may be reduced.

Figure 5D shows a graph 524 representing operational plan 510 for EV 104-2. Graph 524 may represent the power used to charge EV 104-2 during the prediction time-period. As shown in Figure 5D, prior to time-periods 418 and 420, during which the voltage at grid connection point 134 is predicted to exceed threshold 416 (Figure 4D), power system controller 208-n controls the corresponding EV 104-2 to not to charge power. Thus, during time-periods 418 and 420, power system controller 208-n may control the corresponding the corresponding EV 104-2 to charge energy, thus reducing the probability that the power system 201-n will export power to power grid 109, and consequently reducing the probability that the voltage level at grid connection point 134 will rise above the upper limit of the voltage level of power grid 109.

Figure 5E shows a graph 526 representing operational plan 510 power converter 111. Graph 526 may represent the output power from power converter 111 to the premises 118. As shown in Figure 5E, during time-periods 418 and 420, power system controller 208-n may control power converter 111 to reduce the output power from power converter 111. Reduce the output power from power converter 111 may also be referred to as "derating" power converter 111. Consequently, the probability that the power system 201-n will export power to power grid 109 may be reduced, and consequently the probability that the voltage level at grid connection point 134 will rise the upper limit of the voltage level of power grid 109 may be reduced.

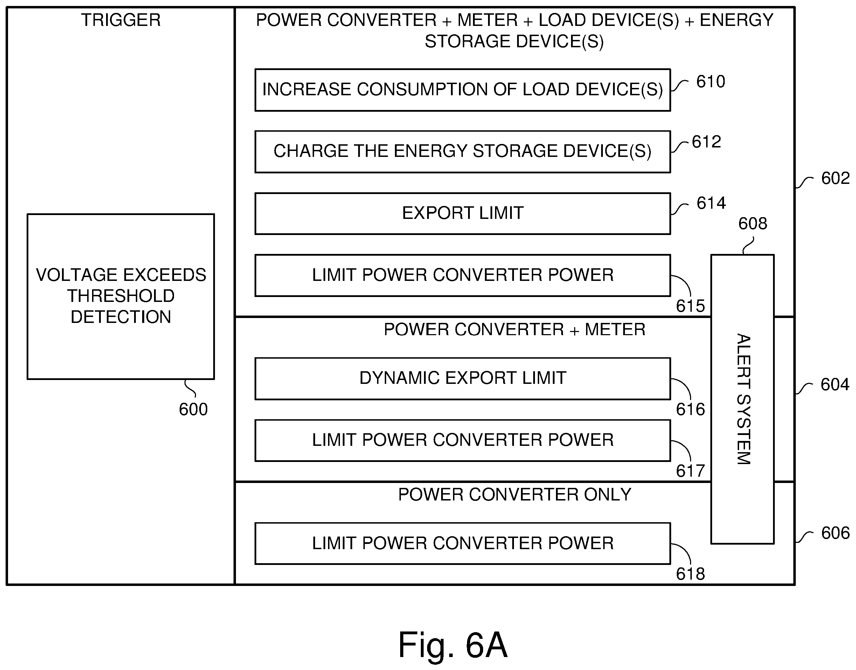

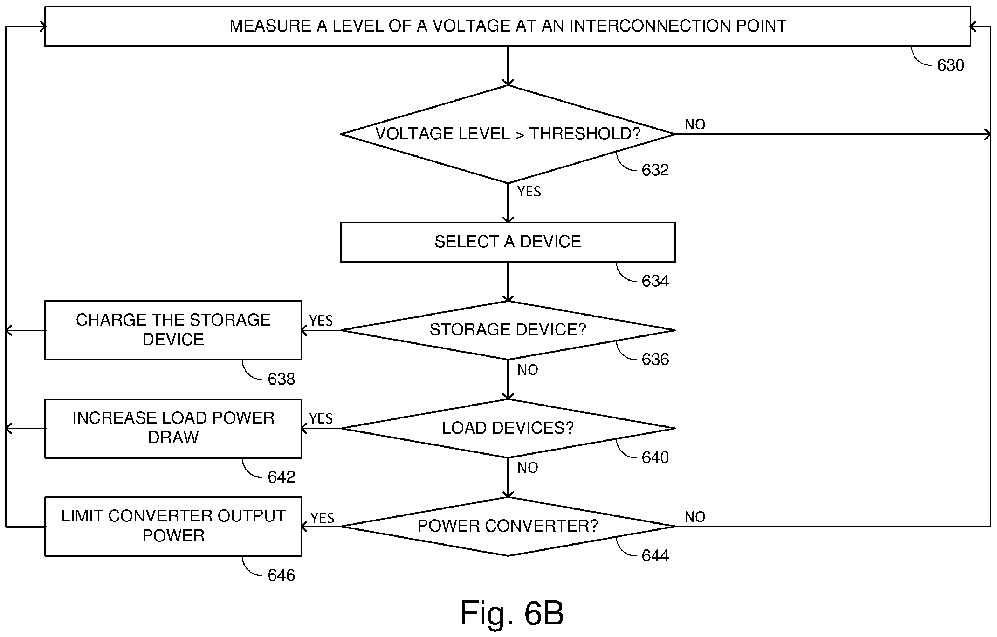

As mentioned above in steps 308, 310 and 312 (Figure 3) above, in cases in which the power system controller 108 may detect, using sensor(s) 116, that the voltage level at grid connection point 134 exceeds a threshold (which may also be referred to as "a trigger"), power system controller 108 may control various devices in power system 101. Reference is now made to Figures 6A and 6B. Figure 6A may show examples of system configurations, and the devices that power system controller 108 may control in cases in which a trigger is detected. Figure 6B shows an example of a method for controlling a device or devices in cases in which a trigger is detected.

Figure 6A shows examples of three system configurations. In a first configuration 602, power system 101 may comprise power converter 111, meter 114, load devices at the premises 118, and energy storage device(s) 104. In a second configuration 604, power system 101 may comprise power converter 111 and meter 114. In a third configuration 606, power system 101 may comprise power converter 111. As shown in Figure 6A, at 600 power system controller 108 may detect a trigger. In cases in which power system 101 comprises configuration 602, power system controller 108 may increase the consumption of the load device(s) at the premises 118 at 610, charge storage device(s) 104 at 612, determine an export limit at 614, or limit the output power of power converter 111 at 615. In cases in which power system 101 comprises configuration 604, power system controller 108 may determine a dynamic export limit at 616 or limit the output power of power converter 111 at 617. In cases in which power system 101 comprises configuration 606, power system controller 108 may limit the output power of power converter 111 at 618. In all configurations, an alert system 608 may alert a user that a trigger occurred, for example, via user interface 107. Alert system 608 may further cause power system controller 108 to transmit, using communications interface 113, to server 112 that a trigger occurred.

Referring to Figure 6B, in step 630, power system controller 108, using sensor(s) 116 may measure a level of the voltage at grid connection point 134. In step 632, power system controller 108, using controller 110, may determine if the level of the voltage at grid connection point 134 exceeds a threshold. The threshold may be at or below an upper limit of the voltage level of power grid 109. In cases in which the voltage level at grid connection point 134 does not exceed a threshold, the method may return to step 630. In cases in which the voltage level at grid connection point 134 exceeds a threshold, the method may proceed to step 634.

In step 634, power system controller 108 may select a device or devices to control. The device may be any one of: energy storage device(s) 104 (e.g., one or more of battery 104-1, EV 104-2, and thermal storage 104-3), load device(s) at the premises 118 (e.g., one or more of refrigerator 118-1, heat pump 118-2, water heater 118-3 and machine 118-4), and/or power converter 111. Power system controller 108 may select a device or device to control based on a determined priority. The priority may be predetermined. The priority may be based on the amount of power a device may consume (e.g., charging battery 104-1 may consume more power than turning on water heater 118-3).

In step 636, in cases in which power system controller 108 selects energy storage device(s) 104, at step 638, power system controller 108 may control storage interface 106 to charge energy storage device(s) 104, and the method may return to step 630.

In step 640, in cases in which power system controller 108 selects load devices, at step 642, power system controller 108 may control the load to increase the power drawn by the load and the method may return to step 630.

In step 644, in cases in which power system controller 108 selects power converter 111, at step 646, power system controller 108 may limit the output power of power converter 111 and the method may return to step 630.

As mentioned above in conjunction with step 300 in Figure 3, and with reference to Figure 7, server 112 may train prediction model 122 such as graph neural network 402, using past electrical parameters training data over the observation time-period and the prediction time-period, and past training data relating to power production over the observation time-period and the prediction time-period. Server 112 may use past electrical parameters training data over the observation time-period and past training data relating to power production over the observation time-period as inputs to encoder 404. Server 112 may use past training data relating to power production over the prediction time-period as prediction training inputs to decoder 406. Server 112 may use past electrical parameters training data over prediction time-period as target electrical parameters to which the voltage predictions generated by graph neural network 402 may be compared.

In the example shown in Figure 7, graph neural network 402 uses past 36 hours sites past weather training data, and 36 hours as past training data relating to power production over the observation time-period and the prediction time-period, both of which may be stored in database 115. Of the 36 hours data, server 112 may use 24 hours (e.g., the first 24 hours of the 36 hours) sites past weather training data 702 as input to encoder 404. Server 112 may use 12 hours (e.g., the last 12 hours of the 36 hours) sites past weather training data 706 as weather prediction training data to decoder 406. Similarly, graph neural network 402 may use past 36 hours sites past electrical parameters training data as past electrical parameters training data over the observation time-period and the prediction time-period. Of the 36 hours data, server 112 may use 24 hours (e.g., the first 24 hours of the 36 hours) sites past electrical parameters training data 704 as input to encoder 404. Server 112 may use 12 hours (e.g., the last 12 hours of the 36 hours) sites past electrical parameters training data 708 as a 12 hours sites target electrical parameters 708, to which the voltage predictions generated by graph neural network 402 may be compared. Server 112 may use the generated voltage predictions, and the 12 hours sites target electrical parameters 708 to determine a value or values of a cost function 710 (e.g., using a Euclidian norm). Server 112 may use a value or values of the cost function to update parameters (e.g., weights) of decoder 406 and encoder 404. For example, server 112 may use back propagation to update the weights of decoder 406 and encoder 404 (e.g., as indicated by the dashed-dotted, left pointing, arrows in Figure 7).

As mentioned above, server 112 may use voltage levels prediction 414 to predicts time-periods in which the voltage level at grid connection point 134 may decrease below a low voltage threshold. Server 112 may use planner 124 to generate an operational plan for controlling a device or devices (e.g., a storage device and/or a load device) such that a device or devices may reduce their power consumption during connection point undervoltage time-periods, where energy storage devices may even discharge energy, and power system 101 or 201-n may export power to power grid 109.

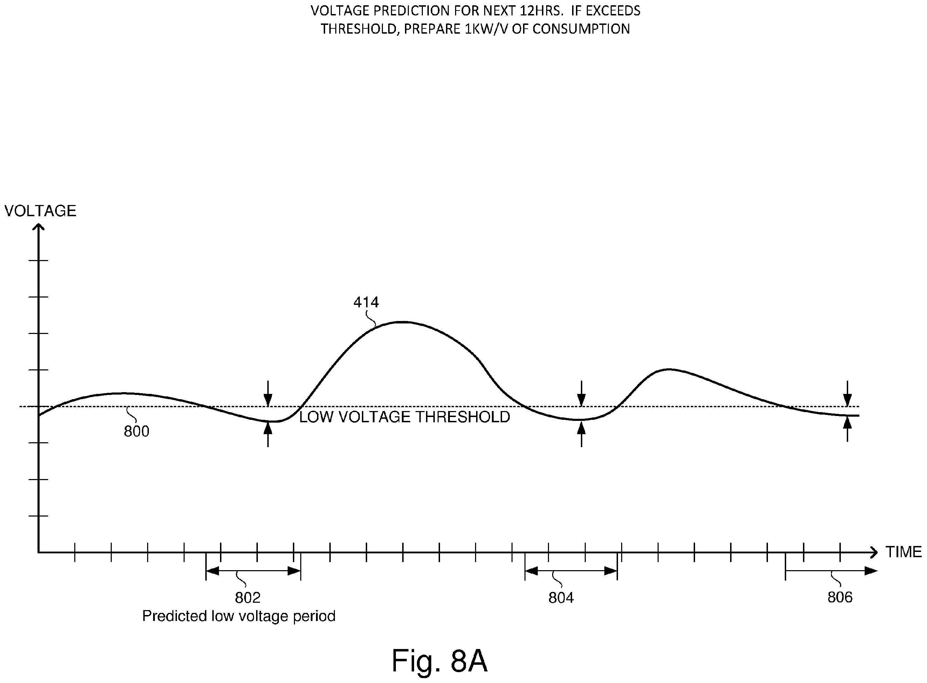

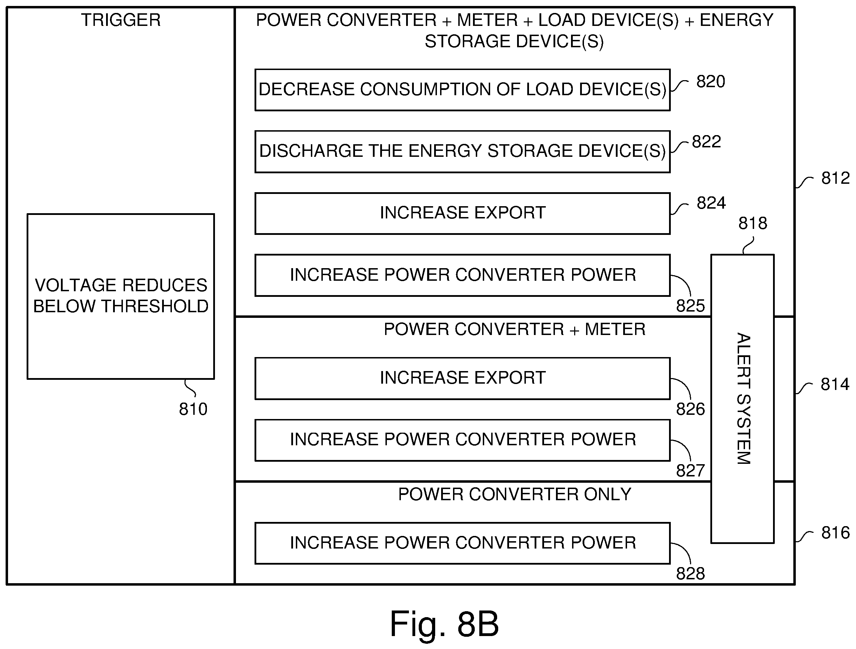

Reference is made to Figures 8A and 8B. Figure 8A may show a voltage level prediction 414 (Figure 4D) for a site 201-n. In the example shown in Figure 8A, voltage level prediction 414 may reduce below a threshold 800 during time-periods 802, 804, and 806. Threshold 800 may be a low voltage threshold (e.g., 207Volts, which is 10% below 230Volts). Threshold 800 may be determined to be above a lower limit of the nominal value of power grid 109 (e.g., 210V). The operational plan aims to reduce the probability that the power system 201-n will import power to power grid 109 during time-periods 802, 804, and 806, and consequently reduce the probability that the voltage level at grid connection point 134 will reduce below the voltage lower limit of power grid 109.

Figure 8B shows examples of three system configurations which may be similar to the system configurations shown in Figure 6A. In a first configuration 812, power system 101 may comprise power converter 111, meter 114, load devices at the premises 118, and energy storage device(s) 104. In a second configuration 814, power system 101 may comprise power converter 111 and meter 114. In a third configuration 816, power system 101 may comprise power converter 111. As shown in Figure 8B, at 810 power system controller 108 may detect a trigger. In cases in which power system 101 comprises configuration 812, power system controller 108 may decrease the consumption of the load device(s) at the premises 118 at 820, discharging energy storage device(s) 104 at 822, increase export to power grid 109 at 822, or increase the output power of power converter 111 at 825. In cases in which power system 101 comprises configuration 814, power system controller 108 may increase export limit to power grid 109 at 826 or increase the output power of power converter 111 at 827. In cases in which power system 101 comprises configuration 606, power system controller 108 may increase the output power of power converter 111 at 828. In all configurations, an alert system 818 may alert a user that a trigger occurred, for example, via user interface 107. Alert system 818 may further cause power system controller 108 to transmit, using communications interface 113, to server 112 that a trigger occurred.

As mentioned above, graph neural network 402 may be a GRNN which may use a Long Short Term Memory (LSTM) models. An output of a GNN layer receiving inputs from a plurality of nodes (e.g., sites 201-1-201-N) may be as follows:

$$Y = (AX)W$$

where $A$ is connectivity, $X$ is data associated with a nodes, $A$ is a connectivity matrix and $W$ is a matrix of weights. To account for nodes that are in a selected proximity to a node we may use a Laplacian matrix raised to the power of a number corresponding to the determined number of to account for. The Laplacian may be define as:

$$L = D - A$$

where $L$ is the Laplacian and $D$ is a degree matrix, which may be a diagonal matrix comprising values representing the number of neighbors each node (e.g., site 201-n).

When used in a graph convolution neural network, raising the Laplacian to a power, $K$, ($L^K$), may correspond to aggregating information from nodes that are $K$ hops from each other. For example, a matrix $L^2$ represents two-hop connections between nodes, and applying $L^2$ a node's feature vector, information from nodes that are two steps away in the graph may be aggregated. Thus, a layer may have the form of:

$$Y = L^K X W$$

where K is determined number of hop neighbors from which information may be aggregated.

A Laplacian matrix of a graph may have eigenvalues (which may be interpreted as frequencies in the context of graphs), that are non-negative and may indicate the presence of structures or clusters within the graph. A graph convolution neural network may use eigen decomposition of the Laplacian matrix as follows:

$$L^K = U\Lambda^K U^T$$

where U represents a matrix of the eigen vectors, $A$ represents a diagonal matrix, where the values of the entries are the eigen values, and $T$ represents the transpose operator. Therefore, a layer in a graph convolution neural network may be:

$$Y = g_\theta(L^K)X = Ug_\theta(V^K)U^T X$$

where $g\theta$ are trainable coefficients.

Computing an eigen decomposition of a Laplacian matrix may be computationally expensive, and the computational complexity may increase with the size of the number of nodes in the graph. In the context of graph convolution neural network, a Chebyshev polynomial may be used to approximate a normalized Laplacian.

Chebyshev polynomials may allow the graph convolution neural network to operate in a localized manner since Chebyshev polynomials may comprise powers of the Laplacian, which corresponds to aggregating information from $K$ neighbors, as the polynomial degree increases. Thus, the Chebyshev polynomial approximation of a Laplacian matrix may be controlled by truncating the polynomial to a desired degree.

$$g_\theta(V^K) = \sum_{p=0}^{K-1} \theta\, V^P = \sum_{p=0}^{K-1} \theta\, T_P(V)$$

Tp(V) is the pth order Chebyshev polynomial expansion where $\theta$ are the coefficients of the polynomials which may be trainable.

A space-time prediction model which uses GRNN with eigen value decomposition of a Laplacian may be referred to a spectral graph convolutional neural network (SGCN). A model which combines SGCN with RNN may be referred to as SGC-RNN. When computing a voltage level prediction at grid connection point 134, an SGC-RNN may use, at each layer a corresponding Kth degree Chebyshev polynomial expansion and the past data (e.g., relating to power production and/or relating to electrical parameters) of the corresponding time-step in the observation time-period, and predictive data relating to power production at each time-step of prediction time-period.

According to the disclosure herein, an inductive framework of graph neural networks may be used to compute a voltage level prediction for a site. In an inductive framework of graph neural networks, node features may be based on a combination of the features of node and the features of neighboring nodes. In some cases, features of higher order neighboring nodes (e.g., 2nd order neighbors, 3rd order neighbors, or higher) may be combined, and combined features of these higher order neighboring nodes may be used to update the features of the target node. When training an inductive framework of graph neural network, the parameters being trained may be the parameters according to which the node features are combined. Consequently, and since node features may be defined based on features of neighboring nodes, an advantage of using an inductive framework may be that new nodes may be added to the graph without a need for re-training. Similarly, nodes may be removed from the graph without the need for re-training.

One or more aspects of the disclosure may be embodied in computer-usable data and computer-executable instructions, such as in one or more program modules, executed by one or more computers or other devices (e.g., processor(s)). Generally, program modules include routines, programs, objects, components, data structures, etc. that perform particular tasks or implement particular abstract data types when executed by a processor in a computer or other device. The computer executable instructions may be stored on a computer readable medium such as a hard disk, optical disk, removable storage media, solid state memory, RAM, etc.

As will be appreciated by one of skill in the art, the functionality of the program modules may be combined or distributed as desired in various embodiments. In addition, the functionality may be embodied in whole or in part in firmware or hardware equivalents such as integrated circuits, field programmable gate arrays (FPGA), and the like. Particular data structures may be used to more effectively implement one or more aspects of the disclosure, and such data structures are contemplated within the scope of computer executable instructions and computer-usable data described herein.

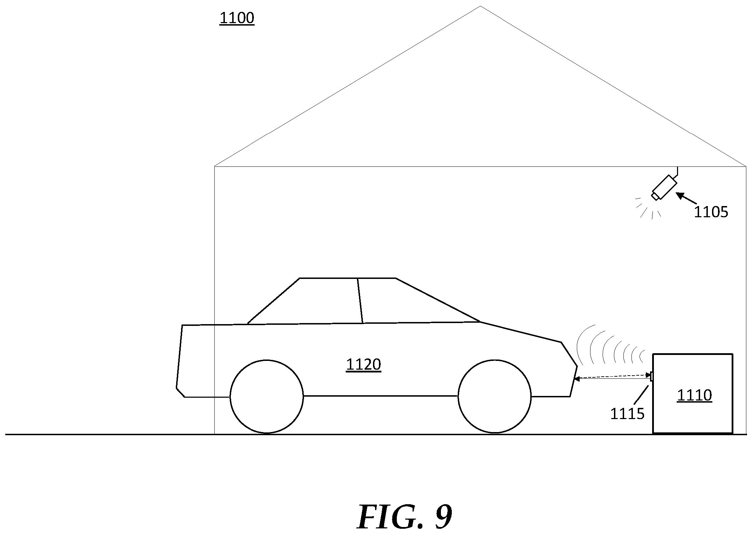

FIG. 9 shows an example of perimeter protection for energy storage devices. One or more energy storage devices (e.g., battery packs, batteries) 1110 may be positioned in a premises 1100, for example, a garage. Hazards for the energy storage devices 1110 may exist in a location such as a garage. For example, high ambient temperature may cause overheat or even fire in the batteries. Battery casings may melt, for example, due to thermal runaway. A moving object such as a vehicle (e.g., a car) 1120 may collide with energy storage devices, for example, when the vehicle 1120 is entering the garage. The collision may cause damage to the energy storage devices, which may lead to fire or even explosion.

One or more energy storage devices (e.g., battery packs, batteries) 1110 may comprise one or more sensors 1115, for example, installed on or outside an outer casing of energy storage devices 1110. The one or more sensors 1115 may comprise one or more of sensors including proximity sensor, vibration sensor, accelerometer, optical sensor (e.g., camera), infrared sensor, strain gauge, etc. The one or more sensors 1115 may be used to detect the presence of a moving object (e.g., a vehicle) 1120, a speed of the moving object, momentum of the moving object, collision with the moving object, etc. For example, the one or more sensors 1115 may comprise one or more proximity sensors. The proximity sensors may detect the presence of a moving vehicle (e.g., a car) 1120 near a battery pack 1110 (e.g., within 3 meters or 10 feet of the battery pack 1110, or at any other distance). The proximity sensors may be capable of measuring the speed of the vehicle 1120. For example, the proximity sensors may be Doppler radar sensors. These sensors may transmit electromagnetic (e.g., radio) waves and may detect Doppler shift in the frequency of electromagnetic waves reflected off the vehicle 1120. Speed of the moving vehicle 1120 may be measured, for example, based on the detected Doppler shift. For example, the one or more sensors 1115 may comprise one or more vibration sensors. The vibration sensors may detect vibrations caused by movement of, for example, a vehicle. The vibrations may indicate that the vehicle is a large one and may have too much momentum to stop. For example, the one or more sensors 1115 may comprise one or more strain gauges (e.g., installed on an outer casing of a battery pack 1110). The strain gauges may measure a strain (i.e., deformation or displacement of material caused by applied stress) in the energy storage devices 1110. For example, a strain gauge may detect a strain in an outer casing of a battery pack 1110, which may be caused by a collision of the moving vehicle 1120 with the battery pack 1110. Additionally, or alternatively, the one or more sensors 1115 may comprise one or more temperature sensors to monitor temperature on the premises (e.g., in the garage). For example, an increasing temperature (or an increasing rate or pattern) may indicate that there is a future risk of damage to the energy storage devices. Additionally, or alternatively, the one or more sensors 1115 may comprise one or more combustible or flammable gas sensors. These gas sensors may detect flammable and explosive atmospheres surrounding the energy storage devices. For example, an electric bicycle (or e-bike, scooter, etc.) may be parked next to the energy storage devices. Battery cells of the electric bicycle may get on fire due to short circuit, battery damage, etc. The fire may develop very fast and may spread to the energy storage devices and cause bigger fire. Flammable gases may be vented from the battery cells of the electric bicycle before thermal runaway happens. The gas sensors may detect the flammable gases, and precautions may be taken before fire starts, so as to minimize the damage associated with the energy storage devices. Examples of the gas sensors may include catalytic bead sensors, metal oxide semiconductor (MOS) sensors, electrochemical sensors, etc. Infrared sensors may also be used to detect gases of interest.

Alternatively, or additionally, one or more sensors 1105 installed near energy storage devices (e.g., battery packs, batteries) 1110 may be used to detect presence and/or speed of a moving object (e.g., a vehicle) 1120 in a premises (e.g., garage) 1100. The one or more sensors 1105 may comprise one or more of sensors including optical sensors (e.g., cameras), infrared sensors, etc. The one or more sensors 1105 may be installed in the premises 1100 (e.g., on the wall(s), ceiling, furniture, etc.). For example, a camera installed on a ceiling of a garage may be used to detect the presence of a moving object (e.g., vehicle, car) 1120 and to estimate the speed and/or acceleration rate of the moving object, for example, based on pictures (or frames) captured by the camera. Additionally, or alternatively, the camera may measure a distance between the moving object (e.g., vehicle, car) 1120 and energy storage devices 1110. For example, an infrared sensor may be used to detect motion, for example, when there is insufficient light for imaging (e.g., in the dark). For example, the one or more sensors 1105 may be part of another system such as a home security system.

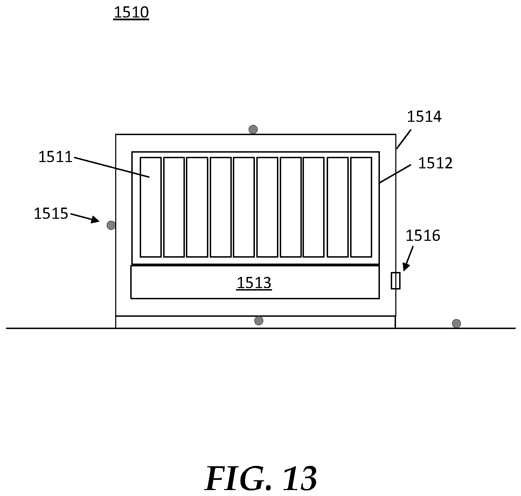

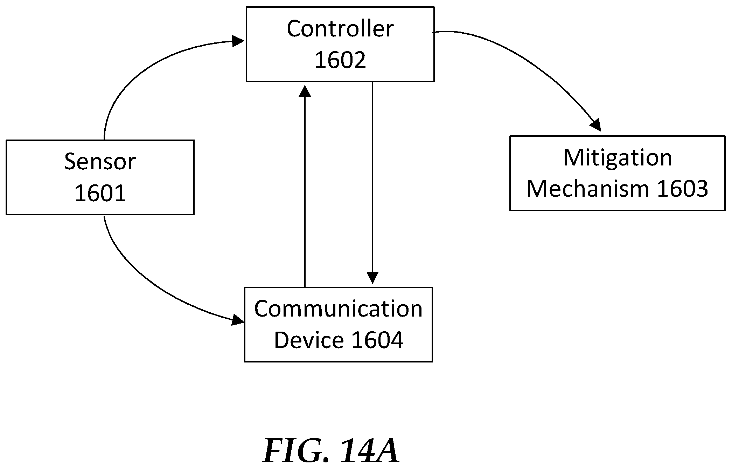

External conditions such as speed, acceleration rate of the moving object (e.g., vehicle, car) 1120, and a distance between the moving object 1120 and the energy storage devices (e.g., a battery pack) 1110, may be used to determine (e.g., calculate) whether there is a high-risk condition (e.g., a threatening event) with respect to the energy storage devices such as a battery pack 1110. The high-risk condition is capable of damaging the energy storage device when the high-risk condition reaches the energy storage device. For example, the high-risk condition may be a collision, an imminent collision, or a future collision between the moving object 1120 and the energy storage device 1110. Presence of a high-risk condition may be determined, for example, when a moving object (e.g., vehicle, car) 1120 moves towards energy storage device 1110 at a speed that may cause damage. For example, the speed may be above zero and there may be no or insufficient deceleration, so that the moving object 1120 will collide with the energy storage device 1110 based on (e.g., upon) completing a distance. Presence of a high-risk condition may be determined, for example, when a strain beyond a predetermined value is detected in energy storage devices 1110. Such strain may indicate collision or damage to the energy storage devices 1110. A controller (e.g., controller 1602 in FIG. 14A) may be used to perform the determination (e.g., calculation) of a high-risk condition. The controller may be implemented by, for example, a battery management system (e.g., battery management system (BMS) device 1513 in FIG. 13) of the energy storage devices 1110. Additionally, or alternatively, the controller may be located outside the energy storage devices 1110 (e.g., in a remote device such as a computer).

One or more actions may be determined, for example, based on the high-risk condition. For example, the actions may be determined by the controller. The one or more actions may comprise mitigation actions which intend to mitigate the damage to the energy storage devices, caused or to be caused by the high-risk condition. The mitigation actions may comprise, for example, sending instructions to an approaching vehicle (e.g., car) to apply brakes. The mitigation actions may comprise, for example, shifting the energy storage devices to a safety mode. Internal thermal activity may be prevented or minimized in a safety mode. For example, the energy storage devices may be shifted to the safety mode by rapidly discharging (or reducing state of charge of) the energy storage devices. An energy storage device with lower state of charge (e.g., lower than 50%, preferably under 30%, 20%, or 10%) may be less reactive or less risky of thermal runaway (e.g., when the vehicle collides with the energy storage device) and may cause less harm to the surroundings, for example, due to less gases and carbon particles and less venting. The mitigation actions may comprise any other actions that may reduce the damage to the energy storage devices, for example, based on the high-risk condition (e.g., an approaching vehicle). Alternatively, or additionally, the one or more actions may comprise sending notifications or alerts based on the high-risk condition. The notifications or alerts may indicate that damage may have occurred or might occur. The notifications or alerts may be used to solicit caution or help. For example, an alarm may sound when a moving object is detected adjacent to a battery pack. For example, a driver of a vehicle entering a garage may receive sound or verbal alerts from a battery pack to stay away from the battery pack (e.g., by stopping or redirecting the vehicle). For example, a homeowner may receive a notification (e.g., on a phone) when his or her battery pack is detected to be damaged. A controller such as a battery management system and/or an external controller may be used to determine and instruct the one or more actions.

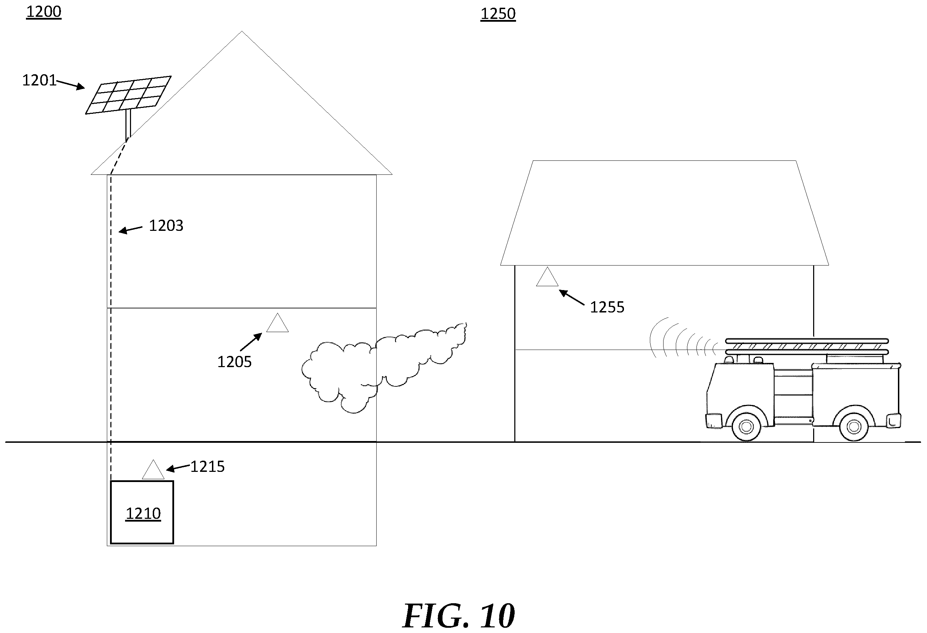

FIG. 10 shows an example of perimeter protection for energy storage devices. One or more energy storage devices (e.g., battery packs, batteries) 1210 may be positioned in a premises 1200. The premises 1200 may be a residential house, an apartment building, a warehouse, etc. The premises 1200 may comprise one or more stories. The premises 1200 may or may not comprise a basement. In the example of FIG. 10, the battery pack 1210 may be placed in a basement of the premises 1200. The battery pack 1210 may be connected with solar panels 1201, for example, via electrical wires 1203. The battery pack 1210 may be used to store electricity generated by the solar panels 1201. The solar panels 1201 may be located on the premises 1200, for example, on a roof. The premises 1200 may be located in a community and may be near other premises 1250. Fire hazards from the premises 1200 and/or other premises 1250 in the neighborhood may affect the battery pack 1210. For example, a nearby (e.g., neighboring) premises 1250 may be on fire. For example, a fire may happen on a different floor of a same building where the battery pack 1210 is located. The fire may spread to an adjacent area of the battery pack 1210 and/or the environmental temperature may rise. The battery pack 1210 may be damaged and/or may cause further damage to the building. For example, as described herein with respect to FIG. 9, an electric bicycle parked near the battery pack 1210 may pose a fire hazard to the battery pack 1210.

The energy storage devices (e.g., battery packs, batteries) 1210 may comprise one or more sensors 1215 for detecting external conditions such as fire, smoke, gas, high or rising temperature, etc. The sensors 1215 may be located on the energy storage devices, for example, on or outside a casing (or cabinet, box, etc.) of the energy storage devices. The sensors 1215 may comprise one or more of sensors including fire sensor, smoke sensor, gas sensor, thermal radiation sensor, temperature sensor, acoustic sensor, etc. For example, the smoke sensor may comprise ionization smoke detector, photoelectric smoke detector, etc. The sensors 1215 may be used to detect fire, smoke, high or rising temperature, etc. in a direct vicinity of the energy storage devices 1210 (e.g., in the basement).

Additionally, or alternatively, the energy storage devices (e.g., battery packs, batteries) 1210 may be associated with one or more sensors 1205 in or outside the premises 1200. The sensors 1205 may comprise one or more of sensors including fire sensor, smoke sensor, gas sensor, thermal radiation sensor, temperature sensor, acoustic sensor, etc. For example, as shown in FIG. 10, a sensor such as a smoke detector 1205 may be located on a ceiling of a floor (e.g., first floor) of a building 1200. Smoke from the fire at the premises 1250 may enter the building 1200 (e.g., through a window) and may be detected by the smoke detector 1205. For example, sensors associated with a fire alarm system in the building 1200 may be used. Signals from the one or more sensors (e.g., smoke detector) 1205 may be transmitted, and may be received by a controller (e.g., controller 1602 such as the BMS device 1513 or an external controller), for example, via a communication device (e.g., communication device 1516 in FIG. 13, communication device 1604 in FIG. 14A). Information from the signals (e.g., detection of smoke) may be used for determining when there is a high-risk condition. The communication device may interface with other systems and may collect data or information that is relevant to the assessment to avoid damage, an imminent damage, or a risk/probability of future damage.

Additionally, or alternatively, the energy storage devices (e.g., battery packs, batteries) 1210 may communicate with other sources. For example, the energy storage devices may receive signals from a neighborhood resource. For example, the controller may receive signals from one or more sensors 1255 in a neighborhood premises 1250, for example, via a wireless network (e.g., Wi-Fi®, Bluetooth®, near-field communication (NFC), radio frequency identification (RFID), etc.). For example, a thermal radiation sensor inside a neighboring building that is on fire may detect high thermal radiation. The thermal radiation sensor may transmit signals via a wireless network. The controller may receive the signals from the thermal radiation sensor, for example, via the communication device and/or via one or more sensors 1215. The energy storage devices may send signals to other sources. For example, the controller may notify homeowners, neighbors, the community, etc. of a fire or an imminent fire. The other sources may comprise other devices, systems, and/or entities. For example, the energy storage devices (e.g., battery packs, batteries) 1210 may communicate with a home security system, an emergency responder broadcaster, etc. For example, the energy storage devices may receive notifications of fire from public resources such as the fire station, a fire truck, a community center, etc. For example, the energy storage devices may share information of fire in a home with a home security system, for example, to sound an alarm and/or to notify the emergency responders.

The presence or absence of a high-risk condition may be determined, for example, based on the received signals and/or information. Examples of the high-risk condition or critical external condition may include detection of fire, continued existence of smoke, critical temperature (e.g., high or rising ambient temperature beyond a threshold), siren, etc., information of fire and so on. One or more actions may be determined, for example, based on the high-risk condition. The one or more actions may comprise mitigation actions and/or sending notifications or alerts. The mitigation actions may comprise, for example, rapid discharging (or reducing state of charge of) the energy storage devices. An energy storage device with lower state of charge (e.g., lower than a threshold such as 10%, 20%, 30%, 40%, or 50% depending on the specific electrochemistry of the electrochemical cells of the storage devices) may be less reactive (e.g., when the fire reaches the energy storage device) and may cause less harm to the surroundings, for example, due to reduced cell venting and flammable gases. The mitigation actions may comprise, for example, activating a mitigation mechanism or safety mechanism (e.g., an insulating mechanism) in energy storage devices. The mitigation or safety mechanism may prevent internal thermal activity in the energy storage devices. For example, the insulating mechanism may produce and distribute (e.g., fill) fire-blocking materials (e.g., foam such as an intumescent foam) in a space between energy storage cells (e.g., energy storage cells 1511 in FIG. 13) and an outside casing (e.g., outer casing 1514 in FIG. 13). The fire-blocking materials may insulate the battery cells from the fire and heat outside, which may prevent thermal runaway or explosion. An example of fire-block foam may be 3M™ fire block foam. Alternatively, or additionally, the controller may trigger an alarm, for example, to notify people in the premises of the fire. For example, the energy storage devices may comprise or be connected with an alarm device (e.g., bell, speaker). For example, the controller may send instructions to another system (e.g., fire alarm system) to generate an alarm. For example, the controller may send notifications to relevant people (e.g., homeowner, first responders) to seek help, inspection, or preparations with protecting the energy storage devices.

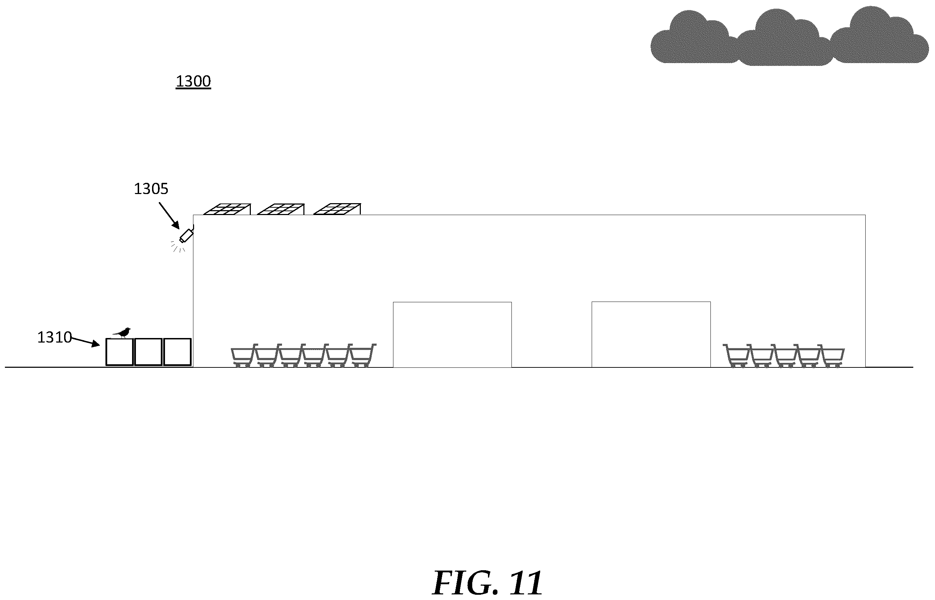

FIG. 11 shows an example of perimeter protection for energy storage devices. One or more energy storage devices (e.g., battery packs, batteries) 1310 may be positioned on or near a premises 1300. For example, the energy storage devices 1310 may be placed in the open air. An open air environment may expose the energy storage devices 1310 to more varieties and multi-levels of hazards from people (e.g., kids), animals (e.g., pets, wild animals, birds), severe weather, etc. For example, the premises 1300 may be used as a shopping center (e.g., a grocery shop or other shop). The premises 1300 may comprise a building with a generally flat rooftop where solar panels may be installed. One or more energy storage devices (e.g., battery packs, batteries) 1310 may be placed in the open air near the building for storing electricity generated from the solar panels. The energy storage devices 1310 may be exposed to an environment with various moving objects or conditions. For example, there may be children playing near the devices 1310. The children may chase each other, kick a ball, or try to hit each other with toy weapons (e.g., toy sword). They may accidently bump into or tamper the devices as they chase and run. Pets such as dogs may sniff or pee on the devices. Wild animals such as stray dogs, squirrels may bite, hit the devices. Birds may occasionally land on the devices, shit, or even nest on the devices. Vehicles such as shopping carts may collide with the devices. Electric bikes may be parked next to the devices. Severe weather such as hurricanes, tornados, hails, storms, lightening, wind, floods, meteor showers may provide an environment that may be difficult for the energy storage devices. For example, flying objects such as tree branches and/or stones in strong winds may cause damage to the devices. Rain water from the top and/or flood water from the ground may indicate a threat to the safety of the devices, for example, when an outer casing of an energy storage device is broken and there is water dripping on the device. Multi-levels of damage may be done to the devices. For example, an energy storage device may experience physical damage in an outer casing (e.g., from animal bites) and then a storm. The combined conditions may be more of a risk than an individual condition.

For severe weather conditions, it may also be beneficial to lower the state of charge as a precautionary action, for example, to reduce possible chemical reactions caused by, for example, short circuit. For example, an owner of an energy storage device (e.g., a battery pack) may get a notification of a severe weather forecast and may be given an option to discharge the device to a safer level. For example, the owner may choose not to discharge the device or to discharge it less, for example, when the owner needs battery power urgently and is willing to take a risk of damaging the device. To discharge the device, with the existence of water (e.g., rain water), it may be applicable to use electricity from the device to perform electrolysis. In addition, or alternatively, to receiving weather forecasts, sensors may be used to detect ambient conditions such as temperature, humidity for the energy storage devices.

The energy storage devices (e.g., battery packs, batteries) 1310 may utilize sensors available in this environment to monitor external conditions. For example, one or more optical sensors (e.g., security cameras) 1305 on the premises 1300 may be used to monitor movements of people, animals, and/or objects, and/or to measure proximity, distance, speed, acceleration rate etc. associated with moving people, animals, and/or objects. Additionally, or alternatively, the energy storage devices 1310 may be equipped with one or more of sensors such as vibration sensor, proximity sensor, strain gauge, optical sensor, infrared sensor, gas sensor, humidity sensor, temperature sensor, acoustic sensor, etc. For example, energy storage devices 1310 may comprise strain gauge and/or proximity sensor to detect ongoing or upcoming collisions. For example, energy storage devices 1310 may comprise vibration sensor to detect situations such as damage to a building or an earthquake (e.g., in California). For example, energy storage devices 1310 may comprise humidity sensor to detect rain or flood. Signals from the sensors on or near the energy storage devices 1310 may be received by a controller (e.g., controller 1602 such as the BMS device 1513 or an external controller). Additionally, or alternatively, the controller may receive information from other sources. For example, the controller may receive notifications about an incoming rain, for example, from a weather station. External conditions, for example, information from the signals (e.g., detection of vibration) and/or notifications, may be used for determining when there is a high-risk condition.

One or more actions may be determined, for example, based on the high-risk condition. The one or more actions may comprise mitigation actions and/or sending notifications or alerts. The mitigation actions may comprise, for example, rapid discharging (or reducing state of charge of) the energy storage devices. The mitigation actions may comprise, for example, activating a mitigation mechanism or safety mechanism (e.g., an insulating mechanism) in energy storage devices. The energy storage devices may send notifications or alerts. For example, the energy storage devices may play a sound to scare birds or wild animals away. For example, the energy storage devices may verbally warn people not to come close for their own safety. For example, the energy storage devices may send notifications to relevant management for precautions or measures against bad weather (e.g., flood). The alerts or warnings may comprise more than one level or stage, for example, based on more than one level of threat or damage. For example, an energy storage device (e.g., a battery pack) may detect collision and damage in an outer casing. A first alert (or notification) may be sent (e.g., to a maintenance team) indicating a first high-risk condition to the energy storage device. Later, a second alert may be sent indicating a second high-risk condition to the energy storage device, for example, based on detection of continual presence of water. The second alert may be a higher-level warning which may suggest higher importance or urgency regarding safety of the energy storage device. The controller may be programmed or trained to identify and provide different levels of alert for different conditions or combination of conditions, as well as evolvement of a condition (or event). For example, a lower level alert or no alert may be sent for a raining event, when a previous event suggesting damage of an energy storage device does not exist. For example, an alert may increase its level (e.g., alarm becomes louder) along with a decreasing distance between a moving object (e.g., a vehicle) and an energy storage device.

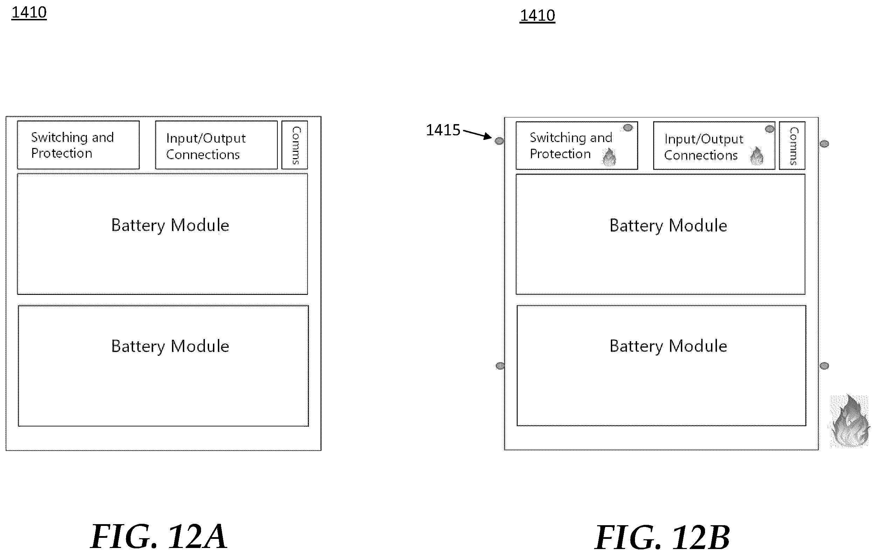

FIG. 12A shows an example energy storage device, and FIG. 12B shows example locations of sensors on the energy storage device. The example energy storage device shown in FIG. 12A and FIG. 12B shows a plurality of function blocks such as battery modules (or groups of energy storage cells or battery cells), switching and protection, input/output connections, and communications. Fire related to an energy storage device may be initiated outside energy storage cells (or battery cells). For example, welded contactors, incorrect input/output wirings, etc. may cause heat or sparks generated by electric voltage or current, which may cause fire in the energy storage device. High temperature in the adjacent vicinity of the energy storage device may contribute to thermal runaway or fire in the energy storage device. Flammable atmospheres surrounding the energy storage device (e.g., from a parked electric bicycle) may start a fire and spread the fire to the energy storage device. Monitoring these peripheral components and external conditions of an energy storage device may achieve benefits such as enabling earlier discovery and reaction, increasing reaction time, deterring or avoiding fires, etc.

FIG. 12B shows a plurality of sensors 1415 and example locations of the sensors 1415 on the energy storage device 1410. For example, one or more sensors 1415 may be provided at/near switches and/or wirings, so that excessive heat or electric sparks may be detected in time. The one or more sensors 1415 may be located outside the energy storage cells (or battery cells) and inside or on an outer casing (or cabinet) of the energy storage device 1410. The one or more sensors 1415 may comprise one or more of sensors including temperature sensor, voltage sensor, current sensor, gas sensor, etc. For example, an array of external temperature sensors may be installed on or near an outer casing (or cabinet) of the energy storage device 1410, to create a protective perimeter around the energy storage device. For example, the external temperature sensors may monitor temperatures at the switching and protection section, input/output section, external cabinet wall, mounting structure for the battery cells, ground near the energy storage device, other nearby external locations, etc. For example, voltage sensors may be used to detect voltages of the input/output section. Signals from the one or more sensors 1415 may be sent to a controller such as a battery management system device (not shown) and/or an external controller. The controller may monitor sensor data and may trigger safety and notification systems, for example, based on detected ambient temperatures. Actions and/or notifications may occur, for example, before ignition or damage to the battery cells.

FIG. 13 shows an example structure of an energy storage device. The energy storage device in FIG. 13 shows a plurality of function blocks. An energy storage device (e.g., a battery pack) 1510 may comprise a plurality of energy storage cells (e.g., battery cells) 1511. The plurality of energy storage cells 1511 may be installed/mounted in a mounting structure (e.g., an inner casing) 1512. The energy storage device 1510 may comprise a battery management system (BMS) device 1513. The BMS device 1513 may be positioned, for example, under the plurality of energy storage cells 1511. The BMS device 1513 may serve as a controller for perimeter protection for the energy storage device 1510. The energy storage device 1510 may comprise an outer (or external) casing 1514 for covering (e.g., enclosing) the plurality of energy storage cells 1511, the mounting structure 1512, and the BMS device 1513. As indicated in FIG. 13, one or more sensors (e.g., a plurality of sensors) 1515 may be positioned on/under/outside the outer casing 1514. The sensors 1515 may also be located in or inside the outer casing 1514, as long as they are able to detect external conditions for the energy storage device 1510. For example, the outer casing 1514 may have an opening (e.g., a window) to reveal the sensors. Alternatively, or additionally, one or more sensors (e.g., a plurality of sensors) 1515 may be positioned near or adjacent to the outer casing 1514, for example, on the premises where the energy storage device 1510 is located. The sensors 1515 may be configured to detect one or more external conditions. The sensors 1515 may be configured to monitor the immediate and distal environment of the energy storage device 1510. The sensors 1515 may comprise one or more of sensors including optical sensor (e.g., camera), infrared sensor, gas sensor, proximity sensor, vibration sensor, strain gauge, fire sensor, smoke sensor, radiation sensor, temperature sensor, acoustic sensor, etc. The energy storage device 1510 may comprise a communication device 1516. The communication device 1516 may be located, for example, on the outer casing 1514 for transmitting/receiving signals. For example, the communication device 1516 may be associated with communicating with an external information resource (e.g., a fire station, neighbor's sensors) for a high-risk condition (e.g., nearby fire). For example, the communication device 1516 may be associated with sending notifications and/or alerts, based on one or more high-risk conditions.

Although not shown in FIG. 13, there may be one or more separate controllers associated with the energy storage device 1510. The one or more separate controllers may be located in/on the energy storage device 1510, and/or may be located outside (e.g., remotely from) the energy storage device 1510. The one or more controllers (e.g., the BMS device 1513 and/or other controller(s)) may be configured to determine a high-risk condition with respect to the energy storage device 1510, for example, based on the one or more external conditions (e.g., by analyzing sensor data). The high-risk condition may be a condition that is capable of causing immediate, imminent or future damage to the energy storage device 1510. The one or more controllers may be configured to determine and/or implement one or more actions, for example, based on one or more high-risk conditions. For example, the one or more controllers may be configured to instruct the plurality of energy storage cells 1511 to discharge, for example, based on one or more high-risk conditions. For example, the one or more controllers may be configured to instruct a moving object (e.g., a vehicle) to brake, based on one or more high-risk conditions. For example, the one or more controllers may be configured to activate/trigger an insulating mechanism, based on one or more high-risk conditions. The insulating mechanism may be configured to produce fire-blocking materials such as foam. For example, the one or more controllers may be configured to send notifications or alerts associated with one or more high-risk conditions.

FIG. 14A shows example control paths associated with perimeter protection for energy storage devices. Sensor 1601 may send data to controller 1602, directly or via communication device 1604. Sensor 1601 may comprise one or more sensors of optical sensor, proximity sensor, smoke sensor, vibration sensor, etc. as described herein with respect to other figures. Sensor 1601 may be located in the one or more energy storage devices and/or externally to the energy storage devices. Examples of sensor 1601 may be sensors 1105, 1115, 1205, 1215, 1255, 1305, 1415, 1515. Controller 1602 may comprise one or more of: a battery management system (e.g., BMS device 1513) in an energy storage device; or external controller(s). Communication device 1604 may comprise one or more of: part of an energy storage device (e.g., communicating device 1516); or external communication device(s). Sensor 1601 may send data such as detected temperature, speed, smoke etc. to controller 1602 directly, for example, when sensor 1601 and controller 1602 are both located on the energy storage device. Sensor 1601 may send data to controller 1602 via communication device 1604, for example, when the sensor 1601 and/or the controller 1602 is located externally to the energy storage device.

Controller 1602 may analyze data from sensor 1601 and may determine one or more actions based on the data. For example, controller 1602 may determine presence or absence of a high-risk condition, based on the data from sensor 1601. The controller 1602 may determine one or more actions, for example, based on presence of a high-risk condition. The one or more actions may comprise mitigation actions and/or sending notifications or alerts. Mitigation actions may be implemented by mitigation mechanism 1603. For example, mitigation mechanism 1603 may comprise an insulation mechanism as described herein. For example, mitigation mechanism 1603 may comprise mechanisms for discharging the energy storage devices. Examples may include connecting high wattage appliances such as air-conditioners, dryers, boilers, ovens, heaters, fans, electrical vehicle chargers, etc. with the energy storage devices to discharge the energy storage devices. Additionally, or alternatively, a dedicated discharging mechanism may be provided to rapidly discharge the energy storage devices. For example, a dedicated discharging mechanism may comprise resistors and a heat sink for cooling or dissipating the heat generated by the resistors. For example, the resistors may be electric heat coils and the heat sink may be an electric cooler that generates cool air or liquid to cool the heat coils. Notifications or alerts may be sent via communication device 1604. Signals (e.g., commands) may be sent via communication device 1604 to an approaching vehicle, for example, to instruct the vehicle to brake or to move away from the energy storage devices. For example, alerts may be sent to a person or a second vehicle in the garage/premises. For example, an alert may be sent to instruct the garage door to open so that the vehicle may park outside. For example, warning sounds may be generated by communication device 1604.

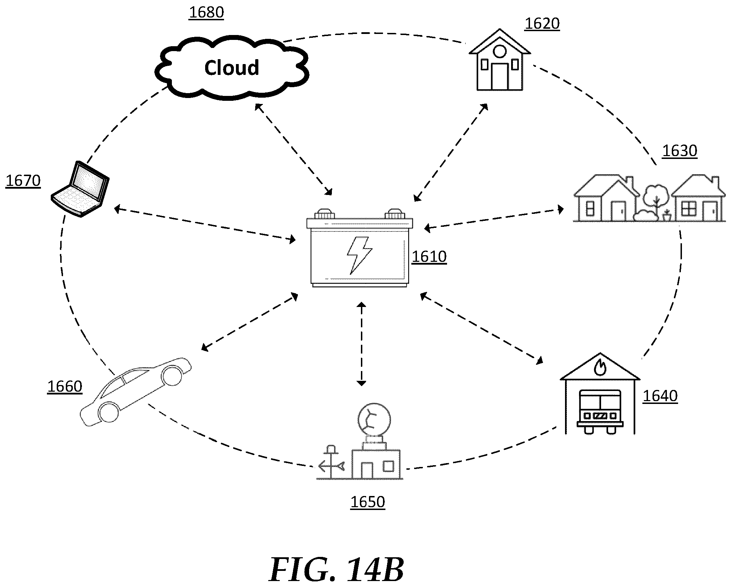

FIG. 14B shows external communications associated with energy storage devices. For example, an energy storage device (e.g., a battery pack) 1610 may be communicatively connected with a premises (e.g., house) 1620, a community (or neighborhood) 1630, a fire station 1640, a weather station 1650, a moving object such as a car 1660, a computing device 1670, and/or a cloud 1680. The communications may be one-way or two-way communications. For example, an energy storage device (e.g., a battery pack) 1610 may be located in a house 1620. The energy storage device 1610 may receive signals from one or more sensors (e.g., smoke sensors) in the house 1620, and/or may send notifications to the house 1620 (e.g., to a home security system). For example, an energy storage device 1610 may receive notifications (e.g., about fire, weather) broadcast in a community 1630 where the energy storage device 1610 is located, and/or may send notifications (e.g., about fire) to the community 1630. For example, an energy storage device 1610 may receive notifications about fire from a fire station 1640, and/or may send notifications about fire to the fire station 1640. For example, an energy storage device 1610 may receive notifications about weather (e.g., flash flooding) from a weather station 1650, and/or may send notifications about weather to the weather station 1650 (e.g., to share information about local temperature, humidity, etc.). For example, an energy storage device 1610 may receive magnetic waves reflected from a moving object such as car 1660 for calculation of distance, speed, etc., and/or may send instructions to the car 1660 for the car to brake. For example, an energy storage device 1610 may communicate with an external controller, for example, located in a computing device 1670 (e.g., a desktop computer, a laptop, a tablet, a smart phone, etc.). The energy storage device 1610 may share information (e.g., received from sensors) with the computing device 1670, and/or may receive processed information and/or instructions from the computing device 1670. For example, an energy storage device (e.g., a battery pack) 1610 may communicate with a cloud 1680 that may communicate with a plurality of energy storage devices (e.g., battery packs) in different locations. The energy storage device 1610 may share information with other energy storage devices, and/or may receive information from other energy storage devices. For example, an energy storage device 1610 may notify other energy storage devices in a same building that smoke has been detected. Other energy storage devices may determine whether to notify their owners or take actions as a precaution based on the information.

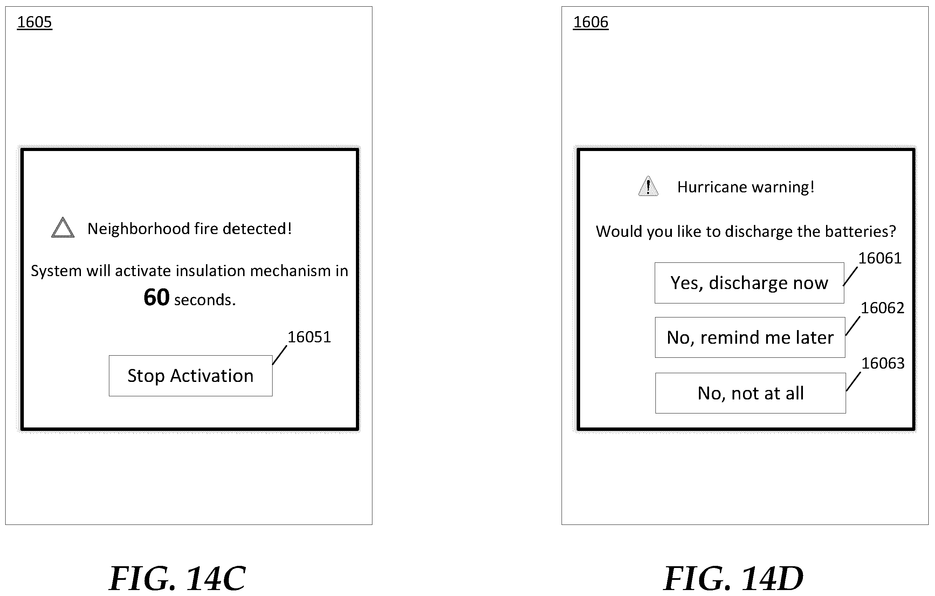

FIG. 14C and FIG. 14D show two example interfaces for human-machine communications. In FIG. 14C, a notification may appear (e.g., pop up) on a screen 1605, for example, in a form of a dialog box. The notification may include texts, icons, buttons, or any other digital components that may enable conveyance of information to a user and/or interaction with a user. For example, in FIG. 14C, a notification may inform a user (e.g., an owner or manager of the energy storage devices (e.g., battery packs) of a neighborhood fire. The notification may suggest triggering or activating an insulation mechanism as described herein, for example, as the danger is imminent. An interaction component such as a button 16051 may be provided to give the user an option to interact with the system, for example, to stop the activation of the insulation mechanism. FIG. 14D shows another example interface. In the example of FIG. 14D, a notification may warn a user of a hurricane and may ask the user when he or she would like to discharge the batteries as a precaution. The user may be given several options such as shown by buttons 16061, 16062, and 16063. For example, the user may press button 16061 to discharge the batteries right then. For example, the user may have doubts about the threat of this hurricane and choose to wait by pressing the button 16062. For example, the user may need battery power urgently and be willing to take risks. In that case, the user may press the button 16063 to dismiss the discharging and further reminders. In either examples, after the user interacts on the interface, a controller (e.g., the BMS device 1513 and/or other controller(s)) may make corresponding determination and/or instructions with respect to the energy storage devices. For example, there may be one or more follow-up notifications to confirm with the user or to convey the determination.

The content and form of the notification are not limited to the examples. Any other content or form (e.g., layout, text, digital components, etc.) may be used as long as they are applicable. The screens 1605 and 1606 may be any screens applicable, for example, phone screen, computer screen, home control panel, etc. The interface may be generated by an APP or other software. The interface may be customizable based on specific conditions and needs such as types, brands, models, conditions and available functions of the energy storage devices, geographic location of the devices, time of year, neighborhood conditions, user preferences, etc. For example, there may be additional interfaces for a user to input information that may be used for the customization.

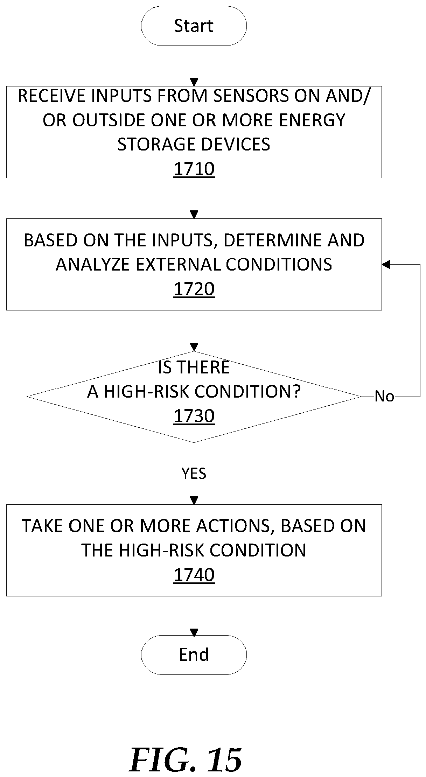

FIGS. 15-17 show example methods of perimeter protection for energy storage devices. One or more steps of FIG. 15, FIG. 16, or FIG.17 may be performed by a computing device (e.g., the BMS device 1513 in FIG. 13, the controller 1602 in FIG. 14A, and/or the computing device 1670 in FIG. 14B).

In FIG. 15, at step 1710, a computing device (e.g., the BMS device 1513 in FIG. 13, the controller 1602 in FIG. 14A, and/or the computing device 1670 in FIG. 14B) may receive inputs from one or more sensors on and/or outside (e.g., near) one or more energy storage devices (e.g., the energy storage device 1110, 1210, 1310, 1410, 1510, 1610 as described with respect to FIGS. 9-14B). The inputs or data from one or more sensors may be received via internal communication paths (e.g., wires) in energy storage devices, for example, when the one or more sensors and the computing device are located in the energy storage devices. The inputs or data from one or more sensors may be received via a wireless network (e.g., Wi-Fi®, Bluetooth®, near-field communication (NFC), radio frequency identification (RFID), etc.), for example, when the one or more sensors or the computing device are located external to the energy storage devices.

At step 1720, the computing device may determine and analyze external conditions (e.g., temperature, fire, moving object, etc. external to the energy storage devices), for example, based on the inputs. The computing device may process data from the one or more sensors. For example, the computing device may clean raw data, change data into a usable format, normalize the data, extract meaningful points and/or patterns from the data, etc. These processes are well-known in relevant fields and are not described in detail herein.

At step 1730, the computing device may determine when there is a high-risk condition, for example, based on the external conditions. The computing device may be programmed or trained to identify external conditions that may indicate a high-risk condition. For example, a high-risk condition may be determined, when detected temperature at an outer casing of an energy storage device exceeds a predetermined value. For example, a high-risk condition may be identified, when a vehicle is estimated to reach an energy storage device at a non-zero speed. Machine learning technologies may be used to train a computing device using a large amount of data indicating critical external conditions that may cause damage to an energy storage device.

At step 1740, the computing device may take one or more actions, for example, based on the high-risk condition. The computing device may take one or more mitigation actions such as instructing a vehicle to brake or rapidly discharging an energy storage device, for example, based on the presence of a high-risk condition. Alternatively, or additionally, the computing device may send notifications or alerts to relevant entities, for example, to seek mitigation, caution, inspection, etc.

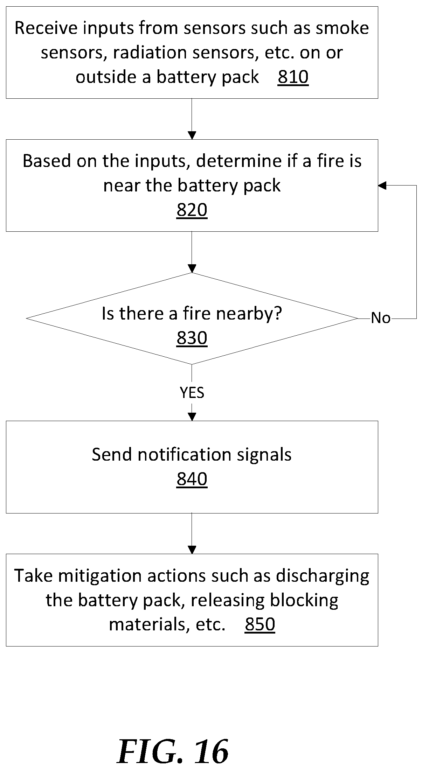

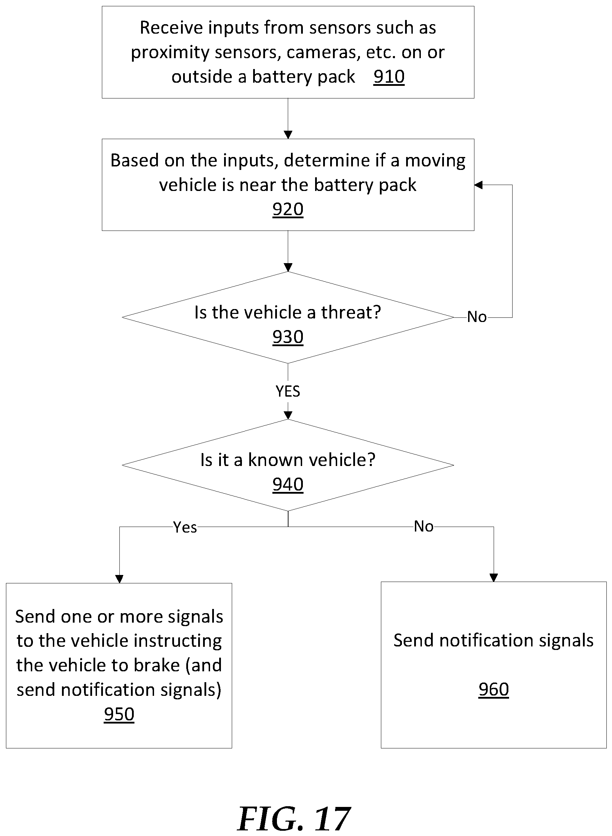

FIG. 16 and FIG.17 show two examples of the method in FIG. 15. In FIG. 16, at step 1810, a computing device (e.g., the BMS device 1513 in FIG. 13, the controller 1602 in FIG. 14A, and/or the computing device 1670 in FIG. 14B) may receive inputs from one or more sensors such as smoke detectors, radiation sensors, gas sensors, on or near a battery pack (e.g., the battery pack 1110, 1210, 1310, 1410, 1510, 1610 as described with respect to FIGS. 9-14B). At step 1820, the computing device may determine when a fire is near the battery pack, for example, based on the inputs. At step 1830, the computing device may determine when the fire is nearby, and based on the answer being yes, the computing device may send notification signals (at step 1840) and/or take mitigation actions such as discharging the battery pack, releasing blocking materials, etc. (at step 1850).

In FIG.17, at step 1910, a computing device (e.g., the BMS device 1513 in FIG. 13, the controller 1602 in FIG. 14A, and/or the computing device 1670 in FIG. 14B) may receive inputs from one or more sensors such as proximity sensors, cameras, etc., on or near a battery pack (e.g., the battery pack 1110, 1210, 1310, 1410, 1510, 1610 as described with respect to FIGS. 9-14B). At step 1920, the computing device may determine when a moving vehicle is near the battery pack, for example, based on the inputs. At step 1930, the computing device may determine when the vehicle is a threat. The computing device may determine that the vehicle is a threat, for example, when the vehicle is going to hit the battery pack. For example, the computing device may determine (e.g., calculate) a moving path for the vehicle crossing the battery pack. For example, the computing device may determine (e.g., calculate) a speed of the vehicle being non-zero when the vehicle reaches the battery pack. At step 1940, the computing device may determine when the vehicle is a known vehicle, for example, when the vehicle is determined to be a threat. The computing device may take actions, for example, based on the vehicle being determined as a threat. At step 1950, the computing device may send one or more signals to the vehicle instructing the vehicle to brake, for example, when the vehicle is a known vehicle. For example, the vehicle may be an electric car and the battery pack may be used to power the electric car. A computing device associated with the battery pack may instruct the battery pack to send a signal to the electric car instructing the car to brake. Vehicle communications such as this are known technologies. Additionally, or alternatively, the computing device may send notification signals (e.g., at step 1960) to the vehicle and/or owner to alert relevant people to take actions.

Although the present disclosure has been described with respect to examples in the drawings, those skilled in the art understand that modifications, variations, omissions, and/or additions may be done without departing from the spirit and scope of this disclosure. For example, the sensor(s) and/or controller(s) associated with the energy storage devices may be connected (e.g., communicate) with any systems that may be relevant and/or may help with protection of the energy storage devices and associated premises. For example, energy storage devices may utilize a controller of a home control system and may operate as part of an interconnected home environment. For example, energy storage devices may communicate with (e.g., sensors of) nearby devices such as electric bicycles to be informed of fire hazard in the immediate environment. For example, sensors of energy storage devices may serve as sensors for a remote-monitoring system, for example, by providing image and/or acoustic information. A building security system may be notified by a controller of an energy storage device, for example, when fire is detected by a sensor on the energy storage device. Applications and variations such as these may be made without any substantial or inventive modification. A communication device may interface with other systems and may collect data and information that is relevant to the assessment to avoid damage, an imminent damage, or a risk/probability of future damage.

Whereas the figures show multiple possible features that may be implemented in combination, not all features are required in, or essential to, the practice of various inventive examples described herein. That is, various specific features can be implemented independently of others. In order to facilitate explanation and understanding, the figures provide examples of perimeter protections for energy storage devices, which features are schematic and not necessarily drawn to scale. Some components may be omitted, as their specific description is not essential for implementation of various inventive examples. Other examples within the scope of the invention and having configurations and components determined, in part, according to particular applications, would likewise be apparent. Although examples are described above, features and/or steps of those examples may be combined, divided, omitted, rearranged, revised, and/or augmented in any desired manner. Various alterations, modifications, and improvements will readily occur to those skilled in the art. Such alterations, modifications, and improvements are intended to be part of this description, though not expressly stated herein, and are intended to be within the spirit and scope of the disclosure. Accordingly, the foregoing description is by way of example only, and is not limiting.

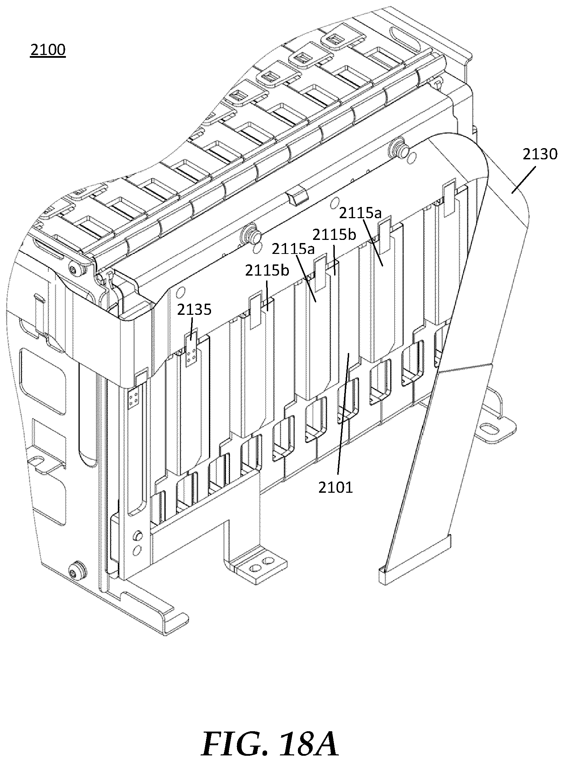

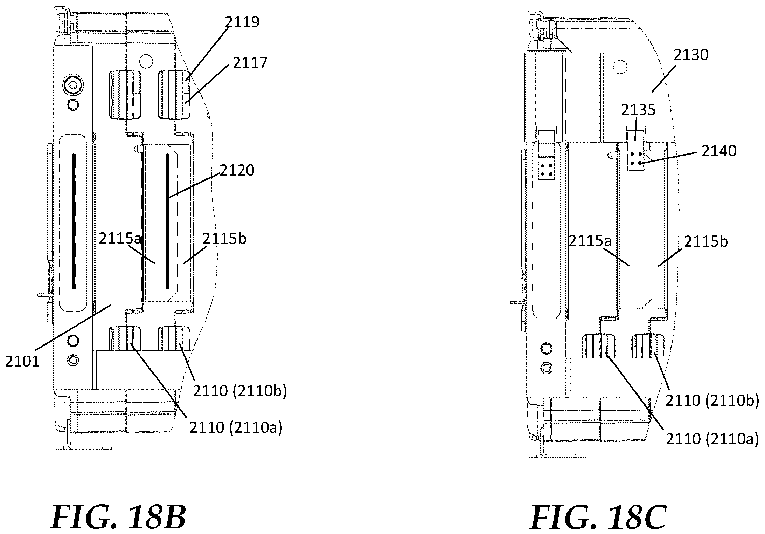

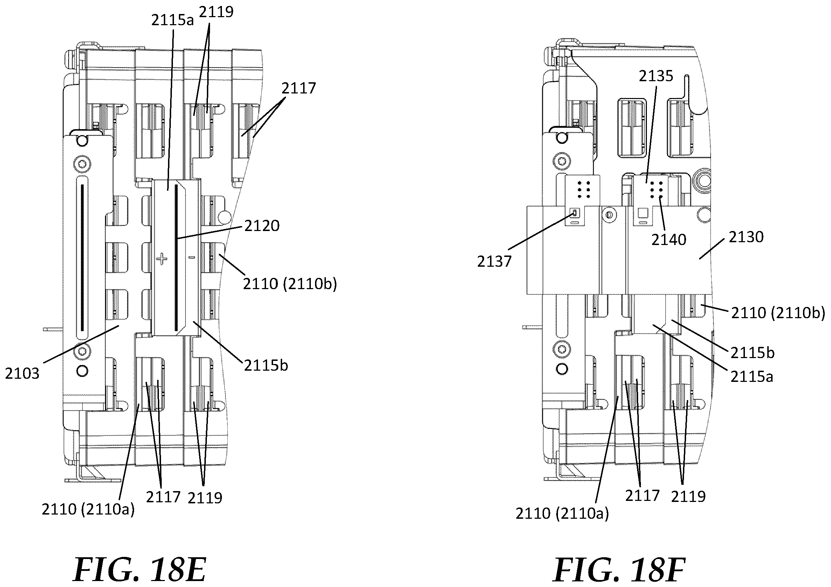

FIG. 18A shows an example energy storage device with a flex circuit. More specifically, FIG. 18A shows an example partial view of an energy storage device without casing, shielding/cooling structures, etc. As shown in FIG. 18A, an energy storage device (e.g., a battery pack) 2100 may comprise a plurality of cells (or energy cells). These cells are not shown in FIG. 18A and may be under cell frames such as a cell frame 2101. FIGS. 18B and 18E that will be described herein may partially reveal cells 2110 (110a, 2110b). For example, the "plurality" may be two or more cells, such as at least 2, at least 3, at least 5, at least 10 total cells, including a first cell and a second cell as will be referred to herein. Each cell may comprise electrode terminals 2115a and 2115b. The electrode terminals 2115a and 2115b of a cell may be connected to corresponding (e.g., opposite) electrodes of the cell. For example, at least one of the electrode terminals 2115a and 2115b may be the ends of corresponding electrode(s) of the cell. For example, the electrode terminal 2115a may be an end of the positive electrode (i.e., extending from the positive electrode), and the electrode terminal 2115b may be an end of a negative electrode. Alternatively, the electrode terminal 2115a may be an end of the negative electrode, and the electrode terminal 2115b may be an end of the positive electrode. For example, the electrode terminals 2115a and 2115b may comprise (e.g., be) tabs (or wings, hooks, arms, legs, lugs, etc.). The electrode terminals 2115a or 2115b of a cell (e.g., a first cell) may be configured to at least partially overlap the electrode terminals 2115a or 2115b of an adjacent cell (e.g., a second cell). For example, the electrode terminals 2115a and 2115b may extend outwardly from (e.g., the sides of) a main body (not shown) of a cell in opposite directions. For example, an electrode terminal (e.g., tab) 2115a of a first cell (e.g., cell 2110a in FIG. 18E) may at least partially overlap with an electrode terminal (e.g., tab) 2115b of a second cell (e.g., cell 2110b in FIG. 18E). For example, the electrode terminal 2115a of the first cell and the electrode terminal 2115b of the second cell may comprise tabs that may fold over each other. For example, the tabs may be in the form of folded conducting foils or films and may be folded onto either side of one another. The forms and/or positional relationships of the electrode terminals of the cells may allow a plurality of cells to be arranged close to each other and to form electrical connections in a compact way without additional connectors. The overlapping terminals (e.g., tabs) may be welded together, as will be described herein in detail.

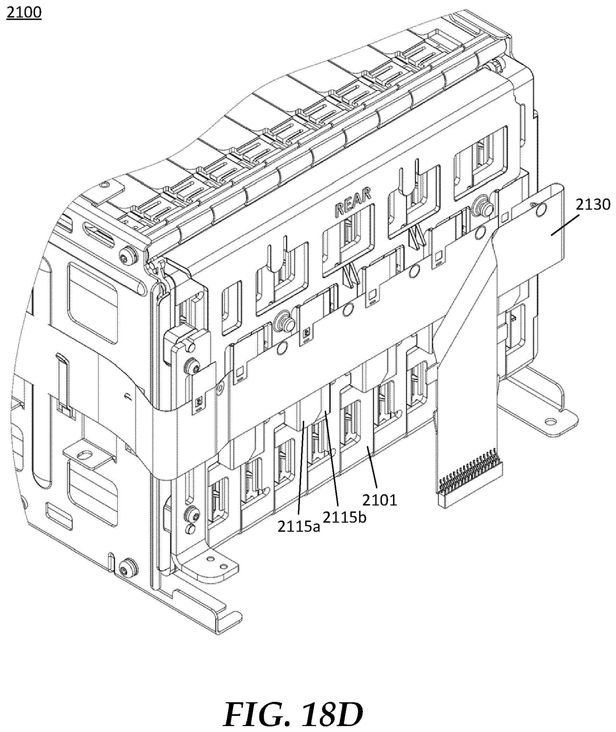

The energy storage device 2100 may comprise a flex circuit 2130. A flex circuit may include a flexible circuit, a flexible circuit board, a flex printed circuit board (PCB), a bendable circuit, a soft circuit, or other similar structure. The flex circuit 2130 may be attached (or mounted, installed, etc.) to the energy storage device 2100. For example, as shown in FIG. 18A, the flex circuit 2130 may be mounted so that the flex circuit 2130 may extend along (e.g., wrap around, surround) at least a portion of an exterior of a main body of the energy storage device 2100. For example, the main body may be a rectangular stacked arrangement in which a plurality of cells 2110 (e.g., as partially shown in FIGS. 18B and 18E) may be stacked. The flex circuit 2130 may be located close to (e.g., adjacent to, or on) the cells 2110. For example, the flex circuit 2130 may be positioned above (or on top of) the electrode terminals 2115a and 2115b, as shown in FIG. 18A. For example, the flex circuit 2130 may be positioned on (e.g., overlapping, covering, in the middle of) the electrode terminals 2115a and 2115b, as shown in FIG. 18D. Although not shown, the flex circuit 2130 may be positioned below the electrode terminals 2115a and 2115b or in other positional relationships with the electrode terminals 2115a and 2115b or the cells 2110. The flex circuit 2130 may be used for measurement and/or balancing for the cells 2110. For example, the flex circuit 2130 may be configured to measure voltage, temperature, or current of the cells. For example, the flex circuit 2130 may measure temperature of a cell, using at least one temperature sensor (e.g., the temperature sensor 2137 as shown in FIG. 18F). The flex circuit 2130 being located close to the cells 2110 may improve accuracy of the measurement. The flex circuit 2130 may comprise a plurality of conductors (e.g., tabs) 2135 that may couple (e.g., electrically) the flex circuit 2130 to the electrode terminals 2115a and 2115b of the cells 2110, for example, using welding.

FIG. 18B shows an example energy storage device with electrode terminals connected between adjacent cells. For clarity of illustration, FIG. 18B focuses on a pair of adjacent cells 2110 (110a and 2110b) and their at least partially overlapping electrode terminals (e.g., tabs) 2115a and 2115b. This may represent all the cells 2110. As shown in FIG. 18B, the overlapping electrode terminals 2115a and 2115b may be (e.g., securely) coupled to each other, for example, via a welded joint (or weld) 2120. The welded joint 2120 may connect the overlapping electrode terminals 2115a and 2115b, thus the associated adjacent cells 2110, to each other, both mechanically and electrically. For example, the welded joint 2120 may comprise an elongated shape (e.g., a single linear weld). The elongated welded joint 2120 may be substantially parallel to a longitudinal direction of the overlapping parts of the electrode terminals (e.g., tabs) 2115a and 2115b. Such long and linear shape of the welded joint 2120 may allow more current to pass through than spot or resistance welded joint(s), for example, due to a larger cross-sectional surface area for the current to flow. The welded joint 2120 may be formed, for example, by laser welding. Laser welding is a known welding technique that may use highly focused laser beam to join materials. Laser welding may have multiple advantages such as high precision, high speed, versatility, etc. Laser welding may produce a uniform, continuous welded joint, which may reduce electrical resistance and support high current flow. The welded joint 2120 may provide a clean, reliable, and compact mechanical and electrical connection between adjacent cells, for example, compared to using bolts, hook wires, or electrical connectors which may need space and/or may fail. The laser welded joint 2120 may support high current (e.g., from 10A to 200A) which may occur in the interconnected cells 2110 of the energy storage device (e.g., battery pack) 2100. Laser welding may also allow an efficient manufacturing line, by increasing the speed of the welding and decreasing the need for contact between the tool and the weld surface. Other welding methods (e.g., ultrasonic welding) may be used to produce an elongated welded joint which supports high current.

The example of FIG. 18B also shows example peripheral elements such as rubber bumper 2117 and water pouch 2119 for use with the cells 2110. The rubber bumper 2117, the water pouch 2119, and the cells 2110 (110a, 2110b) may be partially seen from openings in the cell frame 2101. A water pouch 2119 may be disposed between adjacent cells 2110, for example, to provide heat absorption in the event of thermal runaway. A rubber bumper 2117 may be configured to hold the cells in place. For example, a rubber bumper 2117 may hold an edge of the water pouch 2119. For example, two rubber bumpers 2117 may hold respective edges of two water pouches 2119, so that a cell 2110 between the two water pouches 2119 may be fixed in position. The cell frame 2101 may comprise structures that may attach to the flex circuit 2130, for example, by welding, soldering, mechanical connectors, and/or other means. In some examples, other separators may be used as a thermal runaway barrier. For example, in place of water pouches, aerogel may be used.

FIG. 18C shows an example energy storage device with a flex circuit connected to electrode terminals. In the example of FIG. 18C, a flex circuit 2130 may be mounted above the electrode terminals 2115a and 2115b. The flex circuit 2130 may be connected (e.g., electrically) to the cells 2110 (e.g., via the electrode terminals 2115a and 2115b), for example, via a plurality of conductors (or connectors, e.g., tabs) 2135. The plurality of conductors (e.g., tabs) 2135 may be attached to the overlapping electrode terminals 2115a and 2115b, for example, via resistance welding. For example, FIG. 18C shows a welded joint 2140 having a plurality of weld points. Resistance welding relies on the heat generated by the resistance of the component to electric current flow to join two or more metal components together. Resistance welding may comprise various types such as spot welding, seam welding, projection welding, flash welding, etc. As described herein, resistance welded joints may support lower current, for example, compared to laser welded joints. For welded joint 2140 to the flex circuit 2130 (e.g., used for measurement), high current may not be needed. Resistance welding usually has lower upfront equipment costs, and lower operating costs (e.g., lower energy consumption, longer lifespan), compared to laser welding systems. For simple joints like the ones for conductors 2135 that work with lower current, it may be effective to use resistance welding for high-volume production. In addition, resistance welding may have less sputter and may release less heat to the surroundings, compared to laser welding. Other welding methods (e.g., ultrasonic welding) may also be used for similar benefits (e.g., cost-saving). Although FIG. 18C may show that the welded joints 2140 are on the electrode terminals, the welded joints may be on the flex circuit 2130, alternatively or additionally.

An example welding process may be as follows: Electrode terminals (e.g., tabs) 2115a and 2115b of two adjacent cells may be arranged to be on top of each other. A protector (e.g., mandrel, etc.) may be put behind the electrode terminals 2115a and 2115b. Laser welding may be performed to weld the electrode terminals 2115a and 2115b together. After that, the protector may be removed. A conductor (e.g., a tab) 2135 for the flex circuit 2130 may be put on top of the electrode terminals 2115a and 2115b. Resistance welding may be performed to weld the conductor 2135 with the electrode terminals 2115a and 2115b.

FIG. 18D shows an example energy storage device with a flex circuit. More specifically, FIG. 18D shows an example partial view of the energy storage device 2100. As mentioned with respect to FIG. 18A, FIG. 18D shows another position of the flex circuit 2130 relative to the electrode terminals 2115a and 2115b. For example, as shown in FIG. 18D, the flex circuit 2130 may be positioned on (e.g., at least partially overlapping) the electrode terminals 2115a and 2115b. For example, the flex circuit 2130 may be positioned on the surfaces of the electrode terminals 2115a and 2115b. This position may allow sensors (e.g., temperature sensors) in the flex circuit 2130 to be closer to the cells targeted for measurement. A closer position of the flex circuit 2130 may help with improving accuracy of measurement, for example, on the temperature of a cell 2110 of the laser welded connections.

FIG. 18E shows an example energy storage device with electrode terminals connected between adjacent cells. Similarly to FIG. 18B, the overlapping electrode terminals 2115a and 2115b may be (e.g., securely) connected to each other, for example, via a welded joint (or weld) 2120. The welded joint 2120 may comprise an elongated shape (e.g., a longitudinal line) that may be substantially parallel to a longitudinal direction of the overlapping parts of the electrode terminals (e.g., tabs) 2115a and 2115b. The welded joint 2120 may be formed, for example, by laser welding.

The example of FIG. 18E also shows example peripheral elements such as rubber bumper 2117 and water pouch 2119 for use with the cells 2110, as described herein with respect to FIG. 18B. In addition, FIG. 18E shows a cell frame 2103 which may be an inner layer of cell frame, compared to the cell frame 2101. The rubber bumper 2117, the water pouch 2119, and the cells 2110 (110a, 2110b) may be partially seen from openings of the cell frame 2103.

FIG. 18F shows an example energy storage device with a flex circuit connected to electrode terminals. Similarly to FIG. 18C, the flex circuit 2130 may be connected to the cells 2110, for example, via a plurality of conductors (e.g., tabs) 2135. The plurality of conductors (e.g., tabs) 2135 may be connected to the overlapping electrode terminals 2115a and 2115b, for example, via resistance welding. For example, FIG. 18F shows a welded joint 2140 having a plurality of weld points (e.g., in multiple separate locations, e.g., by spot welding). Although FIG. 18F may show that the welded joints 2140 are on the cell terminals (e.g., on the electrode terminals), the welded joints may be on the flex circuit 2130, alternatively or additionally. For example, an end of a conductor 2135 may be attached to the flex circuit 2130 by welding. As the flex circuit 2130 may be positioned on the electrode terminals 2115a and 2115b, sensors such as temperature sensor 2137 may be closer to the cells 2110, which may result in more accurate measurement results, as the tab temperature may be approximately the cell temperature.

A cell temperature may be, for example, no higher than 70 to 80 degrees Celsius (°C). When a cell temperature reaches closer to 100 °C, the cell may be permanently damaged. Thermal runaway (TR) may start at as low as 150 °C of cell temperature. Plastic components (e.g., plastic walls) may start melting at around 200 °C. Flames may be generated, for example, when the cell temperature reaches around 800 or 900 °C.

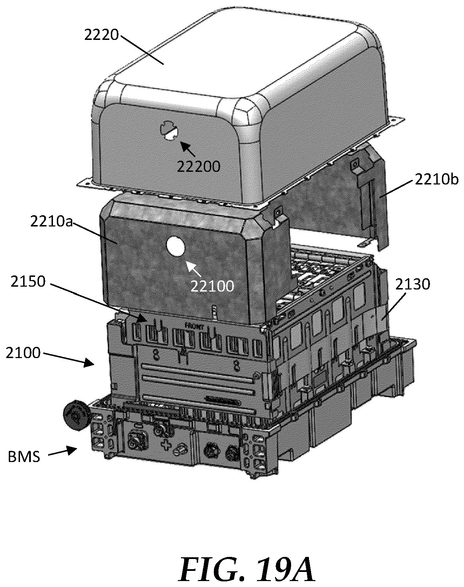

FIG. 19A shows an example energy storage device with an example shielding structure. More specifically, FIG. 19A shows an example energy storage device and associated shielding structures in an exploded view. Examples of the energy storage device 2100 are described herein in detail with respect to FIG. 18A to FIG. 18F. For example, the energy storage device 2100 may comprise a plurality of cells in a stacked arrangement. For example, there may be a flex circuit 2130 on the energy storage device 2100. The energy storage device 2100 may comprise and/or be connected to a BMS. For example, the BMS may be located in/to the lower part of the energy storage device, so that heat from switches and other electronic components of the BMS may be dissipated to an aluminum base (e.g., heat sink) of the energy storage device.

As shown in FIG. 19A, the energy storage device 2100 may comprise one or more relief vents 2150. The one or more relief vents 2150 may be used, for example, for allowing gases to be released from inside the energy storage device (e.g., battery pack) 2100. For example, the one or more relief vents 2150 may be used for thermal runaway (TR). Battery cells may generate gases (including toxic gases), for example, due to chemical reactions and vaporizations that may occur within the cells at the high temperatures. Hot gases or gases with elevated temperatures may cause TR reaction or even fire. Hot gases may cause plastic walls or covers close to the relief vents 2150 to melt, for example, when the gases go out directly through the relief vents 2150.

FIG. 19A shows an example shielding structure that may prevent direct venting of gases (e.g., hot gases). The shielding structure may comprise an outer cover (e.g., top cover) 2220 with a vent hole 22200. The outer cover 2220 may at least partially cover the stack of cells (e.g., cover top and side surfaces of the stacked arrangement). The outer cover 2220 may be configured to connect to a tray of the BMS disposed beneath the stacked arrangement. The outer cover 2220 and the BMS tray, when connected, may cooperate to substantially enclose and seal the cells, except for the vent hole 22200 in the outer cover that may allow for escape of gases discharged through the relief vents 2150. The outer cover 2220 may be made of material(s) that may have high resistance to heat such as metal (e.g. steel, aluminum or the like).

The shielding structure may comprise a heat shield (or TR shield, e.g., 2210a, 2210b). The heat shield (e.g., 2210a, 2210b) may be disposed between the stacked arrangement and the outer cover (e.g., top cover) 2220. The heat shield may face at least one side of the stacked arrangement. The heat shield may be positioned between the one or more relief vents 2150 and the outer cover 2220. For example, a heat shield (e.g., front shield) 2210a may be configured to cover (or oppose, e.g., at least partially overlap with) the one or more relief vents 2150 on one side (e.g., a front side) of the energy storage device 2100. The heat shield 2210a may comprise a hole 22100. The hole 22100 may be configured to be aligned with a vent hole 22200 in the outer cover 2220, for example, when the heat shield 2210a is assembled with the outer cover 2220. For example, a heat shield (e.g., rear shield) 2210b may be configured to cover (e.g., at least partially overlap with) the one or more relief vents 2150 on another side (e.g., an opposite side, e.g., a back side) of the energy storage device 2100. The heat shield 2210b may comprise a hole (not shown) that may align with another hole (not shown) in the outer cover 2220 when assembled. The heat shield (e.g., 2210a, 2210b) may be used to at least partially shield the gases from directly venting via the vent hole(s) 22200 of the outer cover 2220. The heat shield (e.g., 2210a, 2210b) may add a layer to the path of the gases, and may further separates the energy storage device 2100 from, for example, plastic external walls, compared to merely having the outer cover 2220. The heat shield (e.g., 2210a, 2210b) may be made of material(s) that may have high resistance to heat and high thermal conductivity. For example, The heat shield (e.g., 2210a, 2210b) may be made of steel. Gases (e.g., hot gases) that exit the one or more relief vents 2150 may dissipate heat on their path to the hole(s) 22100 of the heat shield(s) 2210a and/or 2210b. The gases may further dissipate heat as the gases vent via the vent hole(s) 22200 of the outer cover 2220.

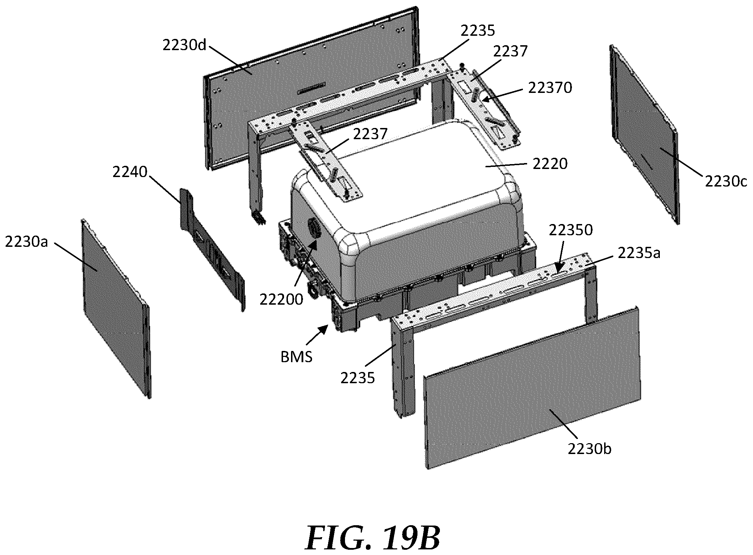

FIG. 19B shows an energy storage device with example casings. More specifically, FIG. 19B shows an example energy storage device and associated casings in an exploded view. As described herein with respect to FIG. 19A, an outer cover (e.g., top cover) 2220 with vent hole(s) 22200 may cover an energy storage device 2100 (e.g., shown in FIG. 19A). Heat shields 2210a and 2210b (shown in FIG. 19A) may be disposed between the outer cover 2220 and the energy storage device 2100. FIG. 19B shows example external/exterior/outer walls (or side walls, casing, case, decorative cover, etc.) 2230a, 2230b, 2230c, and 2230d and associated frames 2235 and 2237. The external walls may serve as an outermost cover for the energy storage device, for functional and/or aesthetic purposes. For example, the external walls may be made of plastic material(s). The external walls may cover the shielding structure. For example, an external wall 2230a may be positioned in front of a side of the outer cover 2220 in which side there is a vent hole 22200. For example, gases exiting the vent hole 22200 may reach the external wall 2230a. As the external wall 2230a may be made of plastic material(s), the gases may cause melting or distortion of the external wall 2230a, for example, when the gases are of high temperature(s). The gases may reach the external wall 2230c, as well as external walls 2230b and 2230d, and similar issues may occur. The heat shields 2210a and 2210b (shown in FIG. 19A) may reduce the temperature of the gases, as described herein. Gases with reduced temperature may less likely cause melting or distortion of the external walls. In addition, the shielding structure may comprise a grill member 2240. The grill member 2240 may be positioned between an external wall (e.g., the external wall 2230a) and a vent hole (e.g., the vent hole 22200) of the outer cover 2220. For example, there may be spacing between the grill member 2240 and the vent hole, and between the grill member 2240 and the external wall. The grill member 2240 may be used to further separate the energy storage device 2100 from the external wall. The grill member 2240 may further dissipate heat from gases, for example, when the grill member 2240 is made of heat-conductive material(s). For example, the grill member 2240 may comprise a plurality of elongated holes or slots (e.g., forming a grill shape) that may allow gases to pass through.

One or more of the external walls (e.g., plastic walls) 2230a, 2230b, 2230c, or 2230d may be attached to (or mounted on) frames 2235 and 2237. For example, the frames 2235 and 2237 may form a rigid framework that may space the external walls from corresponding (e.g., substantially parallel and planar) sides of the outer cover 2220. The rigid framework may strengthen the edges of the external walls and may help with maintaining the shapes/structures/positions of the external walls, for example, even when one or more of the external walls melts (e.g., due to TR). For example, the external wall 2230b may be configured to mount on the frame 2235. The frame 2235 may comprise bars interconnected to form a shape (e.g., an "n" shape) that may conform to the shape of the external wall 2230b. At least one edge of the external wall 2230b may be attached (e.g., secured) to the frame 2235 (e.g., at least one bar), so that the frame 2235 may hold the at least one edge of the external wall 2230b and may prevent or delay deformation of the external wall 2230b, for example, when the external wall 2230b melts. The frames 2235 and 2237 may be made of material(s) that may possess rigidity and heat-resistance that may maintain a structurally stable framework even at a high/melting temperature (e.g., at least about 800°C). For example, the frames 2235 and 2237 may be made of steel (e.g., steel bridges). The frame 2235 may comprise a plurality of openings (e.g., slots, chimneys) 22350. For example, the plurality of openings 22350 may be arranged in a horizontal bar (e.g., top bar) 2235a. For example, the plurality of openings 22350 may be aligned. Two or more cross frames 2237 may be attached to the frames 2235. The cross frames 2237 may be positioned between a pair of substantially parallel frames 2235. The cross frames 2237 may be used to further strengthen (or maintain) the structure formed by the external walls. There may be one or more openings (e.g., slots, chimneys) 22370 in the cross frames 2237. The plurality of openings 22350 and the one or more openings 22370 may form at least part of a convection system (e.g., convection chimneys) as will be described herein. The rigid framework and the external walls may cooperate to direct gases discharged (or escaped) from the outer cover 2220 (e.g., through the vent hole 22200) through openings (e.g., slots, chimneys) in the rigid framework.

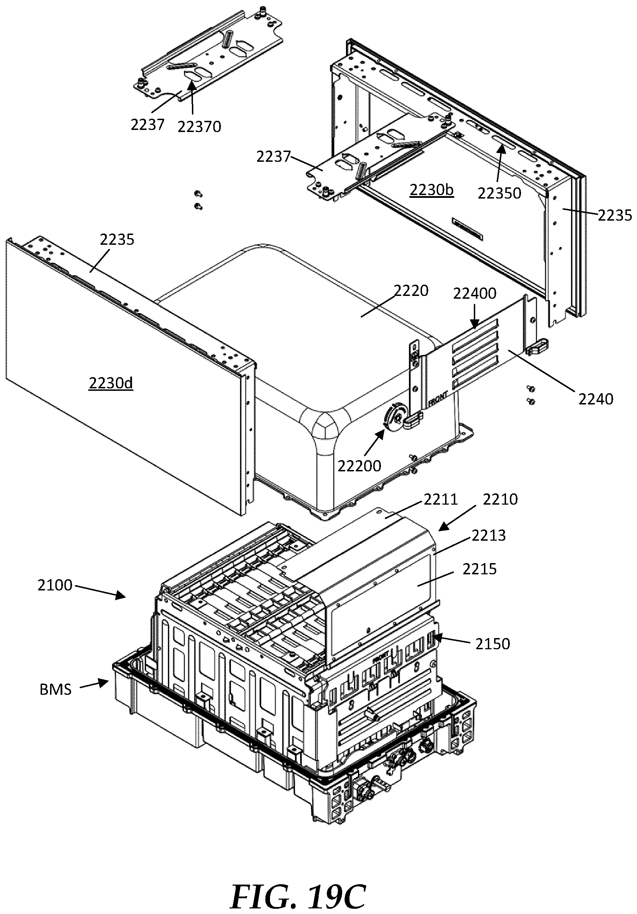

FIG. 19C shows an example energy storage device with an example shielding structure and example casings. More specifically, FIG. 19C shows an example energy storage device and associated shielding structure and casings in an exploded view. In FIG. 19C, a heat shield 2210 is shown as another example which may be different from the heat shields 2210a and 2210b as shown in FIG. 19A. The heat shield 2210 in FIG. 19C may comprise an upper part 2211, a frame portion 2213, and a central portion 2215. The upper part 2211 may extend from the frame portion 2213, for example, in a substantially horizontal direction, so that the upper part 2211 may partially cover or stay above a top of the energy storage device 2100. The upper part 2211 may be integrally formed with the frame portion (e.g., metallic border) 2213. Alternatively, the upper part 2211 may be attached to the frame portion 2213, for example, using screws, welding, etc. The central portion 2215 may be surrounded by frame portion 2213. For example, the central portion 2215 may be an insert. For example, the central portion 2215 may be attached to (e.g., inserted in) the frame portion 2213. For example, the central portion 2215 may be fixed to the frame portion 2213 via screws, rivets, magnets, etc. For example, the frame portion 2213 and/or the upper part 2211 may be made of metal(s) such as steel. For example, the central portion 2215 may be made of heat-resistant (or heat shielding) materials such as fiberglass, ceramic fibers, mineral wool, heat-resistant alloys (e.g., INCONEL, HASTELLOY), refractory metals (e.g., tungsten, molybdenum), graphite, etc., that are resistant to high temperature exposure. The central portion 2215 may provide good thermal insulation and may prevent or reduce the heat exiting the relief vents 2150 from directly reaching, for example, the outer cover 2220. For example, the central portion 2215 may be replaceable.

The heat shield 2210 may be positioned between an outer side, of the energy storage device 2100, having the relief vents 2150, and an inner side, of the outer cover 2220, having the vent hole 22200. For example, the heat shield 2210 may cover the relief vents 2150 completely. For example, the heat shield 2210 may cover the relief vents 2150 so that gases exiting the relief vents 2150 may not reach the vent hole 22200 directly. The gases may flow around the heat shield 2210 and enter the vent hole 22200 from sideways. This may result in a winding path with increased length for the gas flow, which may help with cooling the gases, for example, before the gases reach the vent hole 22200. The upper part 2211 may prevent the gases from passing the heat shield 2210 from the top, and may force the gases to take a longer path from the sides.

FIG. 19C shows an example grill member 2240 that may have a different structure as the grill member 2240 in FIG. 19B. For example, the grill member 2240 may have a plurality of vertically parallel slots 22400. The grill member 2240 in FIG. 19C may have a plurality of horizontally parallel slots 22400. The number, size, shape, orientation, arrangement, etc. of the elongated holes or slots 22400 may vary, as long as the grill member 2240 may create an additional layer of heat insulation (or dissipation) and/or an at least partial barrier (or disturber) for the gas flow, for example, between the vent hole 22200 and an external wall (e.g., external wall 2230a in FIG. 19B). The grill member 2240 may be mounted between (and/or attached to) the two external walls 2230b and 2230d, for example, via the frames 2235. For example, the grill member 2240 may be designed and/or mounted in a way that gases exiting the slots 22400 may flow through openings 22350 in the frames 2235 and openings 22370 in the frames 2237. For example, there may be spacing between the grill member 2240 and a corresponding external wall (e.g., external wall 2230a). The spacing may communicate to the openings 22350 and/or 22370.

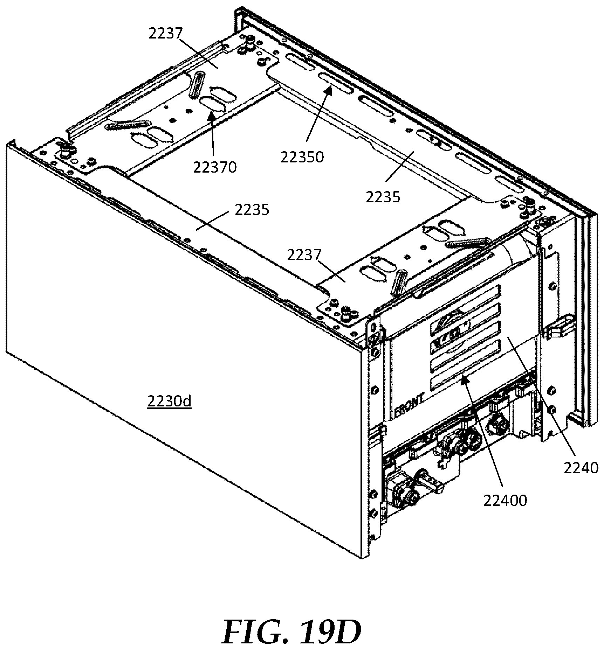

FIG. 19D shows an example energy storage device. More specifically, FIG. 19D shows an example energy storage device and associated shielding structure and casings in a compact (e.g., assembled) view. An assembled energy storage device may comprise a plurality of (e.g., four) external walls (e.g., plastic walls). An external wall may be mounted on a frame (e.g., steel frame) that may maintain a general structure of the external wall. For example, as shown in FIG. 19D, an external wall 2230d may be mounted on a frame 2235. The frames 2235 may be attached to frames 2237 which may further strengthen the structure. The assembled energy storage device may comprise a grill member 2240 that may serve as an outermost venting member before the external wall. The multiple layers of heat shielding structure as described herein may effectively keep battery heat self-contained and prevent excessive heat from reaching/damaging the external case (e.g., during TR). This may greatly improve the structural integrity of the energy storage device. The multi-layer structures including the external walls, rigid framework, heat shields, outer cover, etc. may also realize other functions, for example, protection from electrical shock, protection from mechanical impact, etc.

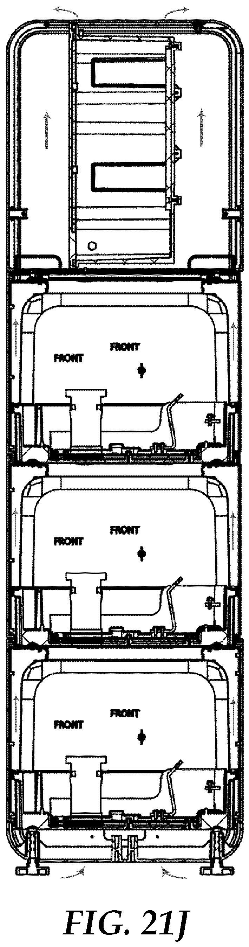

For each energy storage device, the openings 22350 of the frames 2235 and the openings 22370 of the frames 2237 may be designed to have a same or similar shape, location, arrangement, etc., compared to other energy storage devices, so that the corresponding openings may be aligned and form a flow passage among stacked energy storage devices. In operation, gases may exit the slots 22400 and enter, for example, a passage formed by openings 22350 of stacked energy storage devices. Details about flow passages as well as the chimney effect will be described in detail with respect to FIGS. 21J-21L.

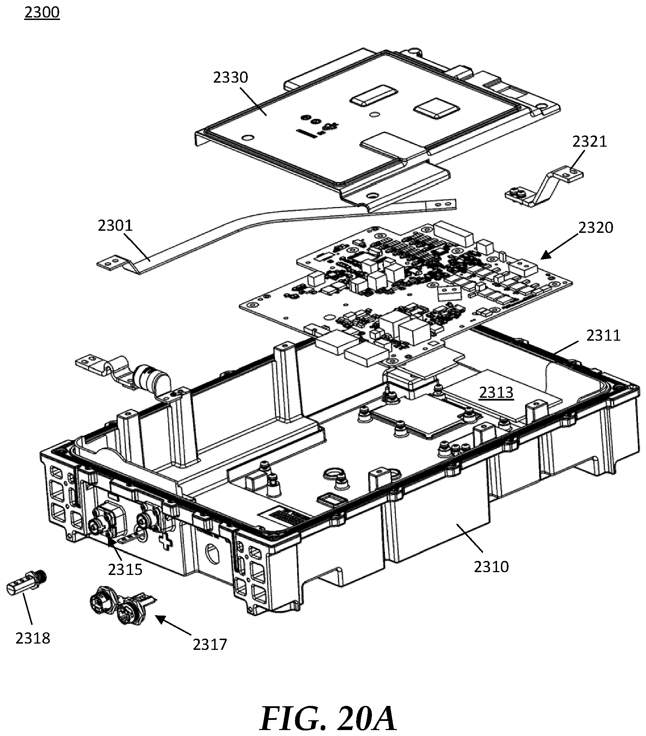

FIG. 20A shows an example structure of a battery management system (BMS). More specifically, FIG. 20A shows an example structure of a BMS 2300 in an exploded view. As mentioned herein (e.g., with respect to FIG. 19A), an energy storage device (e.g., a battery pack) may comprise and/or be connected to a BMS. The BMS may be located beneath the stack arrangement of the cells. The BMS may perform functions such as cell monitoring (e.g. for voltage, temperature, etc.), balancing (i.e., balancing the charge among individual cells to prevent overcharging or over-discharging), state of charge (SOC) and state of health (SOH) estimation, fault diagnosis and protection, communication, etc. The BMS may further comprise switches for allowing connection or removal of the energy storage device from a modular energy storage system. As shown in FIG. 20A, an example structure of a BMS may comprise a tray 2310, a BMS circuit board 2320, and a BMS cover (or BMS protective cover, protective cover) 2330. The BMS circuit board 2320 and the BMS cover 2330 may be substantially planar structures, oriented horizontally during a normal operation. A bus bar 2301 may lead out from the energy storage device (or the battery pack portion of the energy storage device) to one or more electrical connectors on the BMS circuit board 2320. A fixing structure (e.g., a Z-shaped piece) 2321 may be used to securely connect the bus bar 2301 to the one or more electrical connectors, via screws, etc. The bus bar 2301 may be flexible. The bus bar 2301 may be connected to, for example, the flex circuit 2130 (e.g., in FIG. 18A and FIG. 18D). Measurement data (e.g., results from voltage sensors, temperature sensors, etc. on the flex circuit 2130) may be sent to the BMS circuit board 2320, for example, via the bus bar 2301. The tray 2310 may comprise a gasket 2311, thermal pads 2313, electrical connectors (e.g., AMPHENOL connectors) 2315, communication ports (e.g., COM ports) 2317, an LED light 2318, etc. The gasket 2311 may enable the tray 2310 to form a sealed housing for the energy storage device. The thermal pads 2313 may be located under the BMS circuit board 2320 for transferring heat from the circuit board to, for example, an aluminum base (e.g., heat sink).

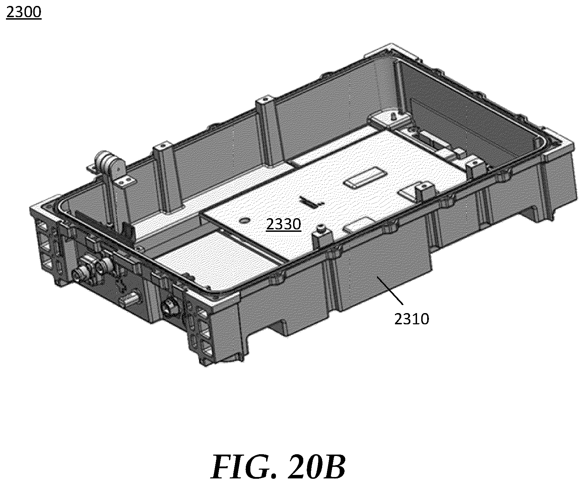

FIG. 20B shows an example structure of the BMS. More specifically, FIG. 20B shows an example structure of a BMS in a compact (e.g., assembled) view. As shown in FIG. 20B, in an assembled state, the BMS cover 2330 may overlay/cover the BMS circuit board 2320. For example, the BMS cover 2330 may cover the BMS circuit board 2320 completely. The BMS cover 2330 may be located near a bottom of the tray 2310, for example, with a spacing between the BMS cover 2330 and the bottom of the tray 2310.

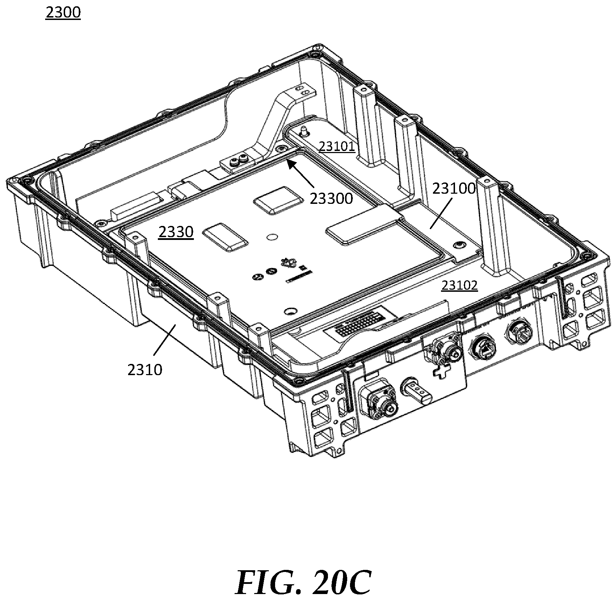

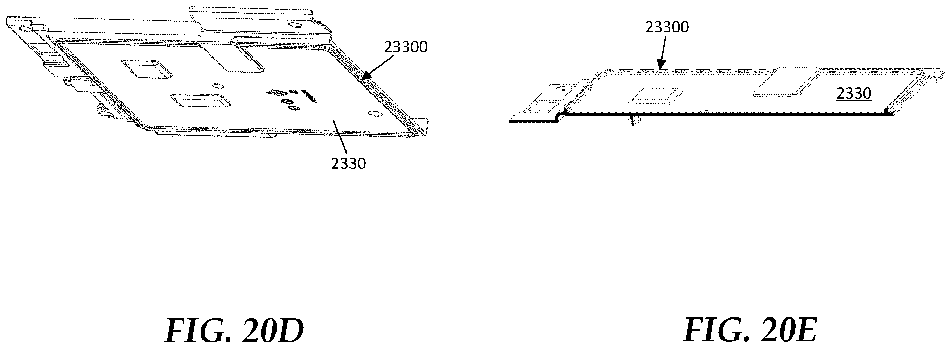

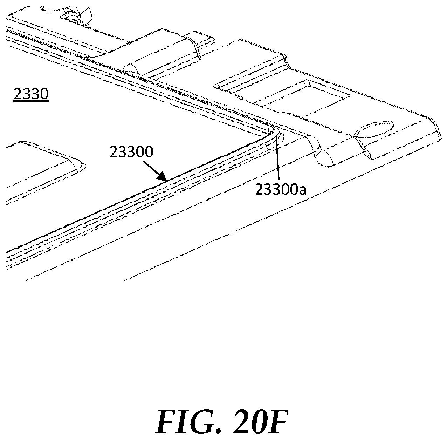

FIG. 20C shows an example structure of the BMS. More specifically, FIG. 20C shows an example structure of a BMS in a compact (e.g., assembled) view from another angle. As shown in FIG. 20C, the tray 2310 may comprise areas such as areas 23100, 23101, and 23102, besides the area covered by the BMS cover 2330. For example, the areas 23100, 23101, and 23102 may be adjacent to (e.g., near one or more edges of) the BMS cover 2330. For example, the areas 23100, 23101, and 23102 may be lower than the BMS cover 2330. For example, the areas 23100, 23101, and 23102 may be also lower than the BMS circuit board 2320 (e.g., the BMS circuit board 2320 as shown in FIG. 20A). The BMS cover 2330 may comprise a ridge portion (e.g., liquid damming ridge) 23300. The ridge portion 23300 may be continuous and facing up, so as to form a reservoir that may retain liquid. For example, the ridge portion 23300 may be on (or extend along) the edges (or perimeter, periphery) of the BMS cover 2330. The example ridge portion 23300 may be seen more clearly in FIG. 20D, FIG. 20E, and FIG. 20F as will be described herein.

FIG. 20D shows an example BMS cover. FIG. 20E shows the example BMS cover in a cross-sectional view. And FIG. 20F shows an example detail of the BMS cover. As described herein, the BMS cover 2330 may form a portion or a structural retaining element, for example, for retaining liquid. Liquid may reach (or contact, e.g., drip onto) a BMS structure, for example, when the BMS structure is at the bottom (e.g., below the cells). The liquid may comprise electrolyte from battery cells (e.g., when one or more battery cells leak electrolyte, for example, due to puncture). The liquid may comprise water from cooling or fire extinguishing systems (e.g., water pouches). The liquid may comprise condensed vapor from gases vented from the cells. Liquid on the BMS structure (e.g., on the BMS circuit board 2320) may damage the circuit, and/or may cause short circuit in at least some of the battery cells. Such short circuiting may cause thermal runaway (TR). The BMS cover 2330 may be used to cover the BMS circuit board 2320, so that any liquid from the battery pack portion of the energy storage device may be stopped by the BMS cover 2330 from entering the BMS circuit board 2320. The liquid may accumulate on the BMS cover 2330 and may flow to other parts of the tray 2310 (e.g., areas 23100, 23101, 23102 as shown in FIG. 20C), for example, when the BMS cover 2330 cannot hold the liquid or when the liquid exceeds the volume of the BMS cover 2330 for holding liquid. As shown in FIGS. 20D-20F, the ridge portion 23300 may extend continuously around the BMS cover 2330, for example, on the edges. For example, the ridge portion 23300 may have rounded corners such as the corner 23300a as shown in FIG. 20F. The ridge portion 23300 may be designed to form a space that has a volume for a predetermined (e.g., desired) amount of liquid. For example, the ridge portion 23300 may have a height that may create a volume for the entire electrolyte of one or more cells (e.g., one cell). Alternatively, or additionally, the BMS cover 2330 may form a space on the top for holding liquid using means other than ridges. For example, the BMS cover 2330 may comprise a concave portion (e.g., a depression, recess) on the top for holding liquid. For example, the BMS cover 2330 may comprise a separate container attached to the BMS cover for holding liquid. For example, the BMS cover 2330 may form one or more guideways for liquid and may guide the liquid to a liquid storage portion near the BMS cover and/or in or outside the tray. For example, the BMS cover 2330 may comprise a liquid-absorbing portion/member that is made of material(s) that is(are) highly absorbent to water, for example, due to physical and/or chemical reasons. The liquid blocking/retention/diversion function of the BMS cover may be realized in any means applicable to the structure of the BMS cover and surroundings. The BMS cover 2330 may be designed to have a maximum capability of retaining liquid. For example, the BMS cover 2330 may be designed to prevent the biggest amount of liquid (e.g., electrolyte of all cells) from reaching the BMS circuit board 2320. Alternatively, the BMS cover 2330 may be designed to hold a predetermined amount of liquid and to allow the rest of liquid to overflow to other parts of the tray 2310, such as the areas 23100, 23101, 23102. The BMS cover 2330 may be made of material(s) that is(are) resistant to the liquid such as electrolyte. For example, the BMS cover 2330 may be made of plastic. The BMS cover 2330 may be designed to comprise structures that may adapt to the contour of the underlying BMS circuit board 2320. For example, the BMS cover 2330 may comprise raised and/or lowered areas, relative to a substantially planar surface, corresponding to respective, lowered and/or raised, underlying elements of the circuit board.

Sensors such as moisture/liquid/water detectors may be installed in/on/adjacent to the BMS cover 2330 and/or in/near the areas 23100, 23101, 23102. If liquid is detected, signals may be sent, for example, to the BMS circuit board 2320. Analysis and/or actions may be taken based on the signals. For example, alert may be generated for checking the energy storage device. The signals may be used together with measurement data from the cells (e.g., from the flex circuit 2130), for example, to identify the leaking cell(s) if there is any. The BMS cover 2330 as described herein may prevent or delay the liquid from damaging the BMS circuit board 2320. As a result, the whole energy storage device may continue working for a prolonged time, for example, before the energy storage device is checked and fixed (e.g., leaking cell(s) or battery pack replaced).

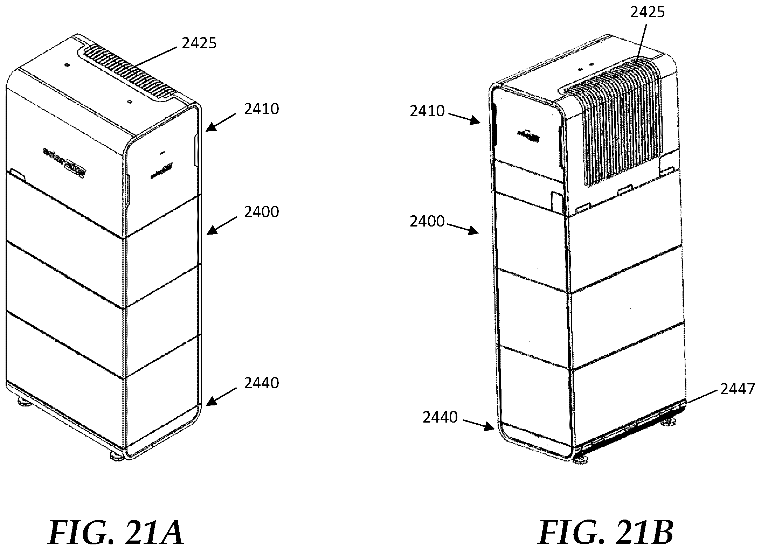

FIG. 21A and FIG. 21B show an example assembly of a modular energy storage system. More specifically, FIG. 21A and FIG. 21B show the assembly from different angles (e.g., front and back). As described herein, a modular energy storage system may comprise one or more energy storage devices (or energy storage units, e.g., battery units) and at least one power management device. For example, a system may start as a single energy storage device 2400 and a power management device 2410, and additional energy storage devices 2400 may be added later on. For example, there may also be a plurality of power management devices 2410. Each power management device 2410 may be connected to one or more energy storage device 2400. When the system includes a plurality of power management devices 2410, the plurality of power management devices 2410 may be configured to manage the plurality of energy storage devices 2400. For example, some of the power management devices 2410 may be configured to charge one or more energy storage devices 2400 (e.g., receive power, for example from a power grid, PV sources, etc.) while some of the power management devices 2410 may be configured to discharge one or more energy storage devices 2400 (e.g., provide power, for example, to a power grid, home loads, etc.). Control circuitry and/or communication circuitry may be connected to each of the power management devices 2410 and configured to manage which power management devices 2410 and which energy storage devices 2400 are connected or disconnected from one or more power buses and whether they are providing power or receiving power. As shown in FIG. 21A and FIG. 21B, a plurality of energy storage devices 2400 may be stacked (e.g., one on top of another). A power management device 2410 may be positioned, for example, on top of (or above) the plurality of energy storage devices 2400. Each of the plurality of energy storage devices 2400 and the power management device 2410 may include one or more quick connect connections which may be configured to electrically connect a given energy storage device 2400 to an adjacent energy storage device 2400 or power management device 2410 simply by stacking them one on top of another and aligning the respective quick connect connections. This quick connect may be done without external cables to connect the different housings. For example, a first quick connect connector may be located at a top of each energy storage device 2400 housing, and a second quick connect connector may be located at a bottom of each energy storage device 2400 housing. One or more quick connect connectors may be located on a power management device 2410 housing. The power management device 2410 may comprise a venting member (e.g., a grill) 2425. For example, the venting member 2425 may be positioned in a wall (e.g., back wall) of the power management device 2410. The venting member 2425 may extend over to a top side of the power management device 2410 at least partially. Such design of the venting member 2425 may allow more directions (e.g., side outward, up outward) of air/gas flows, which may enhance convection. The venting member 2425 may comprise ventilation outlets. For example, the venting member 2425 may be in the form of a grill. The grill may be in any shapes or forms and is not limited to the one as shown in FIG. 21A and FIG. 21B. A base 2440 may be disposed, for example, under/below the plurality of energy storage devices 2400. For example, the stacked energy storage devices 2400 may be placed on top of (e.g., sit on) an upper surface of the base 2440. The upper surface of the base 2440 may be substantially flat and/or may have corresponding structures/mechanisms to attach to an energy storage device. The base 2440 may be designed to have sufficient strength and integrity to bear the weights of the energy storage devices 2400 and power management device 2410. The base 2440 may comprise supporting parts such as legs, feet, wheels. The base 2440 may comprise a venting member (e.g., a grill) 2447 as will be described in detail herein.

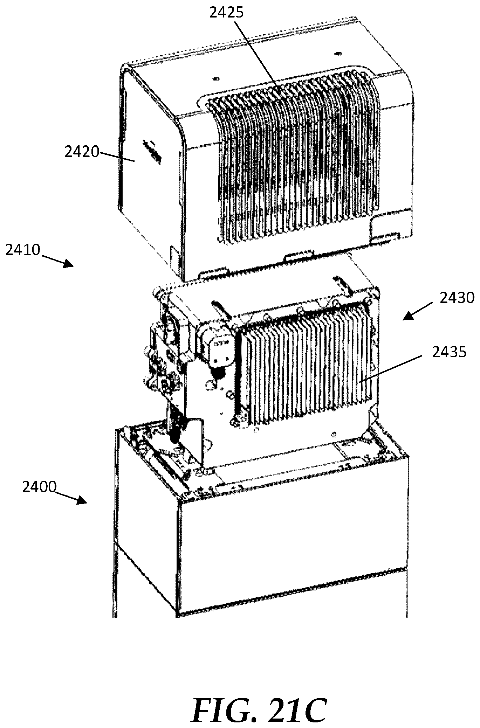

FIG. 21C shows an example structure of a power management device. More specifically, FIG. 21C shows a power management device 2410 in an exploded view. As shown in FIG. 21C, the power management device 2410 may be positioned, for example, on top of a stack of energy storage devices 2400. The power management device 2410 may comprise a casing 2420 and power electronics part 2430. The casing 2420 may comprise the venting member (e.g., a grill) 2425 as described herein. The power electronics part 2430 may comprise inverter (i.e., DC to AC converter). The power electronics part 2430 may comprise a heat dissipation member (e.g., heat sink) 2435. For example, the heat dissipation member 2435 may comprise heat fins (or cooling fins). For example, the heat fins (or cooling fins) may be located adjacent to the venting member 2425. The heat dissipation member 2435 may be used to dissipate heat generated from the power electronics.

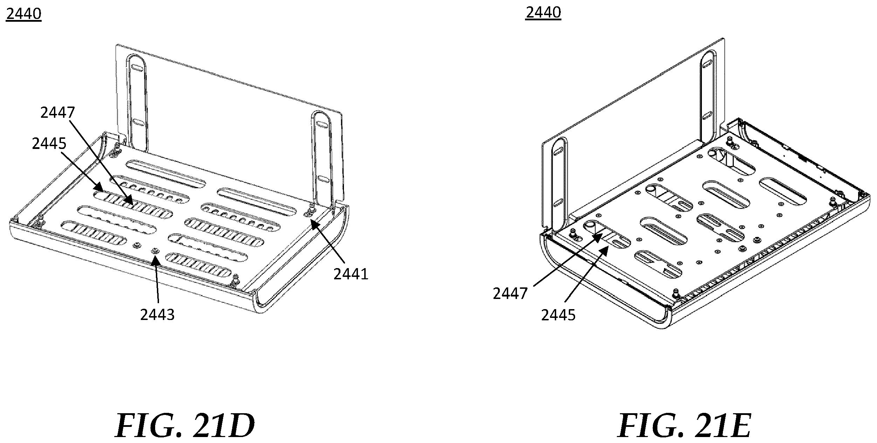

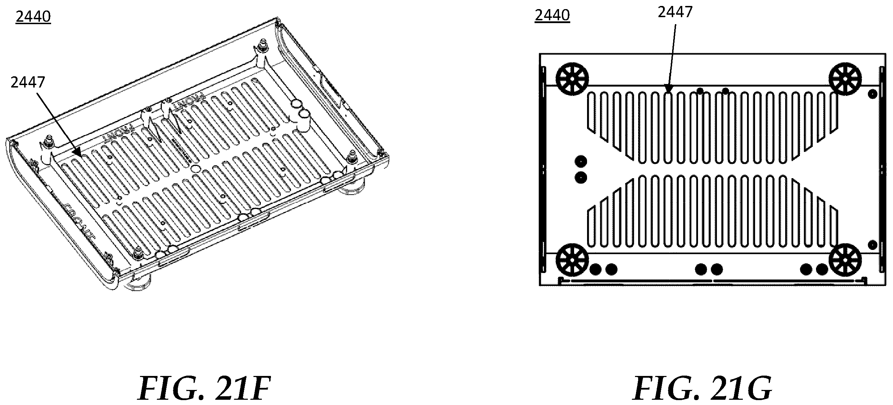

FIG. 21D, FIG. 21E, FIG. 21F, and FIG. 21G show example structures of a base. More specifically, FIG. 21D and FIG. 21E show a base 2440 from a top angle. FIG. 21F and FIG. 21G show a base 2440 from a bottom angle. A base 2440 may comprise one or more venting members. Each venting member may comprise a plurality of ventilation inlets (e.g., slots or holes) that may be of sizes and arrangements that may allow enough air flow to enter. For example, as shown in FIG. 21D and FIG. 21E, the base 2440 may comprise an upper grill member 2445 and a lower grill member 2447. These venting members may be assembled, for example, using screws (e.g., screws 2443) and/or other means (e.g., placement pins 2441). In the example of FIG. 21D, the slots of the upper grill member 2445 may be oriented in an opposite direction as that of the slots of the lower grill member 2447. In the example of FIG. 21E, the slots of the upper grill member 2445 may be oriented in a same direction as that of the slots of the lower grill member 2447. FIG. 21F and FIG. 21G each shows a bottom view of the lower grill member 2447. The designs (e.g., arrangement) of the slots may be different between the example in FIG. 21F and the example in FIG. 21G. Additional structures (e.g., fins) and/or devices (e.g., fans) may be added to the base 2440 (and/or at each level, and/or at the top) to enhance air convection.

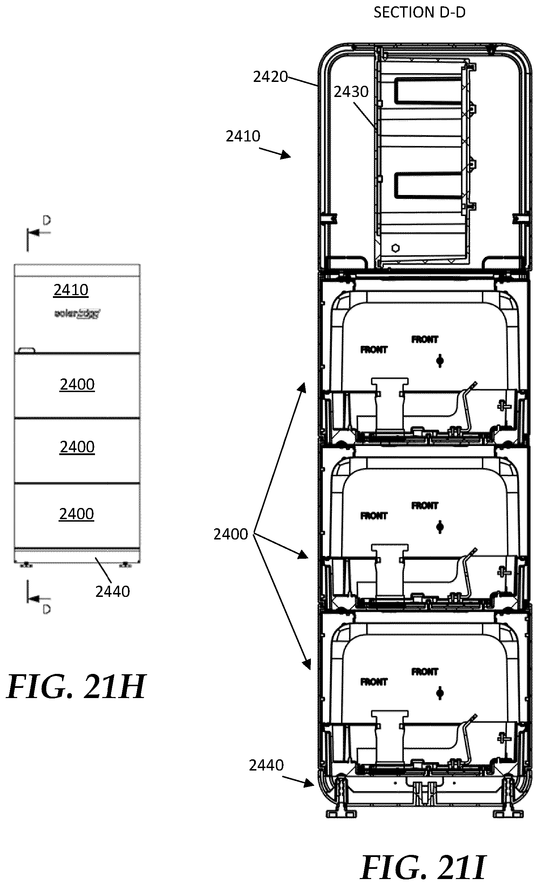

FIG. 21H shows an example assembly of a modular energy storage system. FIG. 21I shows an example assembly of the modular energy storage system in a cross-sectional view. And FIG. 21J shows example air flow directions in the assembly of the modular energy storage system in a cross-sectional view. More specifically, FIG. 21H shows a simplified outer view of an assembly of a plurality of energy storage devices, a power management device, and a base. FIG. 21I shows a cross-sectional view taken across line D-D shown in FIG. 21H. FIG. 21J is similar to FIG. 21I, with added arrows indicating air flow directions.

In FIG. 21H, a plurality of (e.g., three) energy storage devices 2400 may be in a stacked position with a power management device 2410 at the top and a base 2440 at the bottom. The different devices may comprise designs and/or mechanisms for aligning and/or securing the positions of the devices. For example, casings (e.g., walls, frames, shells, etc.) of the devices may be designed to securely hold the devices in place while maintaining proper alignment. FIG. 21I shows a simplified inner view of the assembly. As shown in FIG. 21I, a space between the power electronics part (e.g., inverter) 2430 and the casing 2420 may be bigger (or wider), compared to corresponding spaces in the energy storage devices 2400.

FIG. 21J shows example directions of air flows in the assembly. In operation, the power electronics such as inverter 2430 in the power management device 2410 at the top of the stack may generate lots of heat. The heat may be released, for example, via the heat dissipation member (e.g., heat sink, heat fins) 2435 as described with respect to FIG. 21C. The heat may warm the air and warm air may exit, for example, via the venting member (e.g., a grill) 2425 as described with respect to FIG. 21C. Warm air exiting from the top of the stack may create a pressure difference which may draw air from lower levels of the stack. As air moves upwards, air (e.g., cool air) from outside the stack may be drawn in from the bottom. An air circulation may be formed. This may be referred to as chimney effect or stack effect. Cool air drawn in from grill members (e.g., the upper grill member 2445 and the lower grill member 2447 in FIG. 21D and FIG. 21E) at the bottom may move up to cool the energy storage devices (e.g., battery packs) 2400 and the power management device 2410. As the air passes each level of devices, the air may be further heated and/or joined by additional warm air or gases, for example, by/from an energy storage device that the air passes. The air may become hottest (i.e., having the highest temperature) at the top of the stack, where the air may be further heated by the power management device (e.g., the inverter). The relatively bigger space around the inverter may allow more air/gases to flow and ventilate. The hot air/gases may exit from the top or side of the power management device, for example, via the venting member (e.g., a grill) 2425 as described with respect to FIG. 21C.

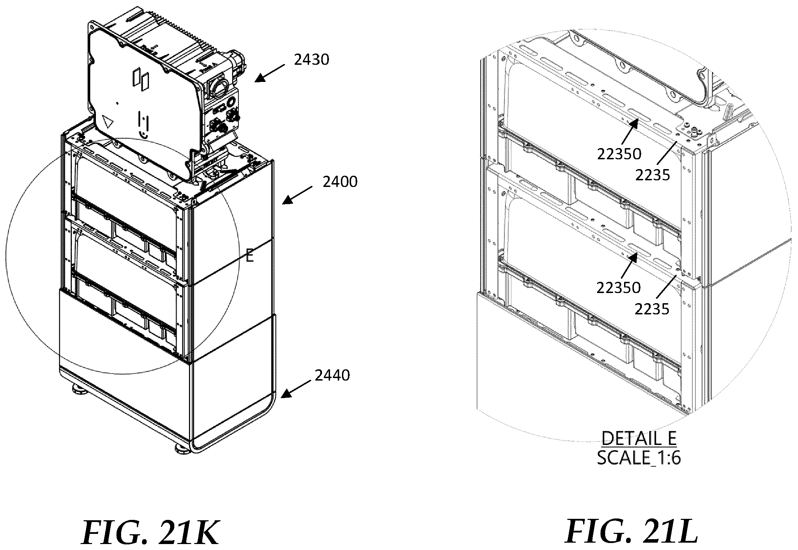

FIG. 21K shows an example assembly of a modular energy storage system in an exposed view. FIG. 21L shows an example detail of the assembly of the modular energy storage system in FIG. 21K. As shown in FIG. 21K and FIG. 21L, with the outer casing at least partially removed, the space around the power electronics part (e.g., inverter) 2430, as well as the flow path on the sides of each energy storage device 2400 may be seen more clearly. For example, as described with respect to FIGS. 19B-19D, frames 2235 may comprise a plurality of openings (e.g., elongated holes or slots) 22350. Openings 22350 of frames 2235 of different energy storage devices 2400 may be aligned and form a flow path (e.g., vertical convection cavities) for the gases and air. As shown in FIG. 21L, for example, there may space between the openings 22350 at different levels of the stack. The space may allow gases from each energy storage device to gather and mix with the gases and air from a lower level. The mixed heated gases/air may flow upwards through openings 22350 at a higher level, and eventually may reach the space around the inverter 2430 at the top and vent out via ventilation outlets (e.g., the venting member 2425). The ventilation inlets in the base, the vertical convection cavities on the sides, and the ventilation outlets at the power management device are in fluid communication and may cooperate to define a path for convective cooling air/gas flow around the energy storage system, for example, during normal operation and/or during a malfunction such as TR.

The openings 22350 being made in the frames (e.g., steel frames) 2235 may make it easier to maintain the integrity (e.g., shape, position) of the openings. As a result, the flow/cooling path may still function, even when a plastic wall mounted to the frames may melt or be distorted. Other structures and/or devices may be used to enhance the air flow and cooling effect. For example, air-moving devices such as fans may be added (e.g., at or near the base, and/or at each level, and/or at the top), for example, to increase or speed up flow movement (e.g., to force cool air in from the bottom).

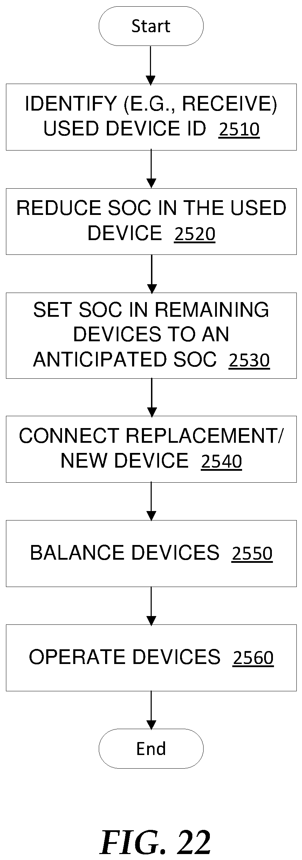

FIG. 22 shows an example method for device balancing before replacement. A modular energy storage system may comprise one or more energy storage devices. One or more energy storage devices may be removed, added, and/or replaced, for example, depending on the needs. For example, when an energy storage device is defective (e.g., leaking electrolyte), this energy storage device may need to be replaced. In the modular energy storage system described herein, energy storage devices may be connected in series, for example, as shown by the stack in FIG. 21H. Energy storage devices connected in series may have a same current, and may have different voltages based on the state of health (SOH). As these energy storage devices may be charged and discharged at substantially the same time (e.g., simultaneously), a same state of charge (SOC) level (e.g., a percentage of charge) among all energy storage devices may prevent overcharge or over-discharge which may damage cells. When a new energy storage device is added to the modular energy storage system, for example, to replace one of the energy storage devices and/or to add capacity, device balancing may need to be done for the new energy storage device and the remaining energy storage devices to have the same SOC level. In the state of art, device balancing (or module balancing) is usually performed after the new energy storage device is connected with the remaining energy storage devices. Device balancing may take a few hours, during which time the modular energy storage system cannot be used.

In the present disclosure, device balancing (or SOC adjustment) may be performed to the remaining energy storage devices, before a new energy storage device is connected with the remaining energy storage devices. For example, the remaining energy storage devices may be preemptively set or adjusted to a predetermined SOC level. The predetermined SOC level may be the same as or close to the SOC level of the new energy storage device, so that the whole energy storage system may be operated with minimum device balancing, for example, after the new energy storage device is connected with the remaining energy storage devices.

In the example method in FIG. 22, one or more steps may be performed by one or more computing devices associated with the modular energy storage system. For example, the BMS circuit board 2320 (e.g., as described with respect to FIG. 20A) and/or the power electronics part 2430 (e.g., as described with respect to FIG. 21C), sensors (e.g., in the flex circuit 2130), etc. may be used to realize the functions as mentioned in one of more steps of the example method in FIG. 22.

At step 2510, a used device ID (or an identification of a used device) may be identified (e.g., received, e.g., by a controller in the power electronics part 2430). For example, the used device may be a defective energy storage device that needs to be replaced. For example, a temperature sensor may detect an excessive temperature at an energy storage device. A detection signal from the temperature sensor may trigger a command for replacing this energy storage device, with the device ID in the command. For example, a related plan for replacing the used device may be retrieved or created. For example, a replacement device or replacement energy storage device (e.g., a new energy storage device) may be ordered automatically or manually, based on the command. For example, an arrival time and/or an installation time of the replacement device may be estimated and/or scheduled.

At step 2520, the SOC (e.g., an SOC level) in the identified used device may be reduced. Reducing the SOC level in the used device may make it safer to remove, transport, and dispose of the used device. For example, at least part of the electrical energy in the used device may be discharged. For example, the used device may be substantially discharged (e.g., discharging all remaining power). For example, the used device may be disconnected with the remaining energy storage devices, and/or removed from the modular energy storage system. The SOC reduction may be performed prior to or after disconnecting the used device.

At step 2530, device balancing may be performed on the remaining energy storage devices. More specifically, the SOC (e.g., SOC levels) in the remaining energy storage devices may be set/adjusted to an anticipated SOC (or anticipated SOC level). The anticipated SOC may be the same as or close to an SOC (e.g., an actual or expected SOC) of a replacement device (e.g., new energy storage device) to be added to replace the used device. For example, the anticipated SOC (or adjusted SOC of each of the remaining energy storage devices) may be within ± 10% of the SOC of the replacement device. For example, the anticipated SOC may be within ± 5% of the SOC of the replacement device. For example, the anticipated SOC may be within ± 1% of the SOC of the replacement device. For example, when an SOC of a replacement device or new energy storage device is 30%, each of the remaining energy storage devices may be adjusted to an SOC of 20%-40%.

A replacement device (e.g., new energy storage device) may have a predefined SOC (e.g., an actual or expected SOC). For example, new batteries may be shipped with a predefined SOC which may be considered optimal for long-term storage and transport of the batteries. For example, the predefined SOC may be from about 5% to about 60%. For example, the predefined SOC may be from about 10% to about 40%. For example, the predefined SOC may be from about 20% to about 40%. For example, the predefined SOC may be from about 25% to about 35%. For example, the predefined SOC may be around 30%.

The predefined SOC of a replacement device may be used as a basis for determining the anticipated SOC. For example, the controller in the power electronics part 2430 (or other computing device(s)) may have a predefined SOC (e.g., 30%) in an associated database. The controller may calculate an anticipated SOC (e.g., anticipated SOC level) based on the predefined SOC. The controller may instruct the energy storage system to charge or discharge the remaining energy storage devices to the anticipated SOC. For example, the controller may measure the current SOC levels of the remaining energy storage devices. The controller may determine how to adjust the SOC levels of the remaining energy storage devices, for example, based on the current SOC levels, the anticipated SOC level, the arrival/installation time of the replacement device, the charging/discharging rates, the self-discharge rate, etc. For example, the controller may schedule a starting time for the SOC adjustment. For example, the controller may determine to start discharging the remaining energy storage devices at around 6am for around four hours till the SOC reaches around 30%, so that these energy storage devices will have a similar SOC level as a replacement device which is scheduled to be installed at around 10am.

At step 2540, a replacement device (e.g., a new energy storage device) may be connected to/with the remaining energy storage devices. The replacement energy storage device may be a new battery pack shipped from a factory or warehouse. Alternatively, the replacement energy storage device may be a usable battery pack which may be used before. The anticipated SOC may vary depending on the type and/or condition of the replacement energy storage device. The predefined SOC and/or calculated anticipated SOC in the database associated with the controller may be updated automatically and/or manually. For example, the replacement device may replace the used device removed from the modular energy storage system.

At step 2550, balancing (or commissioning) may be performed on the energy storage devices. The energy storage devices may have substantially the same SOC level, for example, after step 2530. The balancing step 2550 may be used to confirm or make further adjustment to make sure that the SOC levels for all energy storage devices (including all the remaining energy storage devices and the replacement device) are the same or within a predetermined range (e.g., ± 5%, ± 1%). The adjustment, when needed, may be minimum. It may take a few minutes instead of a few hours, after the replacement device is connected and before the energy storage system is ready for operation.

At step 2560, the energy storage devices may be allowed for normal operation, as they are on the same or substantially the same SOC level. For example, at around 10am, a replacement device (e.g., a new energy storage device) is connected to the remaining devices. The whole energy storage system may be ready to use, for example, at around 10: 10am, due to a much shorter time needed for device balancing. For example, an EV owner may drive his/her car out of the garage soon after 10am, instead of having to wait till the afternoon or evening. Efficiency and convenience may be greatly improved.

In the example method in FIG. 22, one or more steps may be modified, divided, added, removed, re-ordered, and/or combined, without departing from the spirit and scope of the present disclosure. For example, the steps 2510 and 2520 may be removed, when an energy storage device (e.g., a new energy storage device) is added to increase the capacity rather than replace an existing device. For example, the step 2550 may be omitted, when the step 2530 has been performed in an accurate way. For example, step 2520 may be re-positioned to be after step 2530, for example, before the replacement device is connected.

Energy storage devices 2400 may be connected to each other in electrical parallel, for example, as shown by the stack in FIG. 21H the housings of each energy storage device 2400 may be stacked and they may each be connected (e.g., via respective quick connect connections) in parallel to one or more power management devices 2410. Energy storage devices 2400 connected in parallel may have a same voltage, and may have different currents. As these energy storage devices 2400 may be charged and discharged at substantially the same time (e.g., simultaneously), a same state of charge (SOC) level (e.g., a percentage of charge) among all energy storage devices may prevent overcharge or over-discharge which may damage cells. Each energy storage device 2400 may include DC/DC converter circuitry configured to help maintain an output voltage from the energy storage device 2400. For example, as the voltage of one or more battery cell of the energy storage device 2400 changes, the DC/DC converter circuitry may be configured to maintain a substantially constant output voltage (e.g., 10 V, 20 V, 50 V, 100 V, 200 V, 400 V, 600 V, 800 V, etc.). The output voltage level may change depending on a mode of operation of the energy storage devices 2400.

For example, each power management device 2410 may have one or more busbars, and one or more energy storage devices 2400 may connect in parallel to the one or more busbars (e.g., via the quick connect connections). One or more sensors may be configured to sense parameters related to the connected energy storage device 2400 (e.g., current, voltage, temperature, etc.).

For example, charge and discharge of energy storage devices 2400 may depend on the number of energy storage devices 2400 and power management devices 2410 in the power system, and the type of connection between energy storage devices 2400 (e.g., parallel, series, combination of parallel and series). The number of power management devices 2410 may depend on the number of energy storage devices 2400. For example, for each N energy storage devices 2400 (e.g., 3, 5, 10, 15, etc.) there may be at least one power management device 2410. In some example, systems with a plurality of power management devices 2410 may require fewer energy storage devices 2400 and each energy storage device 2400 may have a relatively higher discharge rate (e.g., since the plurality of power management devices 2410 may manage the charge of energy storage devices 2400 and charge one or more energy storage devices 2400 while discharging one or more energy storage devices 2400, e.g., when a plurality of energy storage devices 2400 are connected in parallel). For example, there may be one or more charge inverters and one or more discharge inverters, and control circuitry may control whether one or more batteries are connected to the charge inverter or the discharge inverter. In some examples, all of the batteries may be connected to the one or more discharge inverters to control a discharge rate of the batteries (e.g., decrease the discharge rate). In some examples, the system may have one or more charge power buses and one or more discharge power buses. For example, the one or more charge inverters may switchably connect the batteries to the charge power bus(es) and one or more discharge inverters may switchably connect the batteries to the discharge power bus(es).

Although the present disclosure has been described with respect to examples in the drawings, those skilled in the art understand that modifications, variations, omissions, and/or additions may be done without departing from the spirit and scope of this disclosure. For example, the present disclosure may be adapted to energy storage devices connected in series, parallel or in a combination of series and parallel connections, without any substantial or inventive modification.

Whereas the figures illustrate multiple possible features that may be implemented in combination, not all features are required in, or essential to, the practice of various inventive examples described herein. That is, various specific features can be implemented independently of others. In order to facilitate explanation and understanding, the figures provide overviews of various features of energy storage devices and their associated modular energy systems, which features are not necessarily drawn to scale. Some components may be omitted, as their specific description is not essential for implementation of various inventive examples. Other devices and associated modular energy systems, according to other examples within the scope of the invention and having configurations and components determined, in part, according to particular applications, would likewise be apparent. Although examples are described above, features and/or steps of those examples may be combined, divided, omitted, rearranged, revised, and/or augmented in any desired manner. Various alterations, modifications, and improvements will readily occur to those skilled in the art. Such alterations, modifications, and improvements are intended to be part of this description, though not expressly stated herein, and are intended to be within the spirit and scope of the disclosure. Accordingly, the foregoing description is by way of example only, and is not limiting.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

Hereinafter, various characteristics will be highlighted in a set of numbered clauses or paragraphs. These characteristics are not to be interpreted as being limiting, but are provided merely as a highlighting of some characteristics as described herein, without suggesting a particular order of importance or relevancy of such characteristics.

Clause 1. An apparatus comprising: a communications interface configured to receive, from a server, an operational plan for one or more devices in a power system, wherein the operational plan comprises one or more or of: one or more constraints; and one or more instructions, for controlling the one or more devices in the power system; a sensor configured to measure a voltage level at a connection point with a grid; and a controller, coupled to the communications interface and to the sensor, and configured to: control the one or more devices based on the operational plan; and control the one or more devices based on the voltage level at the connection point with the grid and a threshold to alter a power consumption of the one or more devices.

Clause 2. The apparatus of clause 1, wherein the sensor is further configured to monitor external conditions with respect to the one or more devices, wherein each of the one or more devices comprises an energy storage device comprising a plurality of energy storage cells, and the controller is further configured to: receive, from the sensor, signals associated with the external conditions; and based on one or more of the external conditions, instructing one or more actions associated with safety of the one or more energy storage devices to avoid a damage, an imminent damage, or a risk/probability of future damage with respect to the one or more energy storage devices.

Clause 3. The apparatus of clause 1 or clause 2, further comprising an energy storage device, the energy storage device comprising: a plurality of energy storage cells; a mounting structure in which the plurality of energy storage cells are installed; an external case covering the mounting structure; and a controller configured to determine, based on one or more external conditions, a high-risk condition with respect to the energy storage device, wherein the high-risk condition is capable of damaging the energy storage device when the high-risk condition reaches the energy storage device, wherein the energy storage device is located on a premises.

Clause 4. The apparatus of any one of the preceding clauses, further comprising an energy storage device, the energy storage device comprising: a first cell having a first positive electrode tab and a first negative electrode tab; a second cell having a second positive electrode tab and a second negative electrode tab, wherein the first positive electrode tab is coupled to the second negative electrode tab, using a first weld type; and a flex circuit electrically coupled to the first cell via a first flex circuit tab, using a second weld type different from the first weld type.

Clause 5. The apparatus of any one of the preceding clauses, further comprising an energy storage device, the energy storage device comprising: a cover having a vent hole; a plurality of cells in a stacked arrangement that is at least partially enclosed by the cover, wherein the stacked arrangement comprises a plurality of relief vents; and a heat shield disposed between the cover and the stacked arrangement, wherein the heat shield opposes one or more of: the vent hole; or the plurality of relief vents.

Clause 6. The apparatus of any one of the preceding clauses, further comprising an energy storage device, the energy storage device comprising: a plurality of energy cells; a battery management system (BMS) comprising a circuit board, wherein the BMS is configured to be disposed beneath the plurality of energy cells; and a BMS cover overlaying the circuit board and comprising at least one structural retaining element for retaining liquid leaked from the plurality of energy cells or from elsewhere in the energy storage device, above the BMS cover.

Clause 7. The apparatus of any one of the preceding clauses, wherein the server comprises: one or more processors; and memory storing executable instructions that, when executed by the one or more processors, configure the server to: generate, using a prediction model relating to a plurality of sites, a voltage level prediction corresponding to a voltage level at a corresponding grid connection point of a site of the plurality of sites for a time period having a first time duration, the generating the voltage level prediction being based on: predictive data relating to power production at the plurality of sites over a first time period; past electrical parameters data at grid connection points of the plurality of sites over a second time period; past data relating to power production at the plurality of sites over the second time period; and determine, using the corresponding generated voltage level prediction of the site and a voltage threshold, an operational plan for at least one device of the site for the first time period; and provide, to a power system controller, the operational plan for controlling, by the power system controller, the at least one device based on the operational plan.

Clause 8. The apparatus according to clause 7, wherein the server is further configured to: generate, using a prediction model relating to a plurality of sites, a voltage level prediction corresponding to a voltage level at a corresponding grid connection point of a site of the plurality of sites for a time period having a first time duration, and using: predictive data relating to power production at the plurality of sites over a first time period; past electrical parameters data at grid connection points of the plurality of sites over a second time period; past data relating to power production at the plurality of sites over the second time period; determine, using the corresponding generated voltage level prediction of the site and a threshold, an operational plan for at least one device of the site for the first time period; and wherein the apparatus further comprises a power system controller connected to a power source and connected to a grid at the corresponding grid connection point, the power system controller is configured to: control the at least one device based on the operational plan; and control the at least one device based on the voltage level at the connection point with the grid and a threshold.

Clause 9. A modular energy storage system comprising a plurality of energy storage devices of any one of clauses 2 to 6 and a power management device.

Clause 10. A modular energy storage system comprising: a plurality of energy storage devices of any one of clauses 2 to 6 arranged in a stacked position, each of the plurality of energy storage devices comprising vertical convection cavities; a base disposed below the plurality of energy storage devices, the base comprising ventilation inlets; and a power management device disposed above the plurality of energy storage devices, the power management device comprising ventilation outlets, wherein the ventilation inlets, the vertical convection cavities, and the ventilation outlets are configured to be in fluid communication to form a convection chimney for the plurality of energy storage devices and the power management device.

Clause 11. A method comprising: generating, by a server using a prediction model relating to a plurality of sites, a voltage level prediction corresponding to a voltage level at a corresponding grid connection point of a site of the plurality of sites for a time period having a first time duration, the generating the voltage level prediction being based on: predictive data relating to power production at the plurality of sites over a first time period; past electrical parameters data at grid connection points of the plurality of sites over a second time period; past data relating to power production at the plurality of sites over the second time period; determining, by the server, using the corresponding generated voltage level prediction of the site and a voltage threshold, an operational plan for at least one device of the site for the first time period; and providing, by the server and to a power system controller of the site, the operational plan for controlling, by the power system controller, the at least one device based on the operational plan.

Clause 12. The method of clause 11, further comprising: receiving from the server, and by the power system controller, the operational plan for controlling one or more devices in the power system, wherein the operational plan comprises one or more or of: one or more constraints; and one or more instructions, for controlling the one or more devices in the power system; controlling the one or more devices based on the operational plan; measuring a voltage level at the grid connection point of the power system controller with a grid; and controlling the one or more devices based on the voltage level and a voltage threshold to alter a power consumption of the one or more devices.

Clause 13. The method of clause 11 or clause 12, further comprising: monitoring external conditions, using at least one sensor configured to monitor the external conditions, with respect to one or more energy storage devices located on a premises, each energy storage device comprising a plurality of energy storage cells; and based on one or more of the external conditions, performing one or more actions associated with safety of the one or more energy storage devices to avoid a damage, an imminent damage, or a risk/probability of future damage with respect to the one or more energy storage devices.

Clause 14. The method of any one of clause 11 to clause 13, further comprising: (a) receiving an indication that a used device of the plurality of energy storage devices is in need of replacement; (b) adjusting devices of the plurality of energy storage devices, other than the used device, to an adjusted state of charge (SOC) that is within ± 10% of an actual or anticipated SOC of a replacement device; and (c) electrically connecting the replacement device.

Clause 15. A system comprising: a plurality of energy storage devices; a communications interface configured to receive, from a server, an operational plan for the plurality of energy devices, wherein the operational plan comprises one or more or of: one or more constraints; and one or more instructions, for controlling one or more of the energy devices; a sensor configured to measure a voltage level at a connection point with a grid; and a controller, coupled to the communications interface and to the sensor, and configured to: control the plurality of energy devices based on the operational plan; and control the plurality of energy devices based on the voltage level at the connection point with the grid and a threshold to alter a power consumption of the plurality of energy devices; wherein the sensor is further configured to monitor external conditions with respect to the plurality of energy devices, wherein the plurality of energy devices each comprise a plurality of energy storage cells, and the controller is further configured to: receive, from the sensor, signals associated with the external conditions; and based on one or more of the external conditions, instructing one or more actions associated with safety of the one or more energy devices to avoid a damage, an imminent damage, or a risk/probability of future damage with respect to the one or more energy devices.

Clause 16. A method comprising: generating, by a server using a prediction model relating to a plurality of sites, a voltage level prediction corresponding to a voltage level at a corresponding grid connection point of a site of the plurality of sites for a time period having a first time duration, the generating the voltage level prediction being based on: predictive data relating to power production at the plurality of sites over a first time period; past electrical parameters data at grid connection points of the plurality of sites over a second time period; past data relating to power production at the plurality of sites over the second time period; determining, by the server, using the corresponding generated voltage level prediction of the site and a voltage threshold, an operational plan for at least one device of the site for the first time period; and providing, by the server and to a power system controller of the site, the operational plan for controlling, by the power system controller, the at least one device based on the operational plan.

Clause 17. The method of clause 16, wherein: the predictive data relating to power production comprises weather forecast data over the first time duration of each site; and the past data relating to power production comprise past weather data, over a second time duration, of each site.

Clause 18. The method of clause 17, wherein the duration of the second time period is longer than the duration of the first time period.

Clause 19. The method of any of clauses 17-19, wherein: the past weather data comprises past irradiance data at the plurality of sites, and the weather forecasts comprise predicted irradiance data at the plurality of sites.

Clause 20. The method of clause 19, wherein the past irradiance data and the predicted irradiance data comprise, one or more irradiance parameters, wherein the one or more irradiance parameters comprise: diffuse irradiance; beam irradiance; global horizontal irradiance; and/or direct normal irradiance.

Clause 21. The method of any one of clauses 17-20, wherein: past data relating to power production comprises past power levels produced by a power source; and predictive data relating to power production comprises power levels predicted to be produced by a power source.

Clause 22. The method of clause 21, wherein the power source is: a photovoltaic power source; a wind turbine; and/or a generator.

Clause 23. The method of any one of clauses 16-22, wherein the past electrical parameters data at least comprise past voltage level data of each site of the plurality of sites at the grid connection point of each site of the plurality of sites.

Clause 24. The method of clause 23, wherein the past voltage data comprises: a maximum voltage during a time interval; a minimum voltage during the time interval; a standard deviation of the voltage during the time interval; and/or an average voltage during the time interval.

Clause 25. The method of any one of clauses 23-24, wherein the past electrical parameters data further comprises past power data of the plurality of sites.

Clause 26. The method of clause 25, wherein the sites past power data comprises: maximum power during a time interval; minimum power during the time interval; average power during the time interval; and a power ratio during the time interval.

Clause 27. The method of any one of clauses 16-26, further comprising training the prediction model using: past electrical parameters training data of each site of the plurality of sites over the second time duration; past training data relating to power production of each site of the plurality of sites over the first time duration and over the second time duration; and target electrical parameters of each site of the plurality of sites over the first time duration.

Clause 28. The method of any one of clauses 16-27, wherein providing the operational plan comprises transmitting, by the server, the operational plan to the power system controller.

Clause 29. The method of any one of clauses 16-28, wherein the operational plan comprises one or more constraints for the controlling of the at least one device over the time period.

Clause 30. The method of any one of clauses 29, wherein the one or more constraints comprise, over a time interval over the first time period: a time constraint; a power constraint; and/or an energy constraint.

Clause 31. The method of any one of clauses 16-30, wherein the operational plan comprises one or more instructions for the controlling the at least one device at each time interval in the time period.

Clause 32. The method of clause 31, wherein the one or more instructions comprise an on state or an off state of the at least one device.

Clause 33. The method of any one of clauses 31-32, wherein the one or more instructions comprise one or more power consumption instructions for the at least one device.

Clause 34. The method of any one of clauses 16-33, wherein the voltage threshold is a high voltage threshold, and wherein the method further comprises determining, by the server and based on the voltage prediction at the corresponding grid connection point, time periods in which the voltage at the grid connection point exceeds a high voltage threshold, wherein the operational plan is based on the time periods in which the voltage level at the grid connection point exceeds the high voltage threshold, and at least one device parameter.

Clause 35. The method of clause 34, wherein: the at least one device comprises an energy storage device; the at least one device parameter comprises a state of energy of the energy storage device and a capacity of the energy storage device; and the determining the operational plan comprises determining time period for discharging the energy storage device.

Clause 36. The method of any one of clauses 34-35, wherein: the at least one device is a load; the at least one device parameter is the power rating of the load; and the determining the operational plan comprises determining a time period for controlling the load to transition from an off state to an on state.

Clause 37. The method of any one of clauses 16-36, wherein: the at least one device comprises a plurality of devices; and the operational plan comprises, for each time interval in the time period, a priority for controlling the plurality of devices.

Clause 38. The method of any one of clauses 16-37, wherein the voltage threshold is a low voltage threshold and wherein the method further comprises determining, by the server and based on the voltage prediction at the corresponding grid connection point, time periods in which the voltage at the grid connection point decreases below the low voltage threshold, wherein the operational plan is based on the time periods in which the voltage at the grid connection point decreases below the low voltage threshold, and at least one device parameter.

Clause 39. The method of clause 38, wherein: the at least one device comprises an energy storage device; the at least one device parameter comprises a state of energy of the energy storage device and a capacity of the energy storage device; and determining the operational plan comprises determining a limit on the state of energy of the storage device during the time period.

Clause 40. The method of clause 39, wherein the determining the operational plan further comprises determining a time period for charging the energy storage device.

Clause 41. The method of any one of clauses 39-40, wherein the at least one device is a load device, and wherein the at least one device parameter is the power rating of the load.

Clause 42. The method of clause 41, wherein determining the operational plan comprises determining a limit on a power consumption of the load device.

Clause 43. The method of any one of clauses 41-42, wherein the determining the operational plan comprises determining a time period for controlling the load to transition from an on state to an off state.

Clause 44. The method of any one of clauses 16-43, wherein the prediction model is a spatial temporal prediction mode.

Clause 45. The method of any one of clauses 16-44, wherein the prediction model comprises connections between sites of the plurality of sites, wherein each connection is associated with a corresponding weight.

Clause 46. The method of clause 45, wherein the weight corresponding to a connection between two sites of the plurality of sites is based on a distance between the two sites.

Clause 47. The method of any one of clauses 16-46, the prediction model comprises a graph convolution neural network.

Clause 48. The method of clause 47, the graph recurrent neural network comprises a spectral graph convolutional recurrent neural network.

Clause 49. The method of clause 48, wherein: a Laplacian of a graph corresponding to the spectral graph convolutional recurrent neural network is approximated using a Chebyshev polynomial expansion of a Kth degree, for approximation of the Kth power of the Laplacian; and a layer of the graph convolutional recurrent neural network comprises a Long Short Term Memory model which uses the Chebyshev polynomial expansion.

Clause 50. The method of clause 49, wherein the prediction model combines a recurrent neural network with a spectral graph convolutional neural network (SGC-RNN) which uses an eigen value decomposition of a Laplacian raised to the kth power, where k is a number of neighbors the space-time model accounts for.

Clause 51. The method of clause 50, wherein the SGC RNN uses, at each layer, a corresponding Kth order Chebyshev polynomial expansion for approximating the Laplacian raised to a kth order, corresponding past data relating to power production, past data relating to electrical parameters, and predictive data relating to power production, for computing the voltage level prediction at the grid connection point.

Clause 52. The method of any one of clauses 16-51 wherein the prediction model is a space-time prediction model.

Clause 53. A server comprising: one or more processors; and memory storing executable instructions that, when executed by the one or more processors, configure the server to: generate, using a prediction model relating to a plurality of sites, a voltage level prediction corresponding to a voltage level at a corresponding grid connection point of a site of the plurality of sites for a time period having a first time duration, the generating the voltage level prediction being based on: predictive data relating to power production at the plurality of sites over a first time period; past electrical parameters data at grid connection points of the plurality of sites over a second time period; past data relating to power production at the plurality of sites over the second time period; determine, using the corresponding generated voltage level prediction of the site and a voltage threshold, an operational plan for at least one device of the site for the first time period; and provide, to a power system controller, the operational plan for controlling, by the power system controller, the at least one device based on the operational plan.

Clause 54. The server of clause 53, wherein: the predictive data relating to power production comprises weather forecast data over the first time duration of each site; and the past data relating to power production comprise past weather data, over a second time duration, of each site.

Clause 55. The server of clause 54, wherein the duration of the second time period is longer than the duration of the first time period.

Clause 56. The server of any of clauses 54-55, wherein: the past weather data comprises past irradiance data at the plurality of sites; and the weather forecasts comprise predicted irradiance data at the plurality of sites.

Clause 57. The server of clause 55, wherein the past irradiance data and the predicted irradiance data comprise, one or more irradiance parameters, wherein the one or more irradiance parameters comprise: diffuse irradiance; beam irradiance; global horizontal irradiance; and/or direct normal irradiance.

Clause 58. The server of any one of clauses 54-57, wherein: past data relating to power production comprises past power levels produced by a power source; and predictive data relating to power production comprises power levels predicted to be produced by a power source.

Clause 59. The method of clause 58, wherein the power source is: a photovoltaic power source; a wind turbine; and/or a generator.

Clause 60. The server of any one of clauses 53-59, wherein the site past electrical parameters data at least comprise past voltage level data of each site of the plurality of sites at the grid connection point of each site of the plurality of sites.

Clause 61. The server of clause 60, wherein the past voltage data comprises: a maximum voltage during a time interval; a minimum voltage during the time interval; a standard deviation of the voltage during the time interval; and/or an average voltage during the time interval.

Clause 62. The server of any one of clauses 60-61, wherein the sites past electrical parameters data further comprises sites past power data of the plurality of sites.

Clause 63. The server of clause 62, wherein the sites past power data comprises: maximum power during a time interval; minimum power during the time interval; average power during the time interval; and a power ratio during the time interval.

Clause 64. The server of any one of clauses 53-63, wherein the executable instructions, when executed by the one or more processors, configure the server to train the prediction model using: past electrical parameters training data of each site over the second time duration; past training data relating to power production of each site over the first time duration and over the second time duration; and target electrical parameters of each site over the first time duration.

Clause 65. The server of any one of clauses 53-64, wherein providing the operational plan to the power system controller comprises the server transmitting the operational plan to the power system controller.

Clause 66. The server of any one of clauses 53-65, wherein the operational plan comprises one or more constraints for the controlling of the at least one device over the time period.

Clause 67. The server of any one of clauses 53-66, wherein the one or more constraints comprise, over a time interval over the first time period: a time constraint; a power constraint; and/or an energy constraint.

Clause 68. The server of any one of clauses 63-67, wherein the operational plan comprises one or more instructions for the controlling the at least one device at each time interval in the time period.

Clause 69. The server of clause 68, wherein the one or more instructions comprise an on state or an off state of the at least one device.

Clause 70. The server of any one of clauses 53-69, wherein the one or more instructions comprise one or more power consumption instructions for the at least one device.

Clause 71. The server of any one of clauses 53-70, wherein the voltage threshold is a high voltage threshold and wherein the executable instructions, when executed by the one or more processors, configure the server to determine, based on the voltage prediction at the corresponding grid connection point, time periods in which the voltage at the grid connection point exceeds the high voltage threshold, and wherein the operational plan is based on the time periods in which the voltage level at the grid connection point exceeds the high voltage threshold, and at least one device parameter.

Clause 72. The server of clause 71, wherein: the at least one device comprises an energy storage device; the at least one device parameter comprises a state of energy of the energy storage device and a capacity of the energy storage device; and the determining the operational plan comprises determining time period for discharging the energy storage device.

Clause 73. The server of any one of clauses 71-72, wherein: the at least one device is a load; the at least one device parameter is the power rating of the load; and the determining the operational plan comprises determining a time period for controlling the load to transition from an off state to an on state.

Clause 74. The server of any one of clauses 53-73, wherein: the at least one device comprises a plurality of devices; and the operational plan comprises, for each time interval in the time period, a priority for controlling the plurality of devices.

Clause 75. The server of any one of clauses 53-74, wherein the voltage threshold is a high voltage threshold and wherein, the executable instructions, when executed by the one or more processors, configure the server to determine, based on the voltage prediction at the corresponding grid connection point, time periods in which the voltage at the grid connection point decreases below the low voltage threshold, wherein the operational plan is based on the time periods in which the voltage at the grid connection point decreases below a low voltage threshold, and at least one device parameter.

Clause 76. The server of clause 75, wherein: the at least one device comprises an energy storage device; the at least one device parameter comprises a state of energy of the energy storage device and a capacity of the energy storage device; and wherein the executable instructions, when executed, configure the server to determine a limit on the state of energy of the storage device during the time period.

Clause 77. The server of clause 76, wherein the executable instructions, when executed, configure the server to determine a time period for charging the energy storage device.

Clause 78. The server of any one of clauses 53-77, wherein the at least one device is a load device, and wherein the at least one device parameter is the power rating of the load.

Clause 79. The server of clause 78, wherein determining the operational plan comprises determining a limit on a power consumption of the load device.

Clause 80. The server of any one of clauses 78-79, wherein the executable instructions, when executed, configure the server to determine a time period for controlling the load to transition from an on state to an off state.

Clause 81. The server of any one of clauses 53-80, wherein the prediction model is a spatial temporal prediction mode.

Clause 82. The server of any one of clauses 53-80, wherein the prediction model is a space time prediction mode.

Clause 83. The server of any one of clauses 53-81, wherein the prediction model comprises connections between sites of the plurality of sites, wherein each connection is associated with a corresponding weight.

Clause 84. The server of clause 83, wherein the weight corresponding to a connection between two sites is based on a distance between the two sites.

Clause 85. The server of any one of clauses 53-84, the prediction model comprises a graph convolution neural network.

Clause 86. The server of clause 85, the graph recurrent neural network comprises a spectral graph convolutional recurrent neural network.

Clause 87. The server of clause 86, wherein: a Laplacian of a graph corresponding to the spectral graph convolutional recurrent neural network is approximated using: a Chebyshev polynomial expansion of a Kth degree, for approximation of the Kth power of the Laplacian; and a layer of the graph convolutional recurrent neural network comprises a Long Short Term Memory model which uses the Chebyshev polynomial expansion.

Clause 88. The server of clause 87, wherein the prediction model combines a recurrent neural network with a spectral graph convolutional neural network (SGC-RNN) which uses an eigen value decomposition of a Laplacian raised to the kth power, where k is a number of neighbors the space-time model accounts for.

Clause 89. The server of clause 88, wherein the SGC RNN uses, at each layer, a corresponding Kth order Chebyshev polynomial expansion for approximating the Laplacian raised to a kth order, corresponding past data relating to power production, past data relating to electrical parameters, and predictive data relating to power production, for computing the voltage level prediction at the grid connection point.

Clause 90. A method comprising: receiving from a server, and by a power system controller, an operational plan for controlling one or more devices in a power system, wherein the operational plan comprises one or more or of: one or more constraints; and one or more instructions, for controlling the one or more devices in the power system; controlling the one or more devices based on the operational plan; measuring a voltage level at the grid connection point of the power system controller with a grid; and controlling the one or more devices based on the voltage level and a voltage threshold to alter a power consumption of the one or more devices.

Clause 91. The method of clause 90, wherein the voltage threshold is a high voltage threshold, the controlling comprising controlling the one or more devices to increase a power consumption of the one or more devices.

Clause 92. The method of clause 90, wherein the voltage threshold is a low voltage threshold, the controlling comprising controlling the one or more devices to reduce a power consumption of the one or more devices.

Clause 93. The method of any one of clauses 90-92, wherein the one or more constraints comprises at least one constraint for the controlling of the one or more devices over a time period.

Clause 94. The method of clause 93, wherein the at least one constraint comprises, over a time interval over the first time period: a time constraint; a power constraint; and/or an energy constraint.

Clause 95. The method of any one of clauses 90-94, wherein the one or more instructions comprises at least one instruction for the controlling the one or more devices at each time interval in a time period.

Clause 96. The method of clause 95, wherein the at least one instruction comprises an on state or an off state of the one or more devices.

Clause 97. The method of any one of clauses 95-96, wherein the at least one instruction comprises one or more power consumption instructions for the one or more devices.

Clause 98. The method of any one of clauses 95-96, wherein the at least one instruction comprises one or more power production instructions for the one or more devices.

Clause 99. The method of any one of clauses 90-98, wherein the voltage threshold is a high voltage threshold and wherein controlling the one or more devices based on the voltage level and the voltage threshold comprises: determining if the voltage level exceeds the high voltage threshold; selecting a device from the one or more devices; and controlling the selected device to draw power.

Clause 100. The method of any one of clauses 90-99, wherein the voltage threshold is a low voltage threshold and wherein controlling the one or more devices based on the voltage level and the voltage threshold comprises: determining if the voltage level reduced below the low voltage threshold; selecting a device from the one or more devices; and controlling the selected device to provide power.

Clause 101. The method of any one of clauses 90-100, wherein the operational plan comprises constraints for the controlling of the one or more devices over the time period.

Clause 102. An apparatus comprising: a communications interface configured to receive, from a server, an operational plan for one or more devices in a power system, wherein the operational plan comprises one or more or of: one or more constraints; and one or more instructions, for controlling the one or more devices in the power system; a sensor configured to measure a voltage level at a connection point with a grid; and a controller, coupled to the communications interface and to the sensor, and configured to: control the one or more devices based on the operational plan; and control the one or more devices based on the voltage level at the connection point with the grid and a threshold to alter a power consumption of the one or more devices.

Clause 103. The apparatus of clause 102, wherein the threshold is a high voltage threshold, the controller being configured to control the one or more devices increase a power consumption of the one or more devices.

Clause 104. The method of clause 102, wherein the threshold is a low voltage threshold, the controller being configured to control the one or more devices to reduce a power consumption of the one or more devices.

Clause 105. The apparatus of any one of clauses 102-104, wherein the one or more constraints comprises at least one constraint for controlling, by the controller, the one or more devices over a time period.

Clause 106. The apparatus of clause 105, wherein the at least one constraint comprises, over a time interval in the time period: a time constraint; a power constraint; and/or an energy constraint.

Clause 107. The apparatus of any one of clauses 102-106, wherein the one or more instructions comprises at least one instruction for controlling, by the controller, the one or more devices at each time interval in a time period.

Clause 108. The apparatus of clause 107, wherein the at least one instruction comprises an on state or an off state of the one or more devices.

Clause 109. The apparatus of any one of clauses 107-108, wherein the at least one instruction comprises one or more power consumption instructions for the one or more devices.

Clause 110. The apparatus of any one of clauses 102-109, wherein the controller controls the one or more devices based on the voltage level at the connection point with the grid and a threshold by: determining if voltage level at the connection point with the grid exceeds a high voltage threshold; selecting a device from the one or more devices; and controlling the selected devices to draw power.

Clause 111. The apparatus of any one of clauses 102-110, wherein the controller controls the one or more devices based on the voltage level at the connection point with the grid and a threshold by: determining if the voltage level reduces below a low voltage threshold; selecting a device from the one or more devices; and controlling the selected devices to provide power.

Clause 112. A system comprising: a server of any one of clauses 53-89, configured to: generate, using a prediction model relating to a plurality of sites, a voltage level prediction corresponding to a voltage level at a corresponding grid connection point of a site of the plurality of sites for a time period having a first time duration, and using: predictive data relating to power production at the plurality of sites over a first time period; past electrical parameters data at grid connection points of the plurality of sites over a second time period; past data relating to power production at the plurality of sites over the second time period; determine, using the corresponding generated voltage level prediction of the site and a threshold, an operational plan for at least one device of the site for the first time period; and a power system controller of any one of clauses 102-111, connected to a power source and connected to a grid at the corresponding grid connection point, the power system controller is configured to: control the at least one device based on the operational plan; and control the at least one device based on the voltage level at the connection point with the grid and a threshold.

Clause 113. The method of any one of clauses 16 and 90, wherein the one or more devices are: one or more storage devices; one or more a load devices.

Clause 114. The method of any one of clauses 16 and 90, wherein the one or more storage devices are: one or more batteries; one or more electrical vehicles.

Clause 115. The method of any one of clauses 16 and 90, wherein the one or more load devices are: one or more heat pumps; one or more water heaters; one or air machines; one or more water heaters.

Clause 116. The method of any one of clauses 16-52, wherein the prediction model uses an inductive framework.

Clause 117. The server of any one of clauses 53-89, wherein the prediction model uses an inductive framework.

Clause 118. A method comprising: monitoring external conditions, using at least one sensor configured to monitor the external conditions, with respect to one or more energy storage devices located on a premises, each energy storage device comprising a plurality of energy storage cells; and based on one or more of the external conditions, performing one or more actions associated with safety of the one or more energy storage devices to avoid a damage, an imminent damage, or a risk/probability of future damage with respect to the one or more energy storage devices.

Clause 119. The method of clause 118, wherein the external conditions are associated with one or more of: a moving object; fire; severe weather; ambient temperature; or animals or human.

Clause 120. The method of clause 118 or clause 119, wherein the at least one sensor includes one or more of the following: optical sensor, infrared sensor, proximity sensor, vibration sensor, accelerometer, strain gauge, fire sensor, smoke sensor, gas sensor, thermal radiation sensor, temperature sensor, humidity sensor, or acoustic sensor.

Clause 121. The method of any one of clauses 118 to 120, wherein the at least one sensor is located on the premises and outside the one or more energy storage devices.

Clause 122. The method of any one of clauses 118 to 121, wherein the at least one sensor is located outside the premises.

Clause 123. The method of any one of clauses 118 to 122, further comprising: receiving, from outside the premises, information associated with the external conditions.

Clause 124. The method of any one of clauses 118 to 123, wherein the one or more actions comprise one or more of: instructing a moving object to brake; discharging the one or more energy storage devices; triggering an insulating mechanism; or sending notifications associated with the external conditions, the damage, the imminent damage, or the risk/probability of future damage.

Clause 125. The method of clause 118, wherein the external conditions are associated with a moving object, wherein the moving object moves towards the one or more energy storage devices, and wherein the at least one sensor comprises one or more of the following sensors: optical sensor, infrared sensor, proximity sensor, vibration sensor, accelerometer, or strain gauge.

Clause 126. The method of clause 118, wherein the external conditions are associated with a moving object, wherein the moving object moves towards the one or more energy storage devices, and wherein the monitoring external conditions further comprises: measuring, a distance between the moving object and the one or more energy storage devices, and a speed of the moving object.

Clause 127. The method of clause 118 or clause 126, wherein the external conditions are associated with a moving object, wherein the moving object moves towards the one or more energy storage devices, and wherein the monitoring external conditions further comprises: receiving image data from one or more cameras on or outside the premises.

Clause 128. The method of any one of clauses 125 to 127, wherein the one or more actions comprise one or more of: instructing the moving object to brake; or sending notifications associated with stopping or redirecting the moving object.

Clause 129. The method of clause 118, wherein the external conditions are associated with fire, and wherein the at least one sensor comprises one or more of the following sensors: fire sensor, smoke sensor, gas sensor, thermal radiation sensor, temperature sensor, or acoustic sensor.

Clause 130. The method of clause 118 or clause 129, wherein the external conditions are associated with fire, and wherein the monitoring external conditions further comprises: receiving, from outside the premises, information associated with fire.

Clause 131. The method of clause 129 or clause 130, wherein the one or more actions comprise one or more of: discharging the one or more energy storage devices; triggering an insulating mechanism; or sending notifications associated with the fire.

Clause 132. The method of clause 118, wherein the external conditions are associated with severe weather, and wherein the at least one sensor comprises one or more of the following sensors: optical sensor, infrared sensor, vibration sensor, strain gauge, temperature sensor, gas sensor, humidity sensor, or acoustic sensor.

Clause 133. The method of clause 118, wherein the external conditions are associated with severe weather, and wherein the monitoring external conditions further comprises: receiving, from outside the premises, information associated with severe weather.

Clause 134. The method of clause 132 or clause 133, wherein the one or more actions comprise one or more of: discharging the one or more energy storage devices; triggering an insulating mechanism; or sending notifications associated with the severe weather.

Clause 135. A controller comprising: receiving, from at least one sensor configured to monitor external conditions with respect to one or more energy storage devices located on a premises, signals associated with the external conditions, each energy storage device comprising a plurality of energy storage cells; and based on one or more of the external conditions, instructing one or more actions associated with safety of the one or more energy storage devices to avoid a damage, an imminent damage, or a risk/probability of future damage with respect to the one or more energy storage devices.

Clause 136. The controller of clause 135, further comprising: receiving, from outside the premises, information associated with the external conditions.

Clause 137. The controller of clause 135 or clause 136, wherein the external conditions are associated with one or more of: a moving object; fire; severe weather; ambient temperature; or animals or human.

Clause 138. The controller of clause 135 or clause 136, wherein the at least one sensor includes one or more of the following: optical sensor, infrared sensor, proximity sensor, vibration sensor, accelerometer, strain gauge, fire sensor, smoke sensor, gas sensor, thermal radiation sensor, temperature sensor, humidity sensor, or acoustic sensor.

Clause 139. The controller of clause 135 or clause 136, wherein the one or more actions comprise one or more of: instructing a moving object to brake; discharging the one or more energy storage devices; triggering an insulating mechanism; or sending notifications associated with the external conditions, the damage, the imminent damage, or the risk/probability of future damage.

Clause 140. The controller of clause 135 or clause 136, wherein the external conditions are associated with a moving object, wherein the moving object moves towards the one or more energy storage devices, and wherein the at least one sensor comprises one or more of the following sensors: optical sensor, infrared sensor, proximity sensor, vibration sensor, accelerometer, or strain gauge.

Clause 141. The controller of clause 140, wherein the one or more actions comprise one or more of: instructing the moving object to brake; or sending notifications associated with stopping or redirecting the moving object.

Clause 142. The controller of clause 135 or clause 136, wherein the external conditions are associated with fire, and wherein the at least one sensor comprises one or more of the following sensors: fire sensor, smoke sensor, gas sensor, thermal radiation sensor, temperature sensor, or acoustic sensor.

Clause 143. The controller of clause 142, wherein the one or more actions comprise one or more of: discharging the one or more energy storage devices; triggering an insulating mechanism; or sending notifications associated with the fire.

Clause 144. The controller of clause 135 or clause 136, wherein the external conditions are associated with severe weather, and wherein the at least one sensor comprises one or more of the following sensors: optical sensor, infrared sensor, vibration sensor, strain gauge, temperature sensor, gas sensor, humidity sensor, or acoustic sensor.

Clause 145. The controller of clause 144, wherein the one or more actions comprise one or more of: discharging the one or more energy storage devices; triggering an insulating mechanism; or sending notifications associated with the severe weather.

Clause 146. The controller of any one of clauses 135 to 145, wherein the controller is external to the one or more energy storage devices.

Clause 147. An energy storage device comprising: a plurality of energy storage cells; a mounting structure in which the plurality of energy storage cells are installed; an external case covering the mounting structure; and a controller configured to determine, based on one or more external conditions, a high-risk condition with respect to the energy storage device, wherein the high-risk condition is capable of damaging the energy storage device when the high-risk condition reaches the energy storage device, wherein the energy storage device is located on a premises.

Clause 148. The energy storage device of clause 147, wherein the controller is a battery management system (BMS) device located inside the external case.

Clause 149. The energy storage device of clause 147 or clause 148, further comprising at least one sensor configured to monitor the one or more external conditions, wherein the at least one sensor is located on the external case.

Clause 150. The energy storage device of clause 147 or clause 148, further comprising at least one sensor configured to monitor the one or more external conditions, wherein the at least one sensor is located under the external case.

Clause 151. The energy storage device of clause 147 or clause 148, further comprising at least one sensor configured to monitor the one or more external conditions, wherein the at least one sensor is located adjacent to the external case, on the premises.

Clause 152. The energy storage device of clause 147 or clause 148, further comprising at least one sensor configured to monitor the one or more external conditions, wherein the at least one sensor includes one or more of the following: optical sensor, infrared sensor, proximity sensor, vibration sensor, accelerometer, strain gauge, fire sensor, smoke sensor, gas sensor, thermal radiation sensor, temperature sensor, humidity sensor, or acoustic sensor.

Clause 153. The energy storage device of clause 147 or clause 148, wherein the one or more external conditions are associated with one or more of: a moving object; fire; severe weather; ambient temperature; or animals or human.

Clause 154. The energy storage device of any one of clauses 147 to 153, further comprising a communication device associated with communicating with an external information resource for the high-risk condition.

Clause 155. The energy storage device of any one of clauses 147 to 154, wherein the controller is further configured to instruct, based on the high-risk condition, the plurality of energy storage cells to discharge.

Clause 156. The energy storage device of any one of clauses 147 to 155, wherein the controller is further configured to instruct, based on the high-risk condition, a moving object to brake.

Clause 157. The energy storage device of any one of clauses 147 to 156, further comprising an insulating mechanism, wherein the controller is further configured to trigger, based on the high-risk condition, the insulating mechanism.

Clause 158. The energy storage device of clause 157, wherein the insulating mechanism is configured to produce fire-blocking materials.

Clause 159. The energy storage device of any one of clauses 147 to 158, wherein the controller is further configured to send notifications associated with the high-risk condition.

Clause 160. The energy storage device of clause 159, wherein the controller is further configured to send a higher level notification indicating increased urgency, based on evolvement of the high-risk condition.

Clause 161. An energy storage device comprising: a first cell having a first positive electrode tab and a first negative electrode tab; a second cell having a second positive electrode tab and a second negative electrode tab, wherein the first positive electrode tab is coupled to the second negative electrode tab, using a first weld type; and a flex circuit electrically coupled to the first cell via a first flex circuit tab, using a second weld type different from the first weld type.

Clause 162. The energy storage device of clause 161, wherein the first flex circuit tab is welded to the first positive electrode tab, using the second weld type.

Clause 163. The energy storage device of clause 161, wherein the first flex circuit tab is welded to the first negative electrode tab, using the second weld type.

Clause 164. The energy storage device of clause 161, wherein the first flex circuit tab is welded to the flex circuit, using the second weld type.

Clause 165. The energy storage device of any one of clauses 161 to 164, wherein the flex circuit is electrically coupled to the second cell via a second flex circuit tab, using the second weld type.

Clause 166. The energy storage device of clause 165, wherein the second flex circuit tab is welded to the second positive electrode tab, using the second weld type.

Clause 167. The energy storage device of clause 165, wherein the second flex circuit tab is welded to the second negative electrode tab, using the second weld type.

Clause 168. The energy storage device of clause 165, wherein the second flex circuit tab is welded to the flex circuit, using the second weld type.

Clause 169. The energy storage device of any one of clauses 161 to 168, wherein the flex circuit is configured to conform to at least a portion of an exterior of a rectangular stacked arrangement in which a plurality of cells are stacked, wherein the plurality of cells comprises the first cell and the second cell.

Clause 170. The energy storage device of clause 169, wherein the portion is located above or below surfaces of the first and second positive electrode tabs and the first and second negative electrode tabs.

Clause 171. The energy storage device of clause 169, wherein the flex circuit is configured to at least partially overlap surfaces of the first and second positive electrode tabs and the first and second negative electrode tabs.

Clause 172. The energy storage device of any one of clauses 161 to 171, wherein the first positive electrode tab has a first positive electrode tab folded surface that opposes a second negative electrode tab folded surface of the second negative electrode tab, wherein the first weld type welds together the first positive electrode tab folded surface and the second negative electrode tab folded surface.

Clause 173. The energy storage device of any one of clauses 161 to 172, wherein the first positive electrode tab is coupled to the second negative electrode tab via an elongated welded joint formed using the first weld type.

Clause 174. The energy storage device of any one of clauses 161 to 173, wherein a welded joint formed using the second weld type comprises multiple separate locations.

Clause 175. The energy storage device of any one of clauses 161 to 174, wherein the first weld type is laser welding.

Clause 176. The energy storage device of any one of clauses 161 to 175, wherein the second weld type is resistance welding.

Clause 177. The energy storage device of any one of clauses 161 to 176, wherein the first weld type is used to create a welded joint that supports a higher electric current, compared to a welded joint created by the second weld type.

Clause 178. The energy storage device of any one of clauses 161 to 177, wherein the plurality of cells are secondary lithium battery cells.

Clause 179. A modular energy storage system comprising a plurality of energy storage devices of any one of clauses 161 to 178 and a power management device.

Clause 180. An energy storage device comprising: a cover having a vent hole; a plurality of cells in a stacked arrangement that is at least partially enclosed by the cover, wherein the stacked arrangement comprises a plurality of relief vents; and a heat shield disposed between the cover and the stacked arrangement, wherein the heat shield opposes one or more of: the vent hole; or the plurality of relief vents.

Clause 181. The energy storage device of clause 180, further comprising a plurality of exterior walls, the plurality of exterior walls being disposed outside the cover, wherein the plurality of exterior walls are mounted on a ridge framework.

Clause 182. The energy storage device of clause 180 or clause 181, wherein the heat shield comprises fiberglass or ceramic fibers.

Clause 183. The energy storage device of any one of clauses 180 to 182, wherein the heat shield has a portion that extends above a top surface of the cover.

Clause 184. The energy storage device of any one of clauses 180 to 183, wherein the heat shield comprises a central portion made of a first material, and a peripheral portion made of a second material different from the first material, wherein the central portion is mounted on the peripheral portion.

Clause 185. The energy storage device of any one of clauses 180 to 184, further comprising a grill member, the grill member being disposed outside the cover and opposing the vent hole.

Clause 186. The energy storage device of clause 181, further comprising a grill member, wherein the grill member is disposed between the vent hole and an exterior wall facing the vent hole, with spacing between the vent hole and the grill member and between the grill member and the exterior wall.

Clause 187. The energy storage device of any one of clauses 180 to 186, further comprising a tray disposed beneath the stacked arrangement, wherein the cover is configured to connect to the tray.

Clause 188. The energy storage device of clause 181, wherein the rigid framework comprises a plurality of openings configured to allow gases discharged from the vent hole to pass through.

Clause 189. The energy storage device of any one of clauses 180 to 188, wherein the plurality of cells are secondary lithium battery cells.

Clause 190. A modular energy storage system comprising a plurality of energy storage devices of any one of clauses 180 to 189 and a power management device.

Clause 191. An energy storage device comprising: a plurality of energy cells; a battery management system (BMS) comprising a circuit board, wherein the BMS is configured to be disposed beneath the plurality of energy cells; and a BMS cover overlaying the circuit board and comprising at least one structural retaining element for retaining liquid leaked from the plurality of energy cells or from elsewhere in the energy storage device, above the BMS cover.

Clause 192. The energy storage device of clause 191, wherein the BMS further comprises switches allowing for connection and removal of the energy storage device from a modular energy storage system.

Clause 193. The energy storage device of clause 191 or clause 192, wherein the BMS comprises a tray, and the circuit board is disposed in the tray.

Clause 194. The energy storage device of any one of clauses 191 to 193, wherein the liquid is electrolyte in the plurality of energy cells or water for heat absorption.

Clause 195. The energy storage device of any one of clauses 191 to 194, wherein the at least one structural retaining element comprises a liquid damming ridge.

Clause 196. The energy storage device of clause 195, wherein the liquid damming ridge extends along a perimeter of the BMS cover.

Clause 197. The energy storage device of any one of clauses 191 to 196, wherein the at least one structural retaining element comprises a liquid pooling recess.

Clause 198. The energy storage device of any one of clauses 191 to 197, wherein the at least one structural retaining element is configured to retain a fluid volume corresponding to at least an electrolyte volume in one of the plurality of energy cells.

Clause 199. The energy storage device of any one of clauses 191 to 198, wherein the BMS cover is plastic.

Clause 200. The energy storage device of any one of clauses 191 to 199, wherein the BMS cover further comprises, relative to a substantially planar surface, raised and/or lowered areas, corresponding to respective, raised and/or lowered, underlying elements of the circuit board.

Clause 201. The energy storage device of any one of clauses 191 to 200, wherein the plurality of energy cells are secondary lithium battery cells.

Clause 202. A modular energy storage system comprising a plurality of energy storage devices of any one of clauses 191 to 201 and a power management device.

Clause 203. A method for device balancing in a modular energy storage system comprising a plurality of energy storage devices, the method comprising: (a) receiving an indication that a used device of the plurality of energy storage devices is in need of replacement; (b) adjusting devices of the plurality of energy storage devices, other than the used device, to an adjusted state of charge (SOC) that is within ± 10% of an actual or anticipated SOC of a replacement device; and (c) electrically connecting the replacement device to the modular energy storage system.

Clause 204. The method of clause 203, wherein the adjusted SOC is within ± 5% of the actual or anticipated SOC.

Clause 205. The method of clause 203, wherein the adjusted SOC is within ± 1% of the actual or anticipated SOC.

Clause 206. The method of any one of clauses 203 to 205, further comprising, prior to step (c), disconnecting the used device from the modular energy system.

Clause 207. The method of clause 206, further comprising, prior to or after the step of disconnecting, reducing an SOC of the used device.

Clause 208. The method of clause 207, wherein the reducing the SOC of the used device comprises substantially discharging the used device.

Clause 209. The method of any one of clauses 203 to 208, further comprising, after step (c), balancing (i) the plurality of energy storage devices, other than the used device, and (ii) the replacement device, to a balanced SOC within ± 5% for all devices (i) and (ii).

Clause 210. The method of clause 209, wherein the balanced SOC is within ± 1% for all devices (i) and (ii).

Clause 211. The method of any one of clauses 203 to 210, further comprising, after step (c), commissioning the modular energy storage system in normal operation.

Clause 212. The method of any one of clauses 203 to 211, wherein the actual or anticipated SOC is from about 5% to about 60%.

Clause 213. The method of clause 212, wherein the actual or anticipated SOC is from about 10% to about 40%.

Clause 214. The method of clause 212, wherein the actual or anticipated SOC is from about 20% to about 40%.

Clause 215. The method of clause 212, wherein the actual or anticipated SOC is from about 25% to about 35%.

Clause 216. The method of clause 212, wherein the actual or anticipated SOC is about 30%.

Clause 217. The method of any one of clauses 203 to 216, wherein each energy storage device, of the plurality of energy storage devices, comprises secondary lithium battery cells.

Clause 218. A modular energy storage system comprising: a plurality of energy storage devices arranged in a stacked position, each of the plurality of energy storage devices comprising vertical convection cavities; a base disposed below the plurality of energy storage devices, the base comprising ventilation inlets; and a power management device disposed above the plurality of energy storage devices, the power management device comprising ventilation outlets, wherein the ventilation inlets, the vertical convection cavities, and the ventilation outlets are configured to be in fluid communication to form a convection chimney for the plurality of energy storage devices and the power management device.

Clause 219. The modular energy storage system of clause 218, wherein the ventilation inlets are located on a bottom surface of the base.

Clause 220. The modular energy storage system of clause 218 or clause 219, wherein the vertical convection cavities are located on a periphery of each of the plurality of energy storage devices.

Clause 221. The modular energy storage system of any one of clauses 218 to 220, wherein vertical convection cavities of one energy storage device align with vertical convection cavities of another energy storage device in the stacked position.

Clause 222. The modular energy storage system of any one of clauses 218 to 221, wherein the ventilation outlets are located in at least one side wall of the power management device.

Clause 223. The modular energy storage system of clause 222, wherein the ventilation outlets are partially in a top wall of the power management device.

Clause 224. The modular energy storage system of any one of clauses 218 to 223, wherein the power management device comprises cooling fins, the cooling fins being adjacent to the ventilation outlets.

Clause 225. The energy storage device of any one of clauses 161 to 178, wherein the plurality of cells are prismatic cells, cylindrical cells, or pouch cells.

Clause 226. The energy storage device of any one of clauses 180 to 189, wherein the plurality of cells are prismatic cells, cylindrical cells, or pouch cells.

Clause 227. The energy storage device of any one of clauses 191 to 201, wherein the plurality of energy cells are prismatic cells, cylindrical cells, or pouch cells.

Clause 228. The method of any one of clauses 203 to 217, wherein each energy storage device, of the plurality of energy storage devices, comprises prismatic cells, cylindrical cells, or pouch cells.

**Claims**

1. An apparatus comprising:

   a communications interface configured to receive, from a server, an operational plan for one or more devices in a power system, wherein the operational plan comprises, for controlling the one or more devices in the power system, one or more or of: one or more constraints; and one or more instructions;
   a sensor configured to measure a voltage level at a connection point with a grid; and
   a controller, coupled to the communications interface and to the sensor, and configured to:

   control the one or more devices based on the operational plan; and
   control the one or more devices, based on the voltage level at the connection point with the grid and a threshold, to alter a power consumption of the one or more devices.

2. The apparatus of claim 1, wherein the sensor is further configured to monitor external conditions with respect to the one or more devices, wherein each of the one or more devices comprises an energy storage device comprising a plurality of energy storage cells, and the controller is further configured to:

receive, from the sensor, signals associated with the external conditions; and
based on one or more of the external conditions, instructing one or more actions associated with safety of the one or more energy storage devices to avoid a damage, an imminent damage, or a risk/probability of future damage with respect to the one or more energy storage devices.

3. The apparatus of claim 1 or claim 2, further comprising an energy storage device, the energy storage device comprising:

a plurality of energy storage cells;
a mounting structure in which the plurality of energy storage cells are installed;
an external case covering the mounting structure; and
a controller configured to determine, based on one or more external conditions, a high-risk condition with respect to the energy storage device, wherein the high-risk condition is capable of damaging the energy storage device when the high-risk condition reaches the energy storage device, wherein the energy storage device is located on a premises.

4. The apparatus of any one of the preceding claims, further comprising an energy storage device, the energy storage device comprising:

a first cell having a first positive electrode tab and a first negative electrode tab;
a second cell having a second positive electrode tab and a second negative electrode tab, wherein the first positive electrode tab is coupled to the second negative electrode tab, using a first weld type; and
a flex circuit electrically coupled to the first cell via a first flex circuit tab, using a second weld type different from the first weld type.

5. The apparatus of any one of the preceding claims, further comprising an energy storage device, the energy storage device comprising:

a cover having a vent hole;
a plurality of cells in a stacked arrangement that is at least partially enclosed by the cover, wherein the stacked arrangement comprises a plurality of relief vents; and
a heat shield disposed between the cover and the stacked arrangement, wherein the heat shield opposes one or more of:

the vent hole; or
the plurality of relief vents.

6. The apparatus of any one of the preceding claims, further comprising an energy storage device, the energy storage device comprising:

a plurality of energy cells;
a battery management system (BMS) comprising a circuit board, wherein the BMS is configured to be disposed beneath the plurality of energy cells; and
a BMS cover overlaying the circuit board and comprising at least one structural retaining element configured to retain liquid leaked from the plurality of energy cells or from elsewhere in the energy storage device, above the BMS cover.

7. The apparatus of any one of the preceding claims, wherein the server comprises:

one or more processors; and
memory storing executable instructions that, when executed by the one or more processors, configure the server to:

generate, using a prediction model relating to a plurality of sites, a voltage level prediction corresponding to a voltage level at a corresponding grid connection point of a site of the plurality of sites for a time period having a first time duration, the generating the voltage level prediction being based on:

predictive data relating to power production at the plurality of sites over a first time period,
past electrical parameters data at grid connection points of the plurality of sites over a second time period, and
past data relating to power production at the plurality of sites over the second time period; and

determine, using the corresponding generated voltage level prediction of the site and a voltage threshold, an operational plan for at least one device of the site for the first time period; and provide, to a power system controller, the operational plan for controlling, by the power system controller, the at least one device based on the operational plan.

8. The apparatus according to claim 7, wherein the server is further configured to:

generate, using a prediction model relating to a plurality of sites, a voltage level prediction corresponding to a voltage level at a corresponding grid connection point of a site of the plurality of sites for a time period having a first time duration, and using:

predictive data relating to power production at the plurality of sites over a first time period,
past electrical parameters data at grid connection points of the plurality of sites over a second time period, and
past data relating to power production at the plurality of sites over the second time period; and

determine, using the corresponding generated voltage level prediction of the site and a threshold, an operational plan for at least one device of the site for the first time period,

wherein the apparatus further comprises a power system controller connected to a power source and connected to a grid at the corresponding grid connection point, the power system controller is configured to:

control the at least one device based on the operational plan; and
control the at least one device based on the voltage level at the connection point with the grid and a threshold.

9. A modular energy storage system comprising a plurality of energy storage devices of any one of claims 2 to 6 and a power management device.

10. A modular energy storage system comprising:

a plurality of energy storage devices of any one of claims 2 to 6 arranged in a stacked position, each of the plurality of energy storage devices comprising vertical convection cavities;
a base disposed below the plurality of energy storage devices, the base comprising ventilation inlets; and
a power management device disposed above the plurality of energy storage devices, the power management device comprising ventilation outlets,
wherein the ventilation inlets, the vertical convection cavities, and the ventilation outlets are configured to be in fluid communication to form a convection chimney for the plurality of energy storage devices and the power management device.

11. A method comprising:

generating, by a server using a prediction model relating to a plurality of sites, a voltage level prediction corresponding to a voltage level at a corresponding grid connection point of a site of the plurality of sites for a time period having a first time duration, the generating the voltage level prediction being based on:

predictive data relating to power production at the plurality of sites over a first time period,
past electrical parameters data at grid connection points of the plurality of sites over a second time period, and

past data relating to power production at the plurality of sites over the second time period;
determining, by the server, using the corresponding generated voltage level prediction of the site and a voltage threshold, an operational plan for at least one device of the site for the first time period; and
providing, by the server and to a power system controller of the site, the operational plan for controlling, by the power system controller, the at least one device based on the operational plan.

12. The method of claim 11, further comprising:
receiving from the server, and by the power system controller, the operational plan for controlling one or more devices in a power system, wherein the operational plan comprises one or more or of:

one or more constraints; and
one or more instructions, for controlling the one or more devices in the power system;
controlling the one or more devices based on the operational plan;
measuring a voltage level at a grid connection point of the power system controller with a grid; and
controlling the one or more devices based on the voltage level and a voltage threshold to alter a power consumption of the one or more devices.

13. The method of claim 11 or claim 12, further comprising:

monitoring external conditions, using at least one sensor configured to monitor the external conditions, with respect to one or more energy storage devices located on a premises, each energy storage device comprising a plurality of energy storage cells; and
based on one or more of the external conditions, performing one or more actions associated with safety of the one or more energy storage devices to avoid a damage, an imminent damage, or a risk/probability of future damage with respect to the one or more energy storage devices.

14. The method of any one of claim 11 to claim 13, further comprising:

(a) receiving an indication that a used device of the plurality of energy storage devices is in need of replacement;
(b) adjusting devices of the plurality of energy storage devices, other than the used device, to an adjusted state of charge (SOC) that is within ± 10% of an actual or anticipated SOC of a replacement device; and
(c) electrically connecting the replacement device.

15. A system comprising:

a plurality of energy storage devices;
a communications interface configured to receive, from a server, an operational plan for the plurality of energy devices, wherein the operational plan comprises one or more or of:
one or more constraints; and one or more instructions, for controlling one or more of the energy devices;
a sensor configured to measure a voltage level at a connection point with a grid; and
a controller, coupled to the communications interface and to the sensor, and configured to:
control the plurality of energy devices based on the operational plan; and
control the plurality of energy devices based on the voltage level at the connection point with the grid and a threshold to alter a power consumption of the plurality of energy devices;
wherein the sensor is further configured to monitor external conditions with respect to the plurality of energy devices, wherein the plurality of energy devices each comprise a plurality of energy storage cells, and the controller is further configured to:

receive, from the sensor, signals associated with the external conditions; and
based on one or more of the external conditions, instruct one or more actions associated with safety of the one or more energy devices to avoid a damage, an imminent damage, or a risk/probability of future damage with respect to the one or more energy devices.

Fig. 1A

Fig. 1B

Fig. 1C

Fig. 2A

Fig. 2C

Fig. 2B

55

TRAIN A PREDICTION MODEL USING PAST ELECTRICAL PARAMETERS TRAINING DATA, PAST TRAINING DATA RELATING TO POWER PRODUCTION, AND TARGET PARAMETERS OF EACH SITE OF A PLURALITY OF SITES

300

GENERATE, FOR A PREDICTION TIME-PERIOD, USING THE PREDICTION MODEL, A VOLTAGE LEVEL PREDICTION CORRESPONDING TO A VOLTAGE LEVEL AT A GRID CONNECTION POINT OF A SITE OF THE PLURALITY OF SITES, BASED ON PREDICTIVE DATA RELATING TO POWER PRODUCTION AT THE PLURALITY OF SITES, PAST ELECTRICAL PARAMETERS DATA AT THE PLURALITY OF SITES, AND PAST DATA RELATING TO POWER PRODUCTION AT THE PLURALITY OF SITES

302

DETERMINE FOR A SITE, FOR THE PREDICTION TIME-PERIOD, USING THE GENERATED PREDICTION OF THE VOLTAGE LEVEL AT THE GRID CONNECTION POINT OF THE SITE, AN OPERATIONAL PLAN FOR AT LEAST ONE DEVICE IN THE SITE

304

CONTROL THE AT LEAST ONE DEVICE BASED ON THE DETERMINED OPERATIONAL PLAN FOR THE SITE

306

MEASURE A VOLTAGE LEVEL AT THE GRID CONNECTION POINT

308

VOLTAGE LEVEL > THRESHOLD?  NO

310

YES

CONTROL THE AT LEAST ONE DEVICE TO DRAW POWER

312

Fig. 3

201-13

201-12

201-4

201-5

201-11

201-3

$d1 < d \leq d2 \Rightarrow 0 < w(d) < 1$

201-2

$d \leq d1 \Rightarrow w(d) = 1$

201-1

201-6

201-7

201-10

201-8

201-9

400

Fig. 4A

|  | 1 | 2 | 3 | 4 | 5 | 6 | 7 | 8 | 9 | 10 | 11 | 12 | 13 |
|---|---|---|---|---|---|---|---|---|---|---|---|---|---|
| 1 | 1 | 1 | 1 | 0 | $w_{1\text{-}5}$ | $w_{1\text{-}6}$ | 1 | 0 | 0 | 0 | 0 | 0 | 0 |
| 2 | 1 | 1 | $w_{2\text{-}3}$ | 0 | 0 | 0 | 1 | $w_{2\text{-}8}$ | 1 | $w_{2\text{-}10}$ | 0 | 0 | 0 |
| 3 | 1 | $w_{2\text{-}3}$ | 1 | $w_{3\text{-}4}$ | 0 | 0 | 0 | 0 | 0 | $w_{3\text{-}10}$ | 1 | 0 | 0 |
| 4 | 0 | 0 | $w_{3\text{-}4}$ | 1 | 1 | 0 | 0 | 0 | 0 | 0 | $w_{4\text{-}11}$ | 0 | $w_{4\text{-}13}$ |
| 5 | $w_{1\text{-}5}$ | 0 | 0 | 1 | 1 | $w_{5\text{-}6}$ | 0 | 0 | 0 | 0 | 0 | 0 | 0 |
| 6 | $w_{1\text{-}6}$ | 0 | 0 | 0 | $w_{5\text{-}6}$ | 1 | 1 | 0 | 0 | 0 | 0 | 0 | 0 |
| 7 | 1 | 1 | 0 | 0 | 0 | 1 | 1 | 1 | 0 | 0 | 0 | 0 | 0 |
| 8 | 0 | 0 | $w_{2\text{-}8}$ | 0 | 0 | 0 | 1 | 1 | $w_{8\text{-}9}$ | 0 | 0 | 0 | 0 |
| 9 | 0 | 1 | 0 | 0 | 0 | 0 | 0 | $w_{8\text{-}9}$ | 1 | 1 | 0 | 0 | 0 |
| 10 | 0 | $w_{2\text{-}10}$ | $w_{3\text{-}10}$ | 0 | 0 | 0 | 0 | 0 | 1 | 1 | 1 | 0 | 0 |
| 11 | 0 | 0 | 0 | $w_{4\text{-}11}$ | 0 | 0 | 0 | 0 | 0 | 1 | 1 | 1 | 1 |
| 12 | 0 | 0 | 0 | 0 | 0 | 0 | 0 | 0 | 0 | 0 | 1 | 1 | 0 |
| 13 | 0 | 0 | 0 | $w_{4\text{-}13}$ | 0 | 0 | 0 | 0 | 0 | 0 | 1 | 0 | 1 |

401

## Fig. 4B

Fig. 4C

VOLTAGE PREDICTION FOR NEXT 12HRS. IF EXCEEDS
THRESHOLD, PREPARE 1KW/V OF CONSUMPTION

Fig. 4D

ENERGY STORAGE DEVICE(S)

DECREASE BATTERY SOE — 508

EV PLAN — 510

— 502

LOAD DEVICE(S)

HEAT PUMP PLAN — 512

WATER HEATER PLAN — 514

— 504

USER INSTRUCTIONS

CONNECT THE EV — 516

SWITCH ON DEVICES — 518

— 506

POWER CONVERTER

— 507

500 — PREPARE THE SITE BY DETERMINING A PLAN FOR LOADS AND BATTERY

## Fig. 5A

BATTERY SOE

Fig. 5B

WATER HEATER
POWER

Fig. 5C

EV CHARGER
POWER

Fig. 5D

INVERTER OUTPUT
POWER

Fig. 5E

Fig. 6A

Fig. 6B

TRAINING A GRAPH CONVOLUTION NEURAL NETWORK

Fig. 7

EP 4 654 416 A2

VOLTAGE PREDICTION FOR NEXT 12HRS. IF EXCEEDS THRESHOLD, PREPARE 1KW/V OF CONSUMPTION

Fig. 8A

| TRIGGER | POWER CONVERTER + METER + LOAD DEVICE(S) + ENERGY STORAGE DEVICE(S) |
|---|---|

DECREASE CONSUMPTION OF LOAD DEVICE(S) ⌐ 820

DISCHARGE THE ENERGY STORAGE DEVICE(S) ⌐ 822

⌐ 812

INCREASE EXPORT ⌐ 824

818

VOLTAGE REDUCES BELOW THRESHOLD

INCREASE POWER CONVERTER POWER

825

POWER CONVERTER + METER

ALERT SYSTEM

INCREASE EXPORT

⌐ 814

826

INCREASE POWER CONVERTER POWER

810

827

POWER CONVERTER ONLY

INCREASE POWER CONVERTER POWER ⌐ 816

828

## Fig. 8B

*FIG. 9*

FIG. 10

FIG. 11

**1410**

Switching and Protection | Input/Output Connections | Comms

Battery Module

Battery Module

*FIG. 12A*

**1410**

1415 →

Switching and Protection | Input/Output Connections | Comms

Battery Module

Battery Module

*FIG. 12B*

EP 4 654 416 A2

**FIG. 13**

*FIG. 14A*

*FIG. 14B*

EP 4 654 416 A2

1605

△ Neighborhood fire detected!

System will activate insulation mechanism in
**60** seconds.

16051

Stop Activation

**FIG. 14C**

1606

⚠ Hurricane warning!

Would you like to discharge the batteries?

16061

Yes, discharge now

16062

No, remind me later

16063

No, not at all

**FIG. 14D**

Start

RECEIVE INPUTS FROM SENSORS ON AND/
OR OUTSIDE ONE OR MORE ENERGY
STORAGE DEVICES
1710

BASED ON THE INPUTS, DETERMINE AND
ANALYZE EXTERNAL CONDITIONS
1720

IS THERE
A HIGH-RISK CONDITION?
1730

No

YES

TAKE ONE OR MORE ACTIONS, BASED ON
THE HIGH-RISK CONDITION
1740

End

*FIG. 15*

Receive inputs from sensors such as smoke sensors, radiation sensors, etc. on or outside a battery pack   810

Based on the inputs, determine if a fire is near the battery pack
820

Is there a fire nearby?
830

No

YES

Send notification signals
840

Take mitigation actions such as discharging the battery pack, releasing blocking materials, etc.   850

*FIG. 16*

Receive inputs from sensors such as proximity sensors, cameras, etc. on or outside a battery pack    910

Based on the inputs, determine if a moving vehicle is near the battery pack 920

Is the vehicle a threat? 930 — No

YES

Is it a known vehicle? 940

Yes

No

Send one or more signals to the vehicle instructing the vehicle to brake (and send notification signals) 950

Send notification signals 960

*FIG. 17*

FIG. 18A

FIG. 18C

FIG. 18B

2100

2130

REAR

2101

2115a 2115b

# FIG. 18D

**FIG. 18E**

**FIG. 18F**

**FIG. 19A**

**FIG. 19B**

**FIG. 19C**

**FIG. 19D**

2300

2330

2321

2301

2320

2311

2313

2310

2315

2318

2317

# FIG. 20A

2300

2330

2310

# FIG. 20B

**FIG. 20C**

*FIG. 20E*

*FIG. 20D*

2330

23300

23300a

# FIG. 20F

FIG. 21B

FIG. 21A

**FIG. 21C**

FIG. 21E

2440

2447

2445

FIG. 21D

2440

2441

2443

2447

2445

*FIG. 21G*

*FIG. 21F*

SECTION D-D

**FIG. 21H**

**FIG. 21I**

**FIG. 21J**

FIG. 21L

FIG. 21K

Start

IDENTIFY (E.G., RECEIVE) USED DEVICE ID 2510

REDUCE SOC IN THE USED DEVICE 2520

SET SOC IN REMAINING DEVICES TO AN ANTICIPATED SOC 2530

CONNECT REPLACEMENT/ NEW DEVICE 2540

BALANCE DEVICES 2550

OPERATE DEVICES 2560

End

*FIG. 22*

**EP 4 654 416 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63649740
- US 63671321
- US 63649817